# EUROPEAN PATENT APPLICATION

(11) **EP 4 344 307 A1**
(43) Date of publication of application: **27.03.2024**
(21) Application number: 22827546.7
(22) Date of filing: 21.06.2022
(51) Int. Cl.: H04W 48/16, H04W 4/12

(54) **METHOD AND APPARATUS FOR RELOCATING CONTEXT**

(30) Priority: 25.06.2021 CN 202110714098; 28.08.2021 CN 202110999308
(71) Applicant: Huawei Technologies Co., Ltd., Longgang Shenzhen, Guangdong 518129 (CN)
(72) Inventor: GE, Cuili, Shenzhen, Guangdong 518129 (CN); HU, Yajie, Shenzhen, Guangdong 518129 (CN); YANG, Yanmei, Shenzhen, Guangdong 518129 (CN)
(74) Representative: Pfenning, Meinig & Partner mbB
(86) International application number: PCT/CN2022/100019
(87) International publication number: WO 2022/268053

(57) **Abstract**

This application provides a context relocation method and apparatus. The context relocation method includes: obtaining application context relocation ACR mode information, where the ACR mode information is used to determine an ACR method selected by at least one application; and executing an ACR procedure for a first application in the at least one application based on the ACR mode information. According to the context relocation method, the ACR procedure is executed based on the ACR mode information, to avoid repeated triggering of the ACR procedure while reducing signaling overheads.

## Description

This application claims priority to Chinese Patent Application No. 202110714098.7, filed with the China National Intellectual Property Administration on June 25, 2021 and entitled "CONTEXT RELOCATION METHOD AND APPARATUS", and claims priority to Chinese Patent Application No. 202110999308.1, filed with the China National Intellectual Property Administration on August 28, 2021 and entitled "CONTEXT RELOCATION METHOD AND APPARATUS", both of which are incorporated herein by reference in their entireties.

### TECHNICAL FIELD

This application relates to the field of communication technologies, and more specifically, to a context relocation method and apparatus.

### BACKGROUND

A plurality of functional entities in an edge data network may detect and initiate an application context relocation (application context relocation, ACR) procedure. To avoid a case in which a plurality of ACR procedures are executed on a same application caused by initiating the ACR procedure by the plurality of functional entities, a current solution is that an edge enabler server (edge enabler server, EES) provides an in-progress indication (in-progress indication). The indication indicates, to another detection entity, that ACR is currently being executed, to avoid executing application context relocation for a plurality of times.

However, in this solution, the functional entities need to be notified, one by one, that application context is being relocated, and consequently signaling overheads are high. Therefore, how to avoid repeated triggering of the ACR procedure and reduce signaling overheads becomes an urgent problem to be resolved.

### SUMMARY

This application provides a context relocation method and apparatus, so that a functional entity executes an ACR procedure, to avoid repeated triggering of the ACR procedure while reducing signaling overheads.

According to a first aspect, a context relocation method is provided. The context relocation method may be executed by a terminal apparatus, or may be executed by a chip or a circuit disposed in a terminal apparatus. This is not limited in this application.

For example, the terminal apparatus in the first aspect may be an edge enabler client (edge enabler client, EEC), that is, the terminal apparatus in the first aspect may be replaced with an EEC.

The context relocation method includes:
obtaining application context relocation ACR mode information; and determining, based on the ACR mode information, an ACR method selected by at least one application.

According to the context relocation method provided in this embodiment of this application, an ACR procedure can be executed based on the ACR mode information. Whether an ACR procedure of an application is currently being executed does not need to be indicated by indication information, to avoid repeated triggering of an ACR procedure of an application while reducing signaling overheads.

With reference to the first aspect, in some implementations of the first aspect, the ACR mode information includes ACR rule information, and the ACR rule information includes condition information for triggering an ACR procedure of at least one application. When a first condition indicated by the condition information is met, an ACR procedure is executed for a first application in the at least one application. The condition information further indicates at least one of the following conditions: a second condition, a third condition, and a fourth condition. When the second condition is met, an application client AC is indicated to execute an ACR procedure for a second application in the at least one application; when the third condition is met, an edge application server EAS is indicated to execute an ACR procedure for a third application in the at least one application; or when the fourth condition is met, an edge enabler server EES is indicated to execute an ACR procedure for a fourth application in the at least one application.

According to the context relocation method provided in this embodiment of this application, an ACR procedure is executed based on the ACR rule information. Whether the ACR procedure of the first application is currently being executed does not need to be indicated by indication information, to avoid repeated triggering of the ACR procedure of the first application while reducing signaling overheads.

With reference to the first aspect, in some implementations of the first aspect, the obtaining ACR mode information includes: receiving the ACR mode information from the application client AC; receiving the ACR mode information from the edge enabler server EES and/or the edge configuration server ECS; or setting the ACR mode information based on second information, third information, and fourth information.

According to the context relocation method provided in this embodiment of this application, the ACR mode information can be obtained in different manners, to improve flexibility of the solution.

With reference to the first aspect, in some implementations of the first aspect, after the receiving the ACR mode information from the AC, the method further includes: sending the ACR mode information to the edge enabler server EES.

After the receiving the ACR mode information from the EES and/or the ECS, the method further includes: sending the ACR mode information to the AC.

After the setting the ACR mode information based on second information, third information, and fourth information, the method further includes:
receiving the second information from the EAS, where the second information includes ACR capability information supported by the EAS and/or second ACR method request information, the ACR capability information supported by the EAS indicates a capability of the EAS, and the second ACR method request information is used to request to allocate an ACR method to the EAS;
receiving the third information from the AC, where the third information includes ACR capability information supported by the AC and/or third ACR method request information, the ACR capability information supported by the AC indicates a capability of the AC, and the third ACR method request information is used to request to allocate an ACR method to the AC;
receiving the fourth information from the EES, where the fourth information includes ACR capability information supported by the EES and/or fourth ACR method request information, the ACR capability information supported by the EES indicates a capability of the EES, and the fourth ACR method request information is used to request to allocate an ACR method to the EES; and
sending the ACR mode information to the AC, the EES, or the ECS.

According to the context relocation method provided in this embodiment of this application, the ACR mode information can be sent to another functional entity requiring the ACR mode information, so that the another functional entity can execute an ACR procedure based on the ACR mode information. Whether an ACR procedure of an application is currently being executed does not need to be indicated by indication information, to avoid repeated triggering of an ACR procedure while reducing signaling overheads.

With reference to the first aspect, in some implementations of the first aspect, the ACR rule information includes: a correspondence between an application type and an apparatus for executing an ACR procedure of an application belonging to the application type, and/or a correspondence between information about an event that triggers an ACR procedure and an apparatus for executing the preset ACR procedure.

The ACR rule information may specifically be an event or an application type for allocating required detection to each functional entity (for example, an AC, an EAS, an EES, or an EEC) and executing ACR for an ACR event (for example, UE mobility and an overloaded EAS) or an application type. In other words, the ACR rule information can specify different ACR triggering rules, to improve flexibility of the solution.

With reference to the first aspect, in some implementations of the first aspect, the ACR mode information indicates an identifier of an application client and an ACR method determined by a server for the application client, and the server is one of an edge enabler client EEC, an edge configuration server ECS, an edge enabler server EES, or an edge application server EAS. The ACR mode information may specifically be the identifier of the application client and the ACR method selected by the server, and different ACR methods may be specified for different applications.

With reference to the first aspect, in some implementations of the first aspect, before the obtaining ACR mode information, the method further includes: sending first information to the edge enabler server EES or the edge configuration server ECS, where the first information indicates at least one of the following: ACR capability information supported by the application client AC, ACR capability information supported by the edge enabler client EEC, requesting to allocate an ACR method to the AC, and requesting to allocate an ACR method to the EEC. With reference to the first aspect, in some implementations of the first aspect, the method further includes: receiving, from the AC, the ACR capability information supported by the AC and/or the third ACR method request information, where the first information further includes the ACR capability information supported by the AC and/or the third ACR method request information, the ACR capability information supported by the AC indicates the capability of the AC, and the third ACR method request information is used to request to allocate the ACR method to the AC.

According to a second aspect, a context relocation method is provided. The context relocation method may be executed by an EES, or may be executed by a chip or a circuit disposed in an EES. This is not limited in this application.

The context relocation method includes:
The edge enabler server EES obtains application context relocation ACR mode information, where the ACR mode information is used to determine an ACR method selected by at least one application; and sends the ACR mode information to an edge application server EAS.

According to the context relocation method provided in this embodiment of this application, the EES executes an ACR procedure based on the ACR mode information. Whether an ACR procedure of an application is currently being executed does not need to be indicated by indication information to the EES, to avoid repeated triggering of an ACR procedure of an application while reducing signaling overheads.

With reference to the second aspect, in some implementations of the second aspect, the method further includes: The EES sends the ACR mode information to an edge enabler client EEC.

With reference to the second aspect, in some implementations of the second aspect, the ACR mode information includes ACR rule information, and the ACR rule information includes condition information for triggering an ACR procedure of at least one application. When a fourth condition indicated by the condition information is met, the EES executes an ACR procedure for a fourth application in the at least one application.

According to the context relocation method provided in this embodiment of this application, the EES executes an ACR procedure based on the ACR rule information. Whether the ACR procedure of the fourth application is currently being executed does not need to be indicated by indication information to the EES, to avoid repeated triggering of the ACR procedure of the fourth application while reducing signaling overheads.

With reference to the second aspect, in some implementations of the second aspect, that the EES obtains ACR mode information includes: The EES obtains the ACR mode information based on at least one of the following information: ACR capability information supported by the edge application server EAS, ACR capability information supported by the EEC, ACR capability information supported by an application client AC, and ACR capability information supported by the EES; the EES obtains the ACR mode information from a profile of the EES, where the profile of the EES includes the ACR mode information; or the EES receives the ACR mode information from the ECS. The ACR capability information supported by the EAS indicates a third condition corresponding to an ACR procedure supported by the EAS, the ACR capability information supported by the edge enabler client EEC indicates a first condition corresponding to an ACR procedure supported by the edge enabler client EEC, the ACR capability information supported by the AC indicates a second condition corresponding to an ACR procedure supported by the AC, and the ACR capability information supported by the EES indicates the fourth condition corresponding to an ACR procedure supported by the EES. The condition information further indicates at least one of the following conditions: the second condition, the third condition, and the first condition. When the second condition is met, the AC is indicated to execute an ACR procedure for a second application in the at least one application; when the third condition is met, the EAS is indicated to execute an ACR procedure for a third application in the at least one application; or when the first condition is met, the EEC is indicated to execute an ACR procedure for a first application in the at least one application.

With reference to the second aspect, in some implementations of the second aspect, the ACR mode information indicates an identifier of an application client and an ACR method determined by a server for the application client, and the server is one of an edge enabler client EEC, an edge configuration server ECS, an edge enabler server EES, or an edge application server EAS. With reference to the second aspect, in some implementations of the second aspect, that the EES obtains ACR mode information includes: The EES sets the ACR mode information based on second information and first information. The second information includes the ACR capability information supported by the EAS and/or second ACR method request information. The first information includes at least one of the ACR capability information supported by the AC, the ACR capability information supported by the EEC, first ACR method request information, or third ACR method request information. The ACR capability information supported by the EAS indicates a capability of the EAS, and the second ACR method request information is used to request to allocate an ACR method to the EAS. The ACR capability information supported by the AC indicates a capability of the AC, and the third ACR method request information is used to request to allocate an ACR method to the AC. The ACR capability information supported by the EEC indicates a capability of the EEC, and the first ACR method request information is used to request to allocate an ACR method to the EEC.

With reference to the second aspect, in some implementations of the second aspect, the method further includes: The EES receives the second information from the EAS; and receives the first information from the EEC.

With reference to the second aspect, in some implementations of the second aspect, the method further includes: The EES sends the ACR mode information to the EAS or the EEC.

With reference to the second aspect, in some implementations of the second aspect, the method further includes: The EES sends fifth information to the ECS. The fifth information includes at least one of the ACR capability information supported by the EES, the ACR capability information supported by the EAS, fourth ACR method request information, or the second ACR method request information. The ACR capability information supported by the EES indicates a capability of the EES, and the fourth ACR method request information is used to request to allocate an ACR method to the EES. The ACR capability information supported by the EAS indicates the capability of the EAS, and the second ACR method request information is used to request to allocate the ACR method to the EAS.

With reference to the second aspect, in some implementations of the second aspect, the method further includes: The EES sends fourth information to the EEC. The fourth information includes the ACR capability information supported by the EES and/or the fourth ACR method request information. The ACR capability information supported by the EES indicates the capability of the EES, and the fourth ACR method request information is used to request to allocate the ACR method to the EES.

With reference to the second aspect, in some implementations of the second aspect, that the EES obtains ACR mode information includes: The EES receives the ACR mode information from the edge application server EAS and/or the EEC.

According to the context relocation method provided in this embodiment of this application, the EES can obtain the ACR mode information in different manners, to improve flexibility of the solution.

With reference to the second aspect, in some implementations of the second aspect, the method further includes: The EES sends the ACR mode information to the EAS and/or the EEC.

According to the context relocation method provided in this embodiment of this application, the EEC can send the ACR mode information to another functional entity requiring the ACR mode information, so that the another functional entity can execute an ACR procedure based on the ACR mode information. Whether an ACR procedure of an application is currently being executed does not need to be indicated by indication information, to avoid repeated triggering of an ACR procedure while reducing signaling overheads.

With reference to the second aspect, in some implementations of the second aspect, the ACR rule information includes: a correspondence between an application type and an apparatus for executing an ACR procedure of an application belonging to the application type, and/or a correspondence between information about an event that triggers an ACR procedure and an apparatus for executing the preset ACR procedure.

The ACR rule information may specifically be an event or an application type for allocating required detection to each functional entity (for example, an AC, an EAS, an EES, or an EEC) and executing ACR for an ACR event (for example, UE mobility and an overloaded EAS) or an application type, or specifying different ACR methods for different applications. In other words, the ACR rule information can specify different ACR triggering rules, to improve flexibility of the solution.

With reference to the second aspect, in some implementations of the second aspect, the ACR mode information includes identification information of at least one application and an ACR method selected by the server, and the server is one of an edge configuration server ECS, an edge enabler server EES, or an edge application server EAS.

The ACR mode information may specifically be the identification information of the application and the ACR method selected by the server, and different ACR methods may be specified for different applications.

According to a third aspect, a context relocation method is provided. The context relocation method may be executed by an application client (application client(s), AC), or may be executed by a chip or a circuit disposed in an AC. This is not limited in this application.

The context relocation method includes:
The application client AC obtains application context relocation ACR mode information; and determines, based on the ACR mode information, an ACR method selected by at least one application.

According to the context relocation method provided in this embodiment of this application, the AC executes an ACR procedure based on the ACR mode information. Whether an ACR procedure of an application is currently being executed does not need to be indicated by indication information to the AC, to avoid repeated triggering of an ACR procedure of an application while reducing signaling overheads.

With reference to the third aspect, in some implementations of the third aspect, the ACR mode information includes ACR rule information, and the ACR rule information includes condition information for triggering an ACR procedure of at least one application. When a second condition indicated by the condition information is met, the AC executes an ACR procedure for a second application in the at least one application.

According to the context relocation method provided in this embodiment of this application, the AC executes an ACR procedure based on the ACR rule information. Whether the ACR procedure of the second application is currently being executed does not need to be indicated by indication information to the AC, to avoid repeated triggering of the ACR procedure of the second application while reducing signaling overheads.

With reference to the third aspect, in some implementations of the third aspect, that the AC obtains ACR mode information includes: The AC obtains the ACR mode information from a profile of the AC, where the profile of the AC includes the ACR mode information; or the AC receives the ACR mode information from an edge enabler client EEC. The condition information further indicates at least one of the following conditions: a first condition, a third condition, and a fourth condition. When the first condition is met, the EEC is indicated to execute an ACR procedure for a first application in the at least one application; when the third condition is met, an edge application server EAS is indicated to execute an ACR procedure for a third application in the at least one application; or when the fourth condition is met, an edge enabler server EES is indicated to execute an ACR procedure for a fourth application in the at least one application.

According to the context relocation method provided in this embodiment of this application, the AC can obtain the ACR mode information in different manners, to improve flexibility of the solution.

With reference to the third aspect, in some implementations of the third aspect, when the AC obtains the ACR mode information from the profile of the AC, the method further includes: The AC sends the ACR mode information to the EEC.

According to the context relocation method provided in this embodiment of this application, the AC can send the ACR mode information to another functional entity requiring the ACR mode information, so that the another functional entity can execute an ACR procedure based on the ACR mode information. Whether an ACR procedure of an application is currently being executed does not need to be indicated by indication information, to avoid repeated triggering of an ACR procedure while reducing signaling overheads.

With reference to the third aspect, in some implementations of the third aspect, the ACR rule information includes: a correspondence between an application type and an apparatus for executing an ACR procedure of an application belonging to the application type, and/or a correspondence between information about an event that triggers an ACR procedure and an apparatus for executing the preset ACR procedure.

The ACR rule information may specifically be an event or an application type for allocating required detection to each functional entity (for example, an AC, an EAS, an EES, or an EEC) and executing ACR for an ACR event (for example, UE mobility and an overloaded EAS) or an application type. In other words, the ACR rule information can specify different ACR triggering rules, to improve flexibility of the solution.

With reference to the third aspect, in some implementations of the third aspect, the ACR mode information indicates an identifier of an application client and an ACR method determined by a server for the application client, and the server is one of an edge enabler client EEC, an edge configuration server ECS, an edge enabler server EES, or an edge application server EAS. The ACR mode information may specifically be the identification information of the application and the ACR method selected by the server, and different ACR methods may be specified for different applications.

With reference to the third aspect, in some implementations of the third aspect, the method further includes: The AC sends third information to the EEC. The third information includes ACR capability information supported by the AC and/or third ACR method request information. The ACR capability information supported by the AC indicates a capability of the AC, and the third ACR method request information is used to request to allocate an ACR method to the AC.

According to a fourth aspect, a context relocation method is provided. The context relocation method may be executed by an edge application server (edge application server, EAS), or may be executed by a chip or a circuit disposed in an EAS. This is not limited in this application.

The context relocation method includes:
The edge application server EAS obtains application context relocation ACR mode information; and determines, based on the ACR mode information, an ACR method selected by at least one application.

According to the context relocation method provided in this embodiment of this application, the EAS executes an ACR procedure based on the ACR mode information. Whether an ACR procedure of an application is currently being executed does not need to be indicated by indication information to the EAS, to avoid repeated triggering of an ACR procedure of an application while reducing signaling overheads.

With reference to the fourth aspect, in some implementations of the fourth aspect, the ACR mode information includes ACR rule information, and the ACR rule information includes condition information for triggering an ACR procedure of at least one application. When a third condition indicated by the condition information is met, the EAS executes an ACR procedure for a third application in the at least one application.

According to the context relocation method provided in this embodiment of this application, the EAS executes an ACR procedure based on the ACR rule information. Whether the ACR procedure of the third application is currently being executed does not need to be indicated by indication information to the EAS, to avoid repeated triggering of the ACR procedure of the third application while reducing signaling overheads.

With reference to the fourth aspect, in some implementations of the fourth aspect, that the EAS obtains ACR mode information includes: The EAS obtains the ACR mode information from a profile of the EAS, where the profile of the EAS includes the ACR mode information; or the EAS receives the ACR mode information from an edge enabler server EES. The condition information further indicates at least one of the following conditions: a second condition, a first condition, and a fourth condition. When the second condition is met, an application client AC is indicated to execute an ACR procedure for a second application in the at least one application; when the first condition is met, an EEC is indicated to execute an ACR procedure for a first application in the at least one application; or when the fourth condition is met, the EES is indicated to execute an ACR procedure for a fourth application in the at least one application.

With reference to the fourth aspect, in some implementations of the fourth aspect, that the EAS obtains ACR mode information includes: The EAS sets the ACR mode information based on first information, third information, and fifth information.

With reference to the fourth aspect, in some implementations of the fourth aspect, the method further includes:
receiving the first information from the EEC, where the first information includes at least one of ACR capability information supported by an AC, ACR capability information supported by the EEC, first ACR method request information, or third ACR method request information, the ACR capability information supported by the AC indicates a capability of the AC, the third ACR method request information is used to request to allocate an ACR method to the AC, the ACR capability information supported by the EEC indicates a capability of the EEC, and the first ACR method request information is used to request to allocate an ACR method to the EEC;
receiving the third information from the AC, where the third information includes the ACR capability information supported by the AC and/or the third ACR method request information, the ACR capability information supported by the AC indicates the capability of the AC, and the third ACR method request information is used to request to allocate an ACR method to the AC;
receiving the fifth information from the EES, where the fifth information includes at least one of ACR capability information supported by the EES, ACR capability information supported by the EAS, fourth ACR method request information, or second ACR method request information, the ACR capability information supported by the EES indicates a capability of the EES, the fourth ACR method request information is used to request to allocate an ACR method to the EES, the ACR capability information supported by the EAS indicates a capability of the EAS, and the second ACR method request information is used to request to allocate an ACR method to the EAS; and
sending the ACR mode information to the AC, the EES, or the EEC.

According to the context relocation method provided in this embodiment of this application, the EAS can obtain the ACR mode information in different manners, to improve flexibility of the solution.

With reference to the fourth aspect, in some implementations of the fourth aspect, when the EAS obtains the ACR mode information from the profile of the EAS, the method further includes: The EAS sends the ACR mode information to the EES.

According to the context relocation method provided in this embodiment of this application, the EAS can send the ACR mode information to another functional entity requiring the ACR mode information, so that the another functional entity can execute an ACR procedure based on the ACR mode information. Whether an ACR procedure of an application is currently being executed does not need to be indicated by indication information, to avoid repeated triggering of an ACR procedure while reducing signaling overheads.

With reference to the fourth aspect, in some implementations of the fourth aspect, the ACR rule information includes: a correspondence between an application type and an apparatus for executing an ACR procedure of an application belonging to the application type, and/or a correspondence between information about an event that triggers an ACR procedure and an apparatus for executing the preset ACR procedure.

The ACR rule information may specifically be an event or an application type for allocating required detection to each functional entity (for example, an AC, an EAS, an EES, or an EEC) and executing ACR for an ACR event (for example, UE mobility and an overloaded EAS) or an application type. In other words, the ACR rule information can specify different ACR triggering rules, to improve flexibility of the solution.

With reference to the fourth aspect, in some implementations of the fourth aspect, the ACR mode information indicates an identifier of an application client and an ACR method determined by a server for the application client, and the server is one of an edge enabler client EEC, an edge configuration server ECS, an edge enabler server EES, or an edge application server EAS. The ACR mode information may specifically be the identification information of the application and the ACR method selected by the server, and different ACR methods may be specified for different applications.

With reference to the fourth aspect, in some implementations of the fourth aspect, the method further includes: The EAS sends second information to the EEC. The second information includes the ACR capability information supported by the EAS and/or the second ACR method request information. The ACR capability information supported by the EAS indicates the capability of the EAS, and the second ACR method request information is used to request to allocate the ACR method to the EAS.

According to a fifth aspect, a context relocation method is provided. The context relocation method may be executed by an ECS, or may be executed by a chip or a circuit disposed in an ECS. This is not limited in this application.

The context relocation method includes:
The edge configuration server ECS obtains application context relocation ACR mode information; and determines, based on the ACR mode information, an ACR method selected by at least one application.

With reference to the fifth aspect, in some implementations of the fifth aspect, the ACR mode information includes ACR rule information, and the ACR rule information includes condition information for triggering an ACR procedure of at least one application. The method further includes: The edge configuration server ECS sets the application context relocation ACR mode information. The condition information indicates at least one of the following conditions: a first condition, a second condition, a third condition, and a fourth condition. When the first condition is met, an EEC is indicated to execute an ACR procedure for a first application in the at least one application; when the second condition is met, an application client AC is indicated to execute an ACR procedure for a second application in the at least one application; when the third condition is met, an edge application server EAS is indicated to execute an ACR procedure for a third application in the at least one application; or when the fourth condition is met, an edge enabler server EES is indicated to execute an ACR procedure for a fourth application in the at least one application. The ECS separately sends the ACR mode information to the EEC and the EES.

According to the context relocation method provided in this embodiment of this application, the ECS can set the ACR mode information and deliver the ACR mode information to a functional entity that can execute an ACR procedure, so that the functional entity can execute an ACR procedure based on the ACR mode information. Whether an ACR procedure of an application is currently being executed does not need to be indicated by indication information, to avoid repeated triggering of the ACR procedure of the application while reducing signaling overheads.

With reference to the fifth aspect, in some implementations of the fifth aspect, that the ECS obtains ACR mode information includes: The ECS sets the ACR mode information based on first information, second information, and fifth information.

With reference to the fifth aspect, in some implementations of the fifth aspect, the method further includes:
The ECS receives the first information from the EEC, where the first information includes at least one of ACR capability information supported by the AC, ACR capability information supported by the EEC, first ACR method request information, or third ACR method request information, the ACR capability information supported by the AC indicates a capability of the AC, the third ACR method request information is used to request to allocate an ACR method to the AC, the ACR capability information supported by the EEC indicates a capability of the EEC, and the first ACR method request information is used to request to allocate an ACR method to the EEC;
receives the second information from the EAS, where the second information includes ACR capability information supported by the EAS and/or second ACR method request information, the ACR capability information supported by the EAS indicates a capability of the EAS, and the second ACR method request information is used to request to allocate an ACR method to the EAS;
receives the fifth information from the EES, where the fifth information includes at least one of ACR capability information supported by the EES, the ACR capability information supported by the EAS, fourth ACR method request information, or second ACR method request information, the ACR capability information supported by the EES indicates a capability of the EES, the fourth ACR method request information is used to request to allocate an ACR method to the EES, the ACR capability information supported by the EAS indicates the capability of the EAS, and the second ACR method request information is used to request to allocate an ACR method to the EAS; and
sends the ACR mode information to the EAS, the EES, or the EEC.

According to a sixth aspect, a context relocation apparatus is provided. The context relocation apparatus includes a processor, configured to implement a function of a terminal apparatus (or the EEC) in the method described in the first aspect.

In a possible implementation, the context relocation apparatus may further include a memory. The memory is coupled to the processor, and the processor is configured to implement the function of the terminal apparatus in the method described in the first aspect.

In a possible implementation, the memory is configured to store program instructions and data. The memory is coupled to the processor. The processor may invoke and execute the program instructions stored in the memory, to implement the function of the terminal apparatus in the method described in the first aspect.

In a possible implementation, the context relocation apparatus may further include a communication interface. The communication interface is used by the context relocation apparatus to communicate with another device. The communication interface may be a transceiver, an input/output interface, a circuit, or the like.

In a possible design, the context relocation apparatus includes a processor and a communication interface.

The processor communicates with the outside through the communication interface.

The processor is configured to run a computer program, so that the context relocation apparatus implements any method described in the first aspect.

It may be understood that the external device may be an object other than the processor or an object other than the apparatus.

In another possible design, the context relocation apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

According to a seventh aspect, a context relocation apparatus is provided. The context relocation apparatus includes a processor, configured to implement a function of the AC in the method described in the third aspect.

In a possible implementation, the context relocation apparatus may further include a memory. The memory is coupled to the processor, and the processor is configured to implement the function of the AC in the method described in the third aspect.

In a possible implementation, the memory is configured to store program instructions and data. The memory is coupled to the processor. The processor may invoke and execute the program instructions stored in the memory, to implement the function of the AC in the method described in the third aspect.

In a possible implementation, the context relocation apparatus may further include a communication interface. The communication interface is used by the context relocation apparatus to communicate with another device. The communication interface may be a transceiver, an input/output interface, a circuit, or the like.

In a possible design, the context relocation apparatus includes a processor and a communication interface.

The processor communicates with the outside through the communication interface.

The processor is configured to run a computer program, so that the context relocation apparatus implements any method described in the third aspect.

It may be understood that the external device may be an object other than the processor or an object other than the apparatus.

In another possible design, the context relocation apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

According to an eighth aspect, a context relocation apparatus is provided. The context relocation apparatus includes a processor, configured to implement a function of the EAS in the method described in the fourth aspect.

In a possible implementation, the context relocation apparatus may further include a memory. The memory is coupled to the processor, and the processor is configured to implement the function of the EAS in the method described in the fourth aspect.

In a possible implementation, the memory is configured to store program instructions and data. The memory is coupled to the processor. The processor may invoke and execute the program instructions stored in the memory, to implement the function of the EAS in the method described in the fourth aspect.

In a possible implementation, the context relocation apparatus may further include a communication interface. The communication interface is used by the context relocation apparatus to communicate with another device. The communication interface may be a transceiver, an input/output interface, a circuit, or the like.

In a possible design, the context relocation apparatus includes a processor and a communication interface.

The processor communicates with the outside through the communication interface.

The processor is configured to run a computer program, so that the context relocation apparatus implements any method described in the fourth aspect.

It may be understood that the external device may be an object other than the processor or an object other than the apparatus.

In another possible design, the context relocation apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

According to a ninth aspect, a context relocation apparatus is provided. The context relocation apparatus includes a processor, configured to implement a function of the ECS in the method described in the fifth aspect.

In a possible implementation, the context relocation apparatus may further include a memory. The memory is coupled to the processor, and the processor is configured to implement the function of the ECS in the method described in the fifth aspect.

In a possible implementation, the memory is configured to store program instructions and data. The memory is coupled to the processor. The processor may invoke and execute the program instructions stored in the memory, to implement the function of the ECS in the method described in the fifth aspect.

In a possible implementation, the context relocation apparatus may further include a communication interface. The communication interface is used by the context relocation apparatus to communicate with another device. The communication interface may be a transceiver, an input/output interface, a circuit, or the like.

In a possible design, the context relocation apparatus includes a processor and a communication interface.

The processor communicates with the outside through the communication interface.

The processor is configured to run a computer program, so that the context relocation apparatus implements any method described in the fifth aspect.

It may be understood that the external device may be an object other than the processor or an object other than the apparatus.

In another possible design, the context relocation apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

According to a tenth aspect, this application further provides a computer-readable storage medium. The computer-readable storage medium stores instructions, and when the instructions are run on a computer, the computer is enabled to perform the methods in the foregoing aspects.

According to an eleventh aspect, this application provides a computer program product including instructions. When the computer program product is run on a computer, the computer is enabled to perform the methods in the foregoing aspects.

According to a twelfth aspect, a communication system is provided, and includes the context relocation apparatus in the sixth aspect to the context relocation apparatus in the tenth aspect.

According to a thirteenth aspect, user equipment is provided, and includes the context relocation apparatus in the sixth aspect and the context relocation apparatus in the eighth aspect.

According to a fourteenth aspect, a chip or a chip system is provided. The chip or the chip system includes at least one processor and a communication interface, the communication interface is interconnected to the at least one processor through a line, and the at least one processor is configured to run a computer program or instructions, to perform the method in any possible implementation in the first aspect to the fifth aspect. The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

### BRIEF DESCRIPTION OF DRAWINGS

FIG. 1 is a schematic diagram of a system architecture to which an embodiment of this application is applicable;
FIG. 2 is an implementation of application context relocation;
(a) in FIG. 3 is a schematic diagram of a service provisioning procedure; (b) in FIG. 3 is a schematic diagram of an EEC registration procedure; and (c) in FIG. 3 is a schematic diagram of an EAS registration procedure;
(a) in FIG. 4 is a schematic diagram of a regular EAS discovery procedure; (b) in FIG. 4 is a schematic diagram of an AC information subscription procedure; and (c) in FIG. 4 is a schematic diagram of an AC information notification procedure;
FIG. 5 is another implementation of application context relocation;
FIG. 6 is another implementation of application context relocation;
FIG. 7 is another implementation of application context relocation;
FIG. 8 is another implementation of application context relocation;
FIG. 9 is another implementation of application context relocation;
FIG. 10 is a schematic flowchart of a context relocation method according to this application;
FIG. 11(a) is a schematic flowchart of another context relocation method according to this application; and FIG. 11(b) is a schematic flowchart of still another context relocation method according to this application;
FIG. 12A and FIG. 12B are a schematic flowchart of still another context relocation method according to this application;
FIG. 13 is a schematic flowchart of another context relocation method according to this application;
FIG. 14 is a schematic diagram of a context relocation apparatus 1400 according to this application;
FIG. 15 is a schematic diagram of a structure of an EEC 1500 applicable to an embodiment of this application;
FIG. 16 is a schematic diagram of a context relocation apparatus 1600 according to this application;
FIG. 17 is a schematic diagram of a structure of an EES 1700 applicable to an embodiment of this application;
FIG. 18 is a schematic diagram of a context relocation apparatus 1800 according to this application;
FIG. 19 is a schematic diagram of a structure of an AC 1900 applicable to an embodiment of this application;
FIG. 20 is a schematic diagram of a context relocation apparatus 2000 according to this application;
FIG. 21 is a schematic diagram of a structure of an EAS 2100 applicable to an embodiment of this application;
FIG. 22 is a schematic diagram of a context relocation apparatus 2200 according to this application; and
FIG. 23 is a schematic diagram of a structure of an ECS 2300 applicable to an embodiment of this application.

### DESCRIPTION OF EMBODIMENTS

The following describes technical solutions of this application with reference to the accompanying drawings.

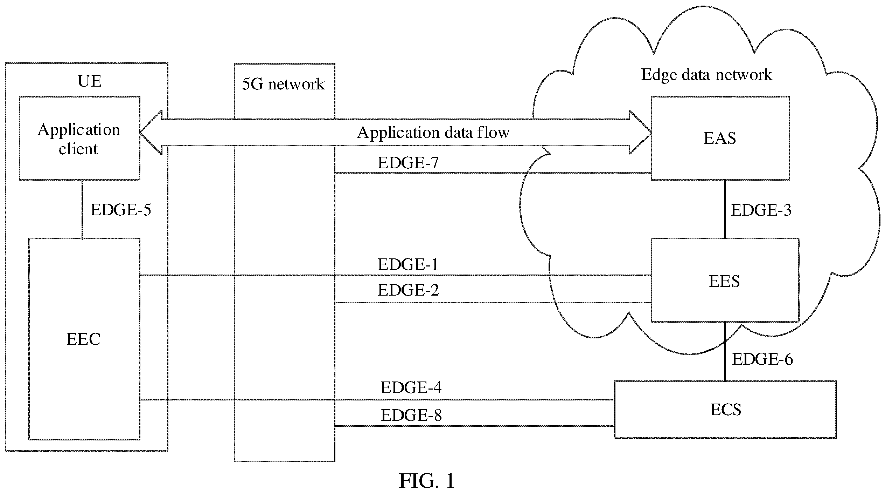

FIG. 1 is a schematic diagram of a system architecture to which an embodiment of this application is applicable. The following separately describes parts related to a network architecture shown in FIG. 1.

### 1. Edge data network (edge data network, EDN)

As a general understanding, the EDN corresponds to only one data network, is a special local data network (local DN), includes an edge enabler function, and can use a data network access identifier (DN Access Identifier, DNAI) and a DNN identifier. The EDN is a logic concept of a network.

As another understanding of the EDN, the EDN is an equivalent concept of a central cloud. The EDN can be understood as a local data center (geographical location concept), can be identified by the DNAI, and may include a plurality of local data networks (local DN).

The EDN includes an edge enabler server (edge enabler server, EES) and a plurality of edge application servers (edge application server, EAS).

The EES may be a control network element or a management network element in a mobile edge computing (mobile edge computing, MEC) node (MEC may also be referred to as multi-access edge computing (multi-access edge computing)), and is responsible for managing each EAS deployed in the EDN (or understood as providing a service for each EAS deployed in the EDN), for example, basic functions such as registration, content parsing and routing selection of a domain name system (domain name system, DNS), upper-layer application registration and management, and wireless information interaction. In addition, the EES may invoke a capability exposure function network element in a 3GPP network. It should be understood that the EES network element may be integrated with another network element, or may be an independent network element. A deployment status of the EES network element in the network architecture is not limited in this application. Usually, an EAS is registered with an EES, or information about an EAS is configured on an EES by using a management system. The EES is referred to as an EES associated with the EAS. The EES controls/manages the EAS registered with/configured on the EES.

The EAS may be an application deployed in the edge data network, and is referred to as an application instance. The application instance is specifically an instance (instance) of a server application (for example, social media software, augmented reality (augmented reality, AR), or virtual reality (virtual reality, VR)) deployed and run on the EDN. One or more EASs can be deployed for an application on one or more EDNs. The EASs deployed and running in different EDNs can be considered as different EASs of an application. The EASs can share a domain name, use an anycast IP address, or use different IP addresses. The EAS may also be referred to as an edge application (server), an application instance, an edge application instance, an MEC application (server), an EAS function, or the like.

### 2. Edge data network configuration server

The edge data network configuration server (edge data network configuration server, EDNCS) may be a global management network element, and may be referred to as an edge configuration server (edge configuration server, ECS). For ease of description, in this embodiment of this application, an example in which the edge data network configuration server is an ECS is used for description.

The ECS maintains information, including a service scope, an EES address, and the like of the edge data network, about each EDN. The service scope of the edge data network may be topological address information (for example, a cell ID and a TAI (Trach area ID) or geometric address information (for example, information such as a province, a city, a district, longitude, and latitude)). The service scope may be a set of address information. In an implementation, ECS network elements are deployed in a distributed manner, that is, each ECS may manage edge data networks in different areas. It should be understood that the ECS network element may be integrated with another network element, or may be an independent network element. A deployment status of the ECS network element in the network architecture is not limited in this application.

3. User equipment (user equipment, UE) may include various handheld devices with a wireless communication function, a vehicle-mounted device, a wearable device, a computing device, another processing device connected to a wireless modem, various forms of terminals, a mobile station (mobile station, MS), a terminal (terminal), a soft terminal, or the like. For example, the UE may be a water meter, an electricity meter, or a sensor.

Specifically, in the network architecture shown in FIG. 1, the UE may include an edge enabler client (edge enabler client, EEC) and an application client (application client(s), AC).

The application client is a peer entity of the edge application at a UE side. The application client is used by an application user (user) to obtain an application service from an application server. The application client is a client program of an application at a terminal side. The application client may be connected to an application server on a cloud, to obtain application services, or may be connected to an EAS deployed and running in one or more EDNs, to obtain application services.

An EEC is a peer entity of an EES at the UE side. The EEC is configured to: register information about the EEC and information about an application client with the EES, perform security authentication and authorization, obtain an EAS IP address from the EES, and provide an edge computing enabler capability for the application client. For example, the EEC uses an EAS discovery service to return an EAS IP address to the application client.

The EEC provides necessary support for the application client on the UE. Functions of the EEC include: retrieving EDN information through an EDGE-4, registering the UE with the EES, retrieving an available EAS, EAS availability change, and notifying the EEC of EAS relocation.

The application user signs a service agreement with a provider of an application, to provide a service for the application user. The application user logs in to the application client on the terminal, and performs communication by using a connection between the application client and the EAS. The enabler client is a middleware layer, and is usually located in an operating system or between the application client and an operating system. The application client may obtain an edge enabler service from the enabler client through an application programming interface (application programming interface, API).

For example, the user equipment in embodiments of this application may be an access terminal, a subscriber unit, a subscriber station, a mobile station, a relay station, a remote station, a remote terminal, a mobile device, a user terminal (user terminal), a terminal device (terminal device), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, user equipment in a 5G network, user equipment in a future evolved public land mobile network (public land mobile network, PLMN), user equipment in a future Internet of vehicles, or the like. This is not limited in embodiments of this application.

By way of example and not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the user equipment in embodiments of this application may alternatively be user equipment in an Internet of things (Internet of Things, IoT) system. IoT is an important part of development of future information technologies. A main technical feature of the IoT is to connect an object to a network by using a communication technology, to implement an intelligent network of human-machine interconnection and thing-thing interconnection. In embodiments of this application, an IoT technology may implement massive connections, deep coverage, and terminal power saving by using, for example, a narrow band (narrow band, NB) technology. In addition, in embodiments of this application, the user equipment may further include sensors such as a smart printer, a train detector, and a gas station. Main functions include collecting data (a part of the user equipment), receiving control information and downlink data of an access network device, sending an electromagnetic wave, and transmitting uplink data to the access network device.

### 2. 5th generation (5th Generation, 5G) mobile network

A structure of the 5G network is not limited in this embodiment of this application. For details, refer to descriptions of conventional technologies. The 5G network includes a (radio) access network (radio access network, (R)AN) device and a 5G core (5G core, 5GC) network.

The (R)AN is used to provide a network access function for authorized user equipment in a specific area, and can use transmission tunnels of different quality based on a level of the user equipment, a service requirement, and the like.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), a gNB in a 5G (for example, NR) system, a transmission point (TRP or TP), one antenna panel or a group of antenna panels (including a plurality of antenna panels) of a base station in a 5G system, a network node that forms a gNB or a transmission point, for example, a baseband unit (BBU) or a distributed unit (distributed unit, DU), or the like.

In some deployments, a gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, and implements functions of radio resource control (radio resource control, RRC) and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

The 5GC includes at least the following network elements:
(1) A user plane network element is used for packet routing and forwarding, quality of service (quality of service, QoS) processing of user plane data, and the like.

In the 5G communication system, the user plane network element may be a user plane function (user plane function, UPF) network element. In a future communication system, the user plane network element may still be the UPF network element, or may have another name. This is not limited in this application.

(2) An access management network element is mainly used for mobility management, access management, and the like, and may be used to implement another function, for example, functions such as access authorization/authentication, in a mobility management entity (mobility management entity, MME) other than session management.

In the 5G communication system, the access management network element may be an access and mobility management function (access and mobility management function, AMF) network element. In a future communication system, the access management network element may still be an AMF network element, or may have another name. This is not limited in this application.

(3) A session management network element is mainly configured to: manage a session, allocate and manage an Internet protocol (Internet protocol, IP) address of a terminal device, select a termination point that can manage a user plane function and a policy control and charging function interface, notify downlink data, and the like.

In the 5G communication system, the session management network element may be a session management function (session management function, SMF) network element. In a future communication system, the session management network element may still be the SMF network element, or may have another name. This is not limited in this application.

(4) A policy control network element is configured to: guide a unified policy framework of network behavior, provide policy rule information for a network element (for example, the AMF or SMF network element) or the terminal device, and the like.

In a 4G communication system, the policy control network element may be a policy and charging rules function (policy and charging rules function, PCRF) network element. In the 5G communication system, the policy control network element may be a policy control function (policy control function, PCF) network element. In a future communication system, the policy control network element may still be the PCF network element, or may have another name. This is not limited in this application.

(5) An application network element is configured to: perform application-affected data routing, access a network exposure function network element, interact with a policy framework to perform policy control, and the like.

In the 5G communication system, the application network element may be an application function (application function, AF) network element. In a future communication system, the application network element may still be the AF network element, or may have another name. This is not limited in this application.

(6) A network slice selection network element is configured to select a network slice instance that serves the user equipment.

In the 5G communication system, the network slice selection network element may be a network slice selection function (network slice selection function, NSSF) network element. In a future communication system, the network slice selection function network element may still be the NSSF network element, or may have another name. This is not limited in this application.

(7) An authentication service network element is mainly used for user authentication and the like.

In the 5G communication system, the authentication service network element may be an authentication service function (authentication service function, AUSF) network element. In a future communication system, the authentication service function network element may still be the AUSF network element, or may have another name. This is not limited in this application.

(8) A data management network element is configured to process an identifier of the terminal device, perform access authentication, registration, and mobility management, and the like.

In the 5G communication system, the data management network element may be a unified data management (unified data management, UDM) network element. In the future communication system, the unified data management network element may still be the UDM network element, or may have another name. This is not limited in this application.

It may be understood that the foregoing network elements or functions may be network elements in a hardware device, software functions running on dedicated hardware, or virtualized functions instantiated on a platform (for example, a cloud platform).

It should be noted that in the current standard protocol, for example, the technical specification (technical specification, TS) 23.501 or TS 23.502, the EES network element, the EAS network element, the ECS network element, and the like may be referred to as an application function (application function, AF) network element. Details are not described below.

In the network architecture shown in FIG. 1, an EDGE-8 reference point supports interaction between the edge configuration server and the core network, for example, supporting: (1) accessing a core network function used to retrieve network capability information and an application programming interface (application programming interface, API); and (2) sending a service provisioning notification to the core network (for example, the SMF). An EDGE-1 is an interface between the EES and the EEC, and supports EEC registration/deregistration with the EES, and edge application server discovery in the edge data network.

An EDGE-2 is an interface between the EES and a 3GPP core network, and is used by the EES to obtain a 3GPP network capability.

An EDGE-3 is an interface between the EES and the EAS, and supports EES registration/deregistration with the EAS, including availability information, service scope information, and address information of the EAS; and supports EES in providing 3GPP network capability information (for example, location information) for the EAS.

An EDGE-4 is an interface between the EEC and the ECS, and supports the ECS in providing/pushing configuration information for/to the EEC.

An EDGE-5 is an interface between the AC and the EEC, and supports the AC in obtaining, from the EEC, information about an accessed EAS.

An EDGE-6 is an interface between the ECS and the EES, and supports configuration of EES information on the ECS.

An EDGE-7 is an interface between the EAS and the 5GC, and supports the EAS in obtaining a 5G network capability.

An EDGE-8 is an interface between the ECS and the 5GC, and supports the ECS in obtaining a 5G network capability.

An EDGE-9 is an interface between different EESs across MEC nodes or in a same MEC node, and supports application relocation.

It should be noted that names of the network elements and the communication interfaces between the network elements in FIG. 1 are briefly described by using examples specified in the current protocol. However, embodiments of this application are not limited to being applied only to a currently known communication system. Therefore, a standard name that appears when the current protocol is used as an example for description is a functional description. A specific name of a network element, an interface, signaling, or the like is not limited in this application, and only indicates a function of the network element, the interface, or the signaling, and may be correspondingly extended to another system, for example, a 4G or future communication system.

For ease of understanding of embodiments of this application, several basic concepts in embodiments of this application are briefly described. It should be understood that basic concepts described below are briefly described by using a basic concept specified in the current protocol as an example. However, embodiments of this application are not limited to being applied only to a currently existing system. Therefore, names that appear when an existing system is used as an example for description are all functional descriptions. A specific name is not limited, and only indicates a function, and may be correspondingly extended to another system, for example, a 4G or future communication system.

### 1. MEC

The MEC may use a radio access network to provide a service and a cloud computing function required by a telecommunication IT user nearby, to create a carrier-grade service environment with high performance, a low delay, and high bandwidth. This accelerates fast download of content, services, and applications in a network, so that a consumer enjoys uninterrupted network experience with high-quality.

### 2. Data network

The data network (data network, DN) is a service network of an operator or a third party, and may provide a service (for example, a carrier service or an Internet service) for a terminal.

### 3. Local data network

The local data network (local DN) may be an access point (access point) of a data network that is close to an attachment point (attachment point) of a user.

### 4. Application context (application context)

The application context may be running status information, for example, a game process, ML historical data, and the like, related to one user or a group of users. Optionally, the application context may further include context, for example, a transaction identifier of a subscription, of subscriptions of the one or more users in the EAS and the core network. Optionally, the application context may alternatively include context, for example, transaction identifiers of subscriptions of the one or more users in the EAS, of the one or more users in the EES.

### 5. EEC context (EEC context)

The EEC context may be user-related data stored in the EES.

The EEC context may include EEC-side information and EAS-EES subscription information. The EEC-side information may include EEC registration information and EEC subscription information (for example, an EAS discovery subscription and an EAS dynamic information subscription). The EAS-EES subscription information may include a UE location API, an application context relocation event, an AC information exposure API, a UE identification API, a quality of service (quality of service, QoS) session API, and the like.

### 6. Application context relocation (application context relocation, ACR)

Application context remove may also be referred to as application context relocation. This is not distinguished in this application.

In a running process of an edge application, when the terminal moves outside a current service area, an EAS that currently provides a service may not continue to provide a service for the currently running application, or an EAS that currently provides a service is no longer an optimal EAS that can provide a service for the terminal, and another EAS may be more suitable for the terminal. Therefore, a new EAS may be selected to provide a service for the terminal. However, when a new edge application server replaces an edge application server that currently provides a service, an application service is temporarily suspended or interrupted, and transmission of an application service is affected.

Specifically, application context remove (application context remove, ACR) may be executed based on the network architecture shown in FIG. 1.

For ease of description, an EAS that currently provides a service is referred to as a source EAS (source EAS, S-EAS), and a new EAS is referred to as a target EAS (target EAS, T-EAS) below.

An application context relocation procedure may be divided into the following four phases:

### Phase 1: Detection of application context relocation

In this phase, it may be determined that context relocation needs to be executed. A target event may be detected by a detection entity. The target event may include a terminal location change, a terminal user plane path update, and the like.

### Phase 2: Decision on application context relocation

In this phase, a decision entity determines that context relocation needs to be executed.

### Phase 3: Execution of application context relocation

In this phase, application context is transferred from the source EAS to the target EAS by an execution entity. Further, discovery of the target EAS is included. The terminal may be notified of related information of the target EAS, and the EAS (which may be the source EAS and the target EAS) may be notified to initiate application context transmission, and the EES or the EAS performs application function (application function, AF) traffic influence (AF traffic influence) and carries N6 routing information of the T-EAS.

### Phase 4: Clean-up after application context relocation

In this phase, a plurality of entities are involved. The EAS notifies the EEC of an application context transmission result by using the EES, and the AC initiates a new socket to connect to the target EAS.

It should be noted that the foregoing entities may be a same entity, or may be different entities. This is not limited.

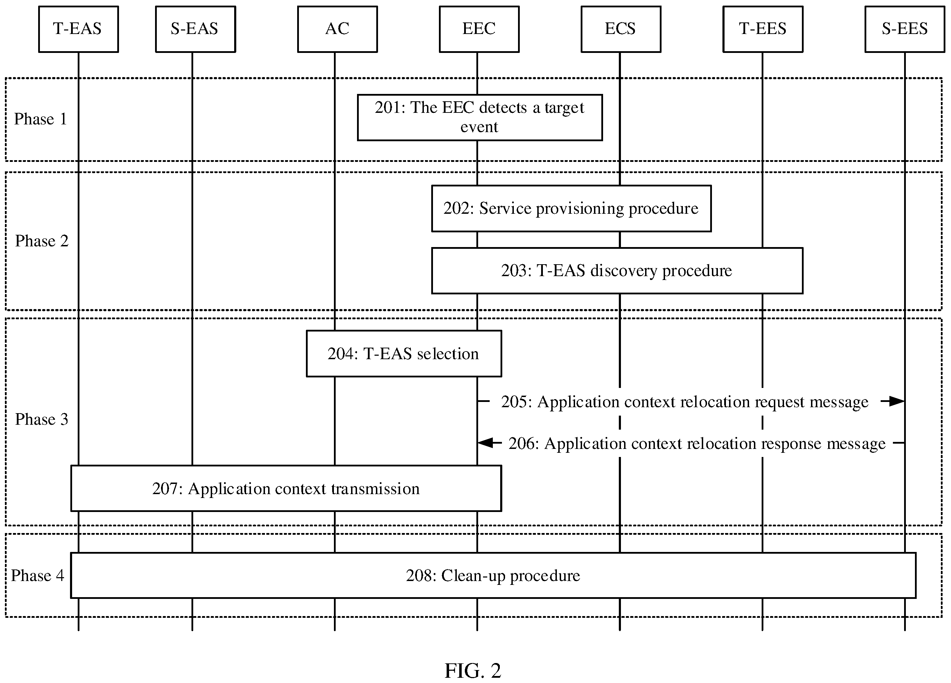

The following describes several implementations of application context relocation with reference to FIG. 2 to FIG. 9.

FIG. 2 is an implementation of application context relocation.

In this implementation, an EEC initiates ACR and uses a regular EAS discovery procedure.

The implementation includes step 201 to step 208 in the following:
Step 201: The EEC detects a target event, and determines to trigger application context relocation.

The target event may include a UE location change, a UE user plane path update, and the like.

For example, the EEC detects a UE location update (UE location update). This step may alternatively be triggered by an AC by invoking an ACR-related API provided by the EEC. Alternatively, an AC detects that a location of UE changes, and provides a new location for the EEC, so that the EEC learns that the location of the UE changes.

Step 202: The EEC performs a service provisioning (service provisioning) procedure, to discover a T-EES.

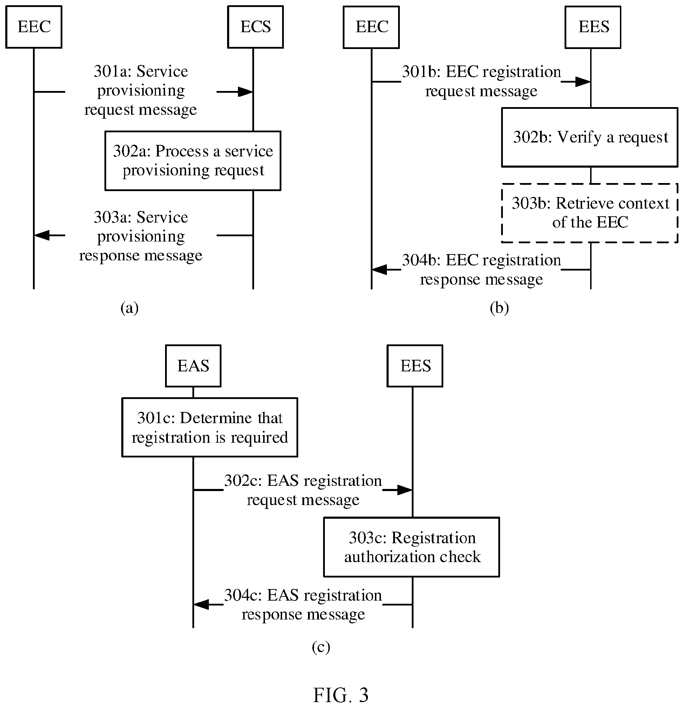

The following describes step 202 in detail with reference to (a) in FIG. 3.

It should be understood that an EES platform discovery and EAS discovery procedure is defined in a current standard. The procedure provides EES platform discovery and application instance discovery at an application layer. An EES may serve as a local DNS server, and the UE obtains an application instance address from an MEC platform. In terms of an architecture and a function, a two-level discovery mechanism is used: first discovering an EES platform, and then discovering an EAS from the EES platform.

The following describes a registration procedure of the EEC in detail with reference to (b) in FIG. 3, and a registration procedure of the EAS in detail with reference to (c) in FIG. 3.

Step 203: The EEC performs a regular EAS discovery (EAS discovery) procedure, to discover one or more EASs.

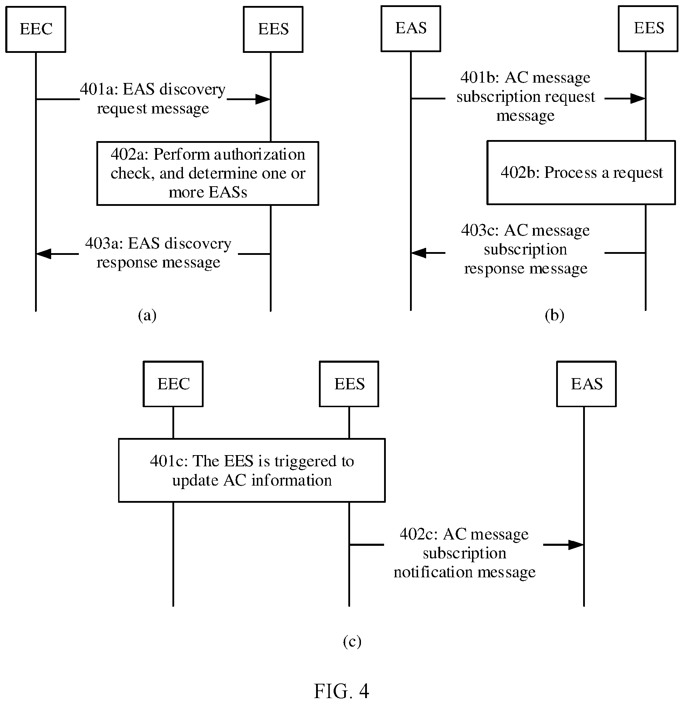

The following describes step 203 in detail with reference to (a) in FIG. 4.

Step 204: The AC selects a T-EAS from the one or more EASs discovered by the EEC.

The following describes an information subscription procedure of the AC in detail with reference to (b) in FIG. 4, and an information notification procedure of the AC in detail with reference to (c) in FIG. 4.

Step 205: The EEC sends an application context relocation request (application context relocation request) message to an S-EES.

Step 206: The S-EES sends an application context relocation response (application context relocation response) message to the EEC.

Step 207: Application context is transmitted between an S-EAS and the T-EAS.

The AC interacts with the S-EAS to trigger the S-EAS to initiate application context transfer (transfer).

Step 208: After application context transmission is completed, each entity performs a clean-up procedure.

It can be learned that, in the implementation shown in FIG. 2, the EEC performs detection, makes a decision, and determines the T-EES and the T-EAS, the EEC requests the S-EES to initiate user plane path modification, and the EEC or the AC initiates application context transmission.

(a) in FIG. 3 is a schematic diagram of a service provisioning procedure.

A prerequisite is that an ECS configures, based on a UE location, a service requirement, service preference, and connectivity, available edge computing service information related to an EEC, so that the EEC discovers an available EES.

The service provisioning procedure includes step 301a to step 303a in the following:
Step 301a: An EEC sends a service provisioning (service provisioning) request message to an ECS.

The service provisioning request message may include an EEC ID (identifier), a security credential, an AC profile (AC profile), a UE identifier, connection information, a UE location, and the like. The UE identifier may include a generic public subscription identifier (generic public subscription identifier, GPSI) or the like.

For example, Table 1a shows information elements that may be included in the service provisioning request message.

**Table 1a**

| Information element | Status | Description |
|---|---|---|
| EEC ID | Mandatory (mandatory, M) | Unique identifier of an EEC |
| Security credential (security credential) | Mandatory | Security credential generated when an edge computing service is successfully authorized |
| AC profile (application client profile(s)) | Optional (optional, O) | Information about a service to which the EEC expects to connect |
| UE identifier (UE identifier) | Optional | Identifier of UE (for example, a GPSI or an identity token) |
| Connection information (connection information) | Optional | Connection information list of the UE (for example, a public land mobile network (public land mobile network, PLMN) ID and a service set identifier (service set identifier, SSID)) |
| UE location (UE location) | Optional | Location information of the UE |

Step 302a: After receiving the service provisioning request message, the ECS processes a service provisioning request.

Specifically, the ECS performs authentication and authorization, and matches, based on the AC profile and the location information of the UE that are provided by the EEC, an EES registered with the ECS.

Step 303a: The ECS sends a service provisioning response message to the EEC.

If the ECS cannot determine EEC information based on the service provisioning request message, the ECS rejects the service provisioning request of the EEC and provides a failure cause.

If the ECS successfully processes the service provisioning request of the EEC, the ECS may provide EDN connection information, an EES list that meets EEC request information, address identifier information of the EES, and the like.

For example, Table 2a shows information elements that may be included in the service provisioning response message.

**Table 2a**

| Information element | Status | Description |
|---|---|---|
| Successful response (successful response) | Optional | Indicates that a service provisioning request succeeds |
| List of EDN configuration information (list of EDN configuration information) | Mandatory | EDN list |
| EDN connection information (EDN connection information) | Mandatory | Information required for establishing a connection between UE and an EDN |
| DNN/APN | Mandatory | Name of a data network/access point |
| S-NSSAI | Optional | Information about a network slice |
| EDN topological service area (EDN topological service area) | Optional | Cell ID (Cell ID) list or tracking area identity (tracking area identity, TAI) list, where |
| | | the EDN serves UEs accessing a core network from these cells |
| EES list (list of edge enabler servers) | Mandatory | EES list of the EDN |
| EES ID | Mandatory | EES identifier |
| EES endpoint (EES endpoint) | Mandatory | Endpoint address of an EES (for example, a uniform resource identifier (uniform resource identifier, URI) and an Internet protocol (Internet protocol, IP) address) |
| EAS ID (edge application server ID) | Optional | EAS ID registered with the EES |
| ECSP information (ECSP info) | Optional | Information about an edge computing service provider |
| EES topological service area (EES topological service area) | Optional | List of IDs or TAIs of a cell served by the EES, where |
| | | an EEC of UE connected to a core network from a cell that does not belong to this list should not be served by the EES |
| EES geographical service area (EES geographical service area) | Optional | Area served by the EES geographically |
| EES DNAI list (list of EES DNAI(s)) | Optional | DNAI related to the EES/EAS, where the IE is used as a potential location of an application |
| Lifetime | Optional | Duration in which the EDN configuration information is valid and cached in the EEC |
| Failure response (failure response) | Optional | Indicates that a service provisioning request fails |
| Cause (cause) | Optional | Indicates that a cause why the service provisioning request fails |

(b) in FIG. 3 is a schematic diagram of an EEC registration procedure.

The EEC registration procedure includes step 301b to step 304b in the following:
Step 301b: The EEC sends an EEC registration (EEC registration) request message to the EES.

The request from the client includes a security credential received after the edge computing service is successfully authorized, and may include proposed expiration time. The request may also optionally include information indicating to the EES how the EEC expects to use the services of the EES. If permission of the EEC on another EES (which is referred to as a source EES) is moved to the EES, the request from the EEC may include an identifier and an endpoint of the source EES, and an EEC context ID provided by the source EES, to maintain EEC context and authorize relocation of the EEC context.

For example, Table 1b shows information elements that may be included in the EEC registration request message.

**Table 1b**

| Information element | Status | Description |
|---|---|---|
| EEC ID | Mandatory | Unique identifier of an EEC |
| UE identifier (UE identifier) | Optional | UE identifier (for example, a GPSI or an identity token) |
| Security credential (security credential) | Mandatory | Security credential generated when an edge computing service is successfully authorized |
| AC profile (application client profile(s)) | Optional | AC profile of an edge enabler service provided by the EEC for an AC |
| Proposed expiration time | Optional | Proposed expiration time for registration |
| EEC context ID (EEC context ID) | Optional | Identifier of EEC context obtained from previous registration |
| Source EES ID (Source EES ID) | Optional | EES identifier that provides the EEC context ID |
| Address of a source EES endpoint (Source EES Endpoint) | Optional | Endpoint address (for example, a URI and an IP address) of the EES that provides the EEC context ID |

Step 302b: After receiving the request from the EEC, the EES verifies the registration request and the security credential.

Specifically, the EES further determines whether a requirement indicated in the AC profile can be met.

Step 303b: After the request is successfully verified, if the received EEC registration request includes the EEC context ID, the source EES ID, and the EES endpoint, the EES retrieves the EEC context from the source EES. Otherwise, this step is skipped.

Step 304b: The EES sends a registration response message to the EEC.

If registration succeeds, the EES sends a registration success response. The registration success response includes a registration ID, and may include a newly assigned EEC context ID. The EEC stores the new EEC context ID, and uses the new EEC context ID when registering with another EES. The EES may also provide expiration time to indicate to the EEC when registration automatically expires. The EEC needs to send a registration update request before registration expires, to stay registered. If no registration update request is received before the expiration time, the EES considers that the EEC is implicitly deregistered.

If registration fails, the EES sends a registration failure response, and provides a failure cause.

For example, Table 2b shows information elements that may be included in the registration response message.

**Table 2b**

| Information element | Status | Description |
|---|---|---|
| Successful response (Successful response) | Optional | Indicates that a registration request succeeds |
| > Registration ID (Registration ID) | Mandatory | Identifier of EEC registration |
| > Expiration time (Expiration time) | Mandatory | Expiration time of registration, where registration needs to be updated before the expiration time, to stay in an active registration status |
| > EEC context ID (EEC context ID) | Optional | Identifier of available EEC context information of an EES performing registration |
| Failure response (Failure response) | Optional | Indicates that a registration request fails |
| > Cause (Cause) | Mandatory | Provides a cause why the registration request fails |

(c) in FIG. 3 is a schematic diagram of an EAS registration procedure.

The EAS registration procedure includes step 301c to step 304c in the following:
Step 301c: The EAS determines that it is necessary to register with the EES.

For example, the AS is instantiated and started.

Step 302c: The EAS sends an EAS registration (EAS registration) request message to the EES.

The request should include an EAS profile, and may include proposed expiration time for registration.

For example, Table 1c shows information elements that may be included in the EAS registration request message.

**Table 1c**

| Information element | Status | Description |
|---|---|---|
| EAS profile (EAS Profile) | Mandatory | EAS profile |
| Security credential (Security credential) | Mandatory | Security credential of an EAS |
| Proposed expiration time (Proposed expiration time) | Optional | Proposed expiration time for registration |

For example, Table 2c shows information elements that may be included in the EAS profile.

**Table 2c**

| Information element | Status | Description |
|---|---|---|
| EAS ID | Mandatory | Identifier of an EAS |
| EAS endpoint (EAS Endpoint) information | Mandatory | Information (for example, a URI, an FQDN, and an IP address) about an endpoint used to communicate with the EAS, where the information may be discovered by an EEC and exposed to an AC, so that the AC can establish a connection to the EAS |
| ACID(s) | Optional | Identifies an AC that can be served by the EAS |
| EAS provider identifier (EAS Provider Identifier) | Optional | Identifier of an EAS provider |
| EAS type (EAS Type) | Optional | Category or type (for example, V2X) of the EAS |
| EAS description (EAS description) | Optional | Human-readable description of the EAS |
| EAS schedule (EAS Schedule) | Optional | Availability schedule of the EAS (for example, a time window) |
| EAS geographical service area (EAS Geographical Service Area) | Optional | Geographical service area served by the EAS, where an AC in UE located outside the area should not be served |
| EAS topological service area (EAS Topological Service Area) | Optional | Topological service area served by the EAS, where an AC in UE located outside the area should not be served |
| EAS service KPI (EAS Service KPI) | Optional | Feature of a service provided by the EAS |
| EAS service permission level (EAS service permission level) | Optional | Service permission level |
| EAS function (EAS Feature(s)) | Optional | Service function, for example, single-player and multi-player game services supported by the EAS |
| Service continuity support (Service continuity support) | Optional | Indicates whether the EAS supports service continuity, where the IE may also indicate whether the EAS supports application context transmission |
| EAS DNAI list (List of EAS DNAI(s)) | Optional | DNAI(s) related to the EAS, where the EAS DNAI list is a subset of DNAIs associated with an EDN in which the EAS is located |
| List of N6 traffic routing requirements (List of N6 Traffic Routing requirements) | Optional | N6 traffic routing information and/or routing profile ID corresponding to each EAS DNAI |
| EAS availability reporting period (EAS Availability Reporting Period) | Optional | Availability reporting period (namely, a heartbeat period) indicating to the EES that a frequency of EAS availability needs to be checked after registration succeeds |
| EAS required service API (EAS Required Service API) | Optional | List of service APIs required by the EAS |
| EAS status (EAS Status) | Optional | Status (for example, enabled and disabled) of the EAS |

Step 303c: The EES performs registration authorization check, to verify whether the EAS has authorization to register on the EES.

Step 304c: The EES sends an EAS registration response message to the EAS.

If authorization succeeds, the EES stores the EAS profile for future use (for example, serving an EAS discovery request received from the EEC), and replies to the EAS with an EAS registration response. The EES may provide expiration time to indicate to the EAS when registration automatically expires. The EAS needs to send a registration update request before the expiration time, to stay registered. If no registration update request is received before the expiration time, the EES considers that the EAS is implicitly deregistered.

If registration fails, the EES sends a registration failure response, and provides a failure cause.

For example, Table 3c shows information elements that may be included in the registration response message.

**Table 3c**

| Information element | Status | Description |
|---|---|---|
| Successful response (Successful response) | Optional | Indicates that a registration request succeeds |
| > Registration ID (Registration ID) | Mandatory | Identifier of registration |
| > Expiration time (Expiration time) | Mandatory | Expiration time of registration, where registration needs to be updated before the expiration time, to stay in an active registration status |
| Failure response (Failure response) | Optional | Indicates that a registration request fails |
| > Cause (Cause) | Mandatory | Provides a cause why the registration request fails |

(a) in FIG. 4 is a schematic diagram of a regular EAS discovery procedure.

Prerequisites are as follows: (1) An EEC receives information about an EES, for example, a URL and an IP address of the EES; and (2) an EAS discovery policy of an ECSP is configured on the EES.

The EAS discovery procedure includes step 401a to step 403a in the following:
Step 401a: The EEC sends an EAS discovery request message to the EES.

The EAS discovery request message may include an EEC ID and a security credential. The EAS discovery request message may further include an EAS discovery filter (EAS discovery filter), to retrieve information about a specific EAS or information about a specific type of EAS (for example, a game application).

For example, Table 4a shows information elements that may be included in the EAS discovery request message.

**Table 4a**

| Information element | Status | Description |
|---|---|---|
| Requester ID | Mandatory | Identifier of a requester (for example, an EEC ID) |
| UE identifier | Optional | Identifier of UE (for example, a GPSI or an identity token) |
| Security credential | Mandatory | Security credential generated when an edge computing service is successfully authorized |
| EAS discovery filter | Optional | Determines a group of features of a required EAS |

For example, Table 5a shows information elements that may be included in the EAS discovery filter.

**Table 5a**

| Information element | Status | Description |
|---|---|---|
| AC feature list | Optional | Describes an AC that needs to be matched with an EAS |
| AC profile | Mandatory | AC profile including a parameter used to determine a matched EAS |
| EAS feature list | Optional | Describes a feature of a required edge application server EAS |
| EAS ID | Optional | Identifier of the required EAS |
| EAS provider identifier | Optional | Identifier of a required EAS provider |
| EAS type | Optional | Category or type (for example, V2X) of the required EAS |
| EAS schedule (EAS schedule) | Optional | Availability schedule required by the EAS (for example, a time window) |
| EAS geographical service area | Optional | Location where an EAS service is available (for example, a geographic area and a route) |
| EAS topological service area | Optional | Topological area (for example, a cell ID and a TAI, where the EAS service of the cell is available) |
| Service continuity support | Optional | Indicates whether service continuity support is required |
| EAS status | Optional | Status (for example, enabled and disabled) of the EAS |
| Service permission level | Optional | Permission level of a required service |
| Service feature | Optional | Function of the required service (for example, single-player and multi-player game services) |

For example, Table 6a shows information elements that may be included in the AC profile.

**Table 6a**

| Information element | Status | Description |
|---|---|---|
| AC ID | M | Identifier of an application client |
| Application client type | O | Category or type (for example, V2X) of the application client |
| Preferred ECSP list | O | When used in a service provisioning request, the information element indicates an ECS and an ECSP preferred by the AC, where the ECS may use the information when selecting an EES |
| Schedule of the application client | O | Expected operation schedule of the application client (for example, a time window) |
| Expected application client geographic service area | O | Expected location in which UE is deployed in the operation schedule of the application client, where the geographic information may indicate a geographic point, a polygon, a route, a signal map, or a vertex set |
| Service continuity support | O | Indicates whether an application requires service continuity support |
| EAS list | O | List of EASs that provide services for the application client and a service KPI required by the application client |
| EAS ID | M | EAS identifier |
| Application client service KPI | O | KPI required by the AC to receive a service from the EAS |

Step 402a: After receiving the EAS discovery request sent by the EEC, the EES performs authorization check and determines one or more EASs. Specifically, if the EES determines that the EEC is authorized to discover the requested EAS, the EES determines the one or more EASs based on the provided EAS discovery filter and the location of the UE. If the EAS discovery filter is not provided in the EAS discovery request message, the EES determines the one or more EASs based on UE specific service information and the location of the UE on the EES, or determines the one or more EASs by applying an ECSP policy (for example, based only on the location of the UE). If the EES cannot determine the one or more EASs based on the information carried in the EAS discovery request message, the UE specific service information and the location of the UE on the EES, or the ECSP policy, the EES rejects the EAS discovery request of the EEC, and provides a corresponding failure cause. If the UE is located outside the geographical or topological service area of the EAS, the EES should not carry the EAS in the EAS discovery response message.

Step 403a: The EES sends the EAS discovery response message to the EEC.

If the EAS discovery request of the EEC is successfully processed, the EAS discovery response message includes information about one or more discovered EASs and endpoint information of the discovered EASs. If the EEC fails to process the EAS discovery request, the EAS discovery response message includes a failure indication and a failure cause.

For example, Table 7a shows information elements that may be included in the EAS discovery response message.

**Table 7a**

| Information element | Status | Description |
|---|---|---|
| Successful response | Optional | Indicates that an EAS discovery request succeeds |
| Discovered EAS list | Optional | Discovered EAS list |
| EAS profile | Mandatory | EAS profile |
| Lifecycle | Optional | Interval or duration in which an information element of the EAS profile is valid and cached in an EEC (for example, a time to live value for an EAS endpoint) |
| Failure response | Optional | Indicates that an EAS discovery request fails |
| Cause | Optional | Cause why the EAS discovery request fails |

(b) in FIG. 4 is a schematic diagram of an AC information subscription procedure.

The AC information subscription procedure includes step S401b to step S403b in the following:
Step S401b: An EAS sends an AC information subscription request message to an EES.

The AC information subscription request messages may include a filter to retrieve information about a particular AC.

Step S402b: After receiving the request from the EAS, the EES process the request, where processing includes:
performing authorization check, to verify whether the EAS has authorization to perform an operation; determining matching AC information corresponding to the provided filter and generating a result; and storing subscription information for future processing.

Step S403b: The EES sends an AC information subscription response message to the EAS.

For example, Table 4b shows information elements that may be included in the AC information subscription request message.

**Table 4b**

| Information element | Status | Description |
|---|---|---|
| EAS ID | Mandatory | Identifier of an EAS |
| Subscription type | Mandatory | Select "one-time", "event-based", or "cancel subscription" to determine a processing type of a request |
| Filter (Filter) | Optional | Feature list for discovery |
| Event condition (Event condition) | Optional | Parameter, for example, a quantity of notification instances and subscription expiration, that indicates the event condition |

For example, Table 5b shows information elements that may be included in the filter.

**Table 5b**

| Information element | Status | Description |
|---|---|---|
| AC type (AC Type) | Optional | Category or type (for example, V2X) of an AC for matching |
| ECSP ID | Optional | Identifier of an ECSP associated with an EEC |
| Operation schedule (Operation Schedule) | Optional | EAS operation schedule (for example, a time window) for matching |
| Geographical service area (Geographical Service Area) | Optional | EAS service area, used to identify UE with a matching expected geographical location(s) (for example, routing), where the geographic information may indicate a geographic point, a polygon, routing, a signaling map, or a flight point set |
| Topological service area (Topological Service Area) | Optional | EAS service area, used to identify UE with a matching expected topological location(s) |
| EAS service KPI (EAS Service KPI) | Optional | EAS KPI, used to identify an EEC and an AC for matching |
| AC profile parameter range (AC Profile Parameter Range) | Optional | Range of a parameter that matches a profile of an AC to which a request is applied |
| AC identifier (AC ID) | Optional | Identity list of the AC for matching |
| UE identifier (UE ID) | Optional | Identifier list of UE for matching |
| UE location (UE location) | Optional | List of locations (for example, routing) of UE to which the request is applicable |

(c) in FIG. 4 is a schematic diagram of an AC information notification procedure.

The AC information notification procedure includes step S401c to step S403c in the following:
Step S401c: An EES is triggered to update AC information.

For example, the EES receives an EEC registration request, and determines whether the EES matches a filter provided by an EAS. For another example, an AC geographic service area is included in a geographic service area provided by the EAS.

Step S402c: The EES sends an AC information notification message to the EAS.

For example, Table 4c shows information elements that may be included in the AC information notification message.

**Table 4c**

| Information element | Status | Description |
|---|---|---|
| Subscription identifier (Subscription Identifier) | Mandatory | Subscription identifier used to generate a notification |
| List of clients (List of clients) | Optional | List of clients obtained through matching based on a given filter condition |
| AC profile (AC Profile(s)) | Mandatory | Profile of an AC |
| UE identifier (UE ID(s)) | Optional | UE identifier of UE of a home AC |
| UE location (UE location(s)) | Optional | Location of the UE of the home AC |

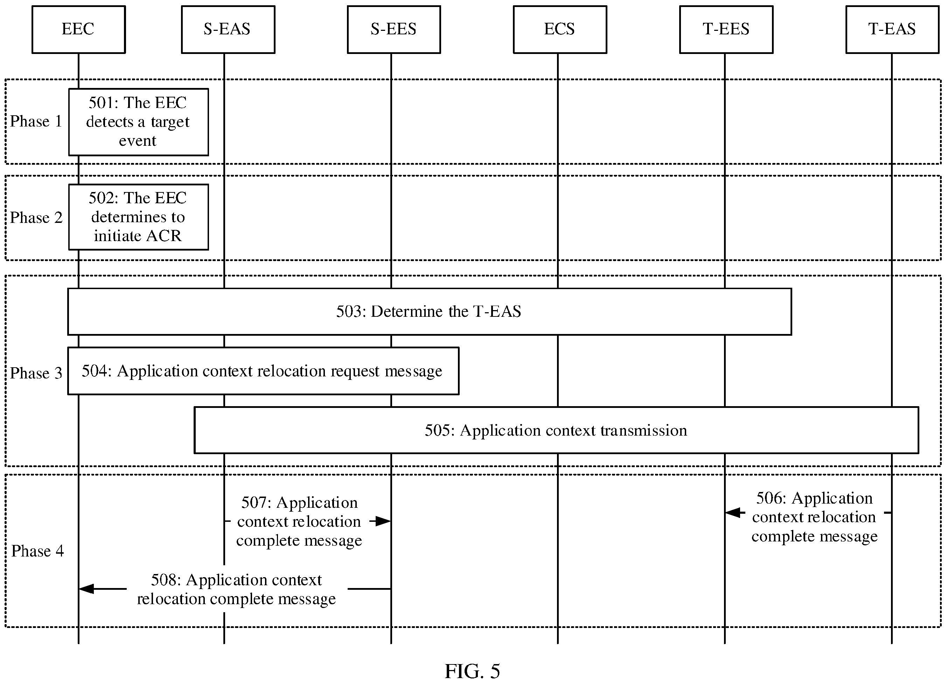

FIG. 5 is another implementation of application context relocation.

In this implementation, an EEC executes ACR by using an S-EES.

Step 501: An EEC detects a target event.

The target event may include a UE location change, a UE user plane path update, and the like. In this step, the AC may indicate, through an EDGE-5 interface, the EEC to detect whether ACR needs to be executed.

Step 502: The EEC determines to trigger application context relocation.

Step 503: The EEC determines a T-EAS.

Step 504: The EEC sends an application context relocation request to an S-EES, where the request indicates the S-EES to further interact with an S-EAS, and trigger the S-EAS to execute context transfer (transfer).

Step 505: The S-EES indicates the S-EAS to transmit application context, where the application context is transmitted between the S-EAS and the T-EAS.

Step 506: After application context transmission is completed, the T-EAS sends an application context relocation complete message to a T-EES, to indicate to the T-EES that application context transmission is completed, and indicate an application context transmission result.

Step 507: After application context transmission is completed, the S-EAS sends the application context relocation complete message to the S-EES, to indicate to the T-EES that application context transmission is completed, and indicate the application context transmission result.

Step 508: After receiving the application context relocation complete message sent by the S-EAS, the S-EES sends the application context relocation complete message to the EEC, to indicate to the EEC that application context transmission is completed.

It can be learned that, in the implementation shown in FIG. 5, the EEC performs detection, makes a decision, and determines the T-EES and the T-EAS, the EEC requests the S-EES to initiate user plane path modification, and the S-EES initiates application context transmission. For more specific descriptions of phases shown in FIG. 5, refer to related descriptions in FIG. 2. Details are not described herein again. The implementation shown in FIG. 5 is different from the implementation shown in FIG. 2. In the implementation shown in FIG. 5, the S-EES initiates application context transmission.

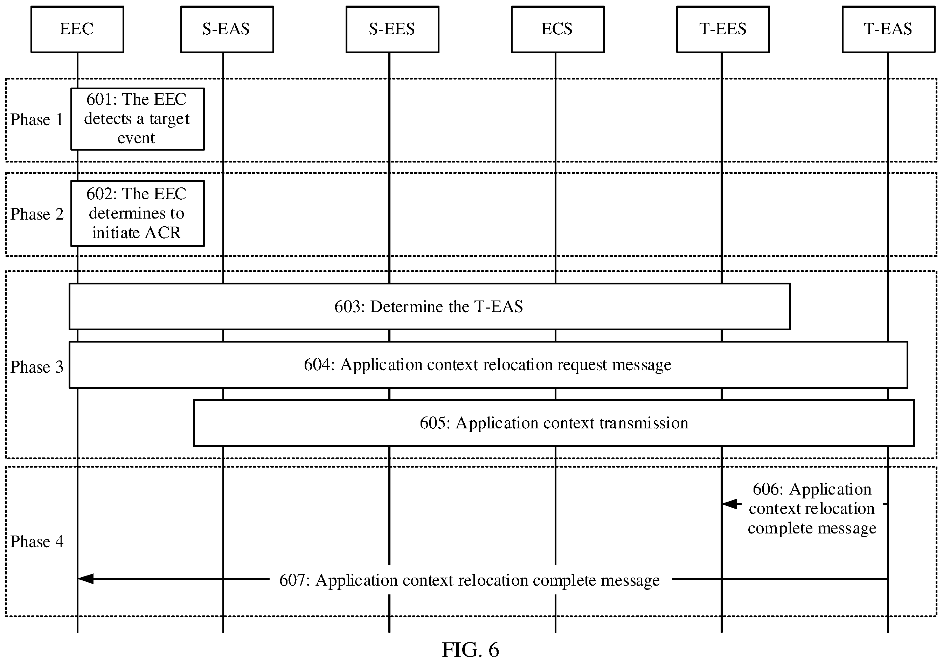

FIG. 6 is another implementation of application context relocation.

In this implementation, an EEC executes ACR by using a T-EES.

Step 601: An EEC detects a target event.

The target event may include a UE location change, a UE user plane path update, and the like.

Step 602: The EEC determines to trigger application context relocation.

Step 603: The EEC determines a T-EAS.

Step 604: The EEC sends an application context relocation request to a T-EES. The request is used to trigger application context transfer and user plane path update.

Step 605: The T-EES indicates the T-EAS to request application context from an S-EAS, where the application context is transmitted between the S-EAS and the T-EAS.

Step 606: After application context transmission is completed, the T-EAS sends an application context relocation complete message to the T-EES, to indicate to the T-EES that application context transmission is completed, and indicate an application context transmission result.

Step 607: After receiving the application context relocation complete message sent by the T-EAS, the T-EES sends the application context relocation complete message to the EEC, to indicate to the EEC that application context transmission is completed.

It can be learned that, in the implementation shown in FIG. 6, the EEC performs detection, makes a decision, and determines the T-EES and the T-EAS, the EEC requests the T-EES to initiate user plane path modification, and the T-EES notifies the T-EAS to initiate application context transmission. For more specific descriptions of phases shown in FIG. 6, refer to related descriptions in FIG. 5. Details are not described herein again. The implementation shown in FIG. 6 is different from the implementation shown in FIG. 5. In the implementation shown in FIG. 6, the T-EES initiates application context transmission.

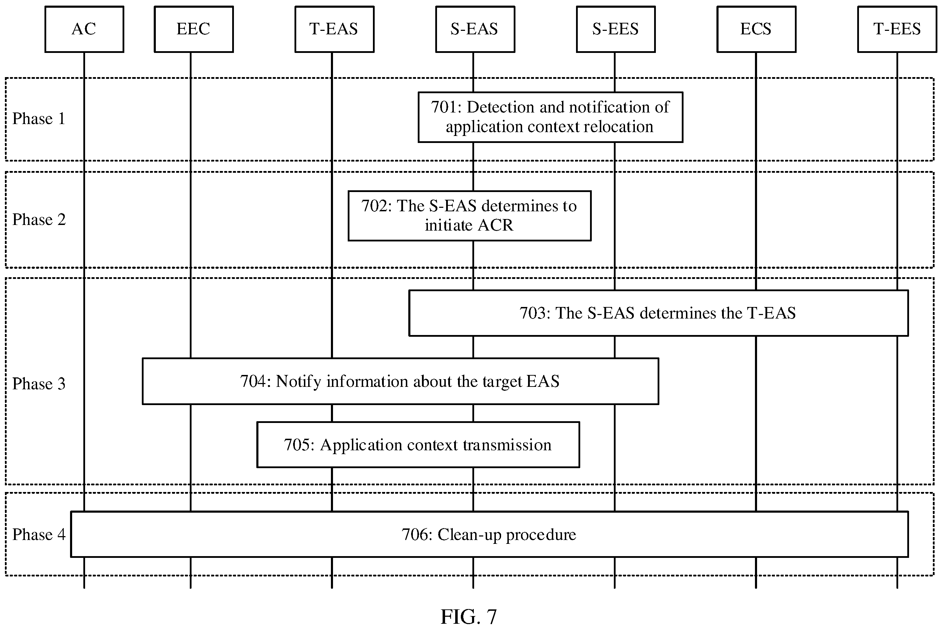

FIG. 7 is another implementation of application context relocation.

In this implementation, an S-EAS makes a decision to initiate ACR.

Step 701: An S-EAS detects a target event, or an S-EES detects a target event and notifies an S-EAS.

The target event may include a UE location change, a UE user plane path update, and the like.

Step 702: The S-EAS determines to initiate application context relocation.

Step 703: The S-EAS determines a T-EAS.

Step 704: The S-EES notifies information about the target EAS.

Step 705: Application context is transmitted between an S-EAS and the T-EAS.

Step 706: After application context transmission is completed, each entity performs a clean-up procedure.

It can be learned that, in the implementation shown in FIG. 7, the S-EAS or the S-EES performs detection, the S-EAS makes a decision, and determines a T-EES and the T-EAS, the S-EAS initiates user plane path modification, and the S-EES initiates application context transmission.

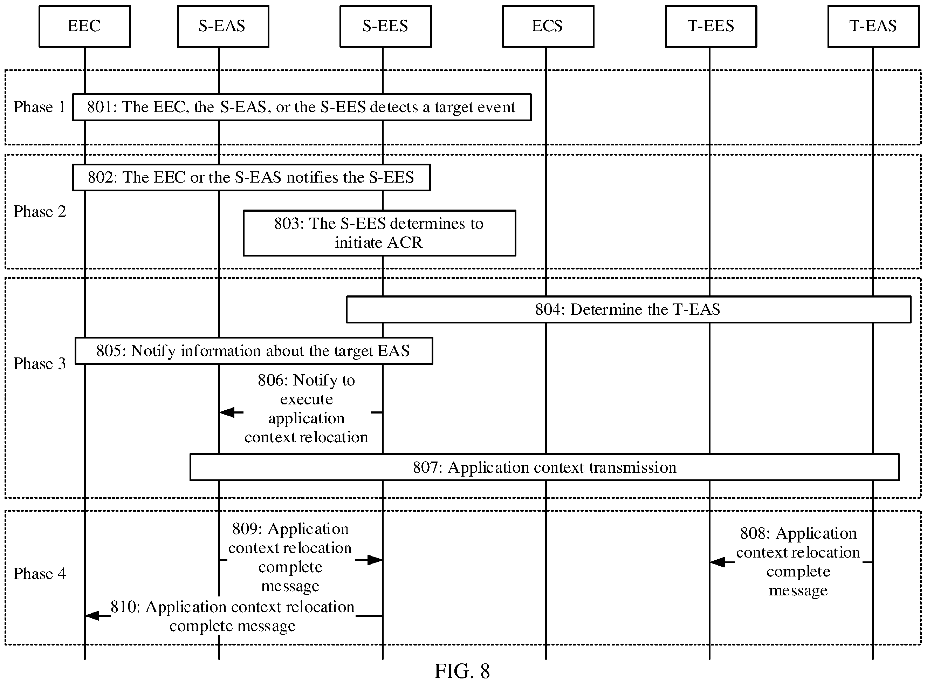

FIG. 8 is another implementation of application context relocation.

In this implementation, an S-EES executes ACR.

Step 801: An EEC, an S-EAS, or an S-EES detects a target event.

The target event may include a UE location change, a UE user plane path update, and the like.

Step 802: The EEC or the S-EAS notifies the S-EES that the target event is detected.

This step is optional. If the EEC or the S-EAS detects the target event, the EEC or the S-EAS needs to notify the S-EES that the target event is detected.

Step 803: The S-EES determines to initiate application context relocation.

Step 804: The S-EES determines a T-EAS.

Step 805: The S-EES notifies information about the target EAS.

Step 806: The S-EES notifies the S-EAS to execute context relocation.

Step 807: Application context is transmitted between the S-EAS and the T-EAS.

Step 808: After application context transmission is completed, the T-EAS sends an application context relocation complete message to a T-EES, to indicate to the T-EES that application context transmission is completed, and indicate an application context transmission result.

Step 809: After application context transmission is completed, the S-EAS sends the application context relocation complete message to the S-EES, to indicate to the T-EES that application context transmission is completed, and indicate the application context transmission result.

Step 810: After receiving the application context relocation complete message sent by the S-EAS, the S-EES sends the application context relocation complete message to the EEC, to indicate to the EEC that application context transmission is completed.

It can be learned that, in the implementation shown in FIG. 8, the EEC, the S-EAS, or the S-EES performs detection, the S-EES makes a decision, and determines the T-EES and the T-EAS, the S-EES initiates user plane path modification, and the S-EES notifies the S-EAS to initiate application context transmission.

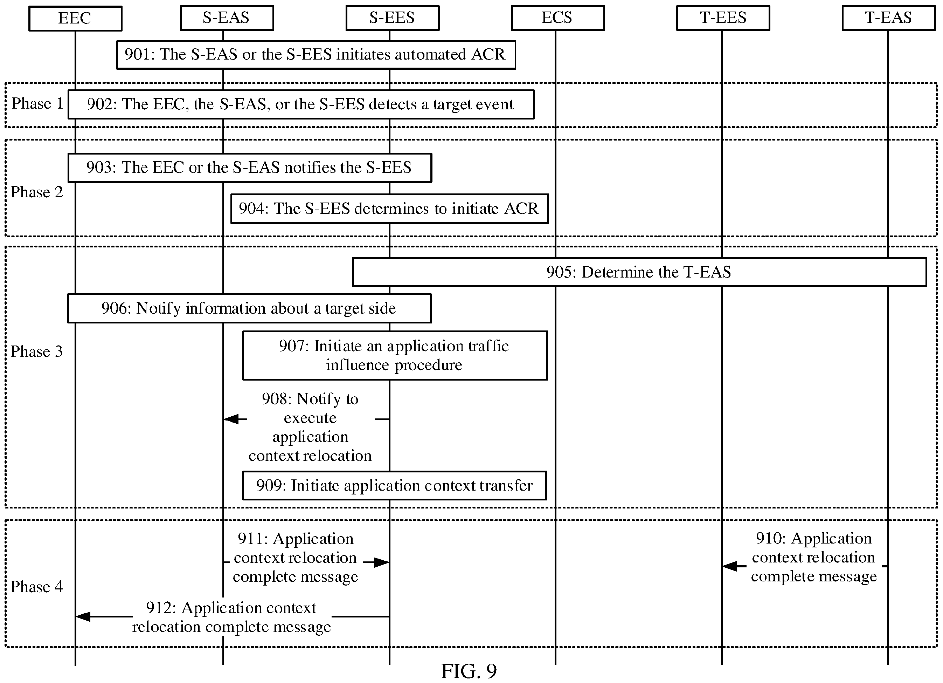

FIG. 9 is another implementation of application context relocation.

An ACR manner shown in FIG. 9 is automated ACR, and the automated ACR may also be referred to as full ACR, full service ACR, or full operation ACR.

Step 901: An S-EAS or an S-EES initiates automated ACR.

Step 902: An EEC, the S-EAS, or the S-EES detects a target event.

The target event may include a UE location change, a UE user plane path update, and the like.

Step 903: The EEC or the S-EAS notifies the S-EES that the target event is detected.

This step is optional. If the EEC or the S-EAS detects the target event, the EEC or the S-EAS needs to notify the S-EES that the target event is detected.

Step 904: The S-EES determines to initiate application context relocation.

Step 905: The S-EES determines a T-EAS.

Step 906: The S-EES notifies information about a target side.

Step 907: The S-EES notifies the S-EAS to execute context relocation.

Step 908: The S-EES performs an application traffic influence procedure.

Step 909: The S-EES initiates application context transfer. Before this step, the S-EAS stores application context to a storage address that can be accessed by the S-EES, and at the target side, a target EES and the target EAS share a storage address of the application context.

Step 910: After application context transmission is completed, the T-EAS sends an application context relocation complete message to the T-EES, to indicate to the T-EES that application context transmission is completed, and indicate an application context transmission result.

Step 911: After application context transmission is completed, the S-EAS sends the application context relocation complete message to the S-EES, to indicate to the T-EES that application context transmission is completed, and indicate the application context transmission result.

Step 912: After receiving the application context relocation complete message sent by the S-EAS, the S-EES sends the application context relocation complete message to the EEC, to indicate to the EEC that application context transmission is completed.

It can be learned that, in the implementation shown in FIG. 9, the EEC, the S-EAS, or the S-EES performs detection, the S-EES makes a decision, and determines the T-EES and the T-EAS, the S-EES initiates user plane path modification, and the S-EES notifies the S-EAS to initiate application context transmission.

It can be learned from the procedures shown in FIG. 2 and FIG. 5 to FIG. 9 that, the EEC, the AC, the EES, and the EAS all can detect an ACR event, and after a specific entity detects the ACR event, application context relocation may be executed in a plurality of ACR manners. However, the ACR manner may cause a plurality of functional entities to repeatedly detect an ACR requirement of a same application, and cause conflict due to executing application context relocation for a plurality of times.

To avoid a disadvantage that the plurality of functional entities repeatedly detect an ACR requirement of a same application caused by the current ACR manner, this application provides a context relocation method, to enable a functional entity to execute an ACR procedure. This prevents the plurality o functional entities from repeatedly triggering an ACR procedure.

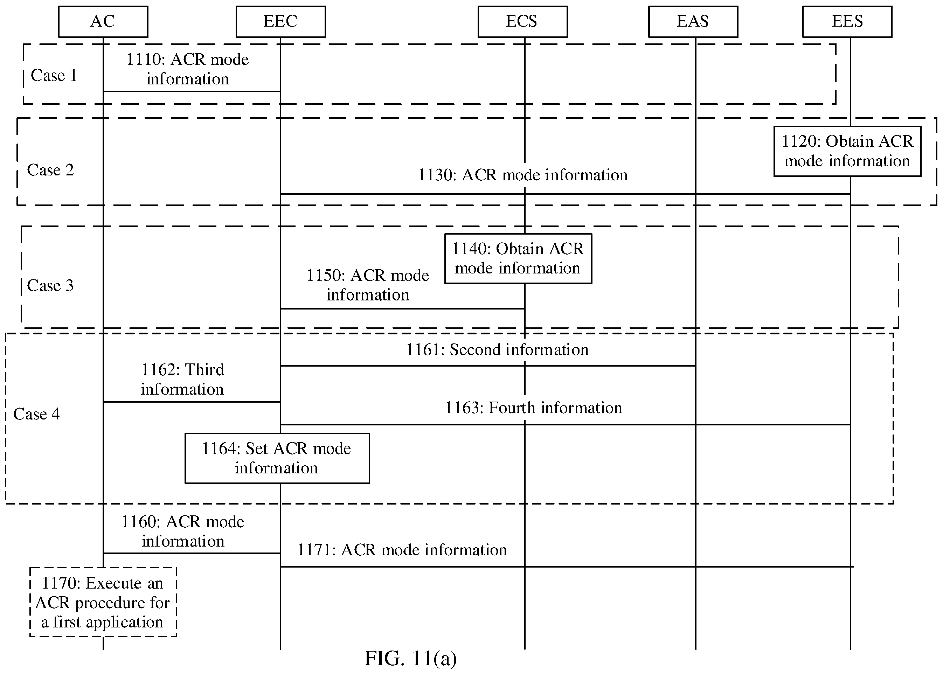

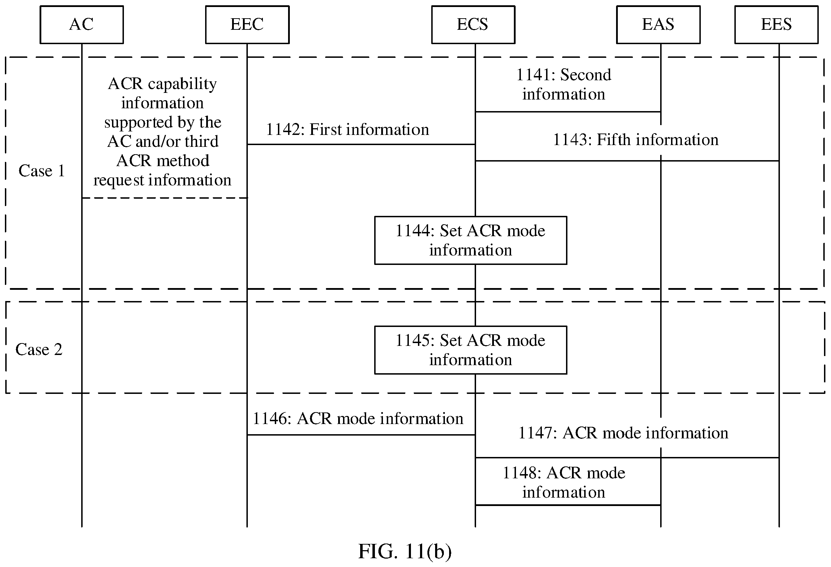

The following describes in detail the context relocation method according to this application with reference to FIG. 11(a) and FIG. 11(b) to FIG.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5G system, new radio (new radio, NR), or a future network. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an Internet of things (Internet of Things, IoT) communication system, or another communication system.

A specific structure of an execution body of a method provided in embodiments of this application is not specifically limited in the following embodiments, provided that a program that records code for the method provided in the embodiments of this application can be run to perform communication according to the method provided in the embodiments of this application. For example, the method provided in the embodiments of this application may be performed by a terminal device or a device in an edge network, or a function module that is in a terminal device or a device in an edge network and that can invoke and execute a program.

For ease of understanding of embodiments of this application, the following descriptions are provided.

First, "first", "second", and various numerical numbers (for example, "#1" and "#2") shown in this application are merely used to distinguish between objects for ease of description, but are not intended to limit the scope of embodiments of this application, for example, are used to distinguish between different messages, but are not used to describe a particular order or sequence. It should be understood that the objects described in this way are interchangeable in a proper circumstance, so that a solution other than embodiments of this application can be described.

Second, in this application, "preset" may include predefining, for example, defining in a protocol. "Pre-define" may be implemented by prestoring corresponding code or a corresponding table in a device (for example, including user equipment and or a core network device), or in another manner that may be used to indicate related information. A specific implementation is not limited in this application.

Third, "store" in the embodiments of this application may be storage in one or more memories. The one or more memories may be separately disposed, or may be integrated into an encoder, a translator, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

Fourth, "protocols" in embodiments of this application may be standard protocols in the communication field, for example, may include a 5G protocol, a new radio (new radio, NR) protocol, and a related protocol used for a future communication system. This is not limited in this application.

Without loss of generality, the following describes in detail the information transmission method provided in embodiments of this application by using interaction between devices as an example.

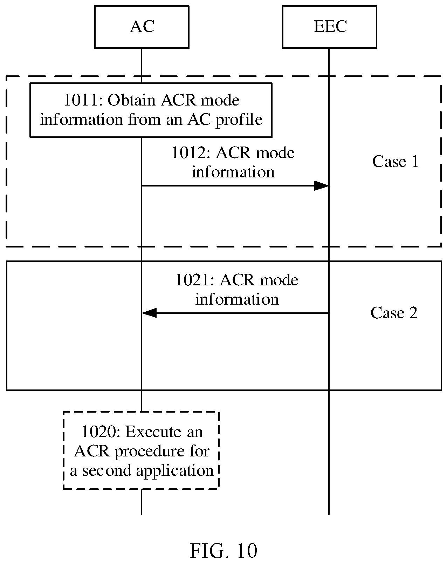

FIG. 10 is a schematic flowchart of a context relocation method according to this application.

The context relocation method includes the following steps:
Step 1010: An AC obtains ACR mode information.

The ACR mode information is information used to determine an ACR method. The ACR method may also be referred to as an ACR scenario, an ACR execution manner, or the like. For ease of description, the following uses the ACR method as an example for description.

For example, determining the ACR method may be implemented as determining an apparatus for executing an ACR procedure. For example, determining that the apparatus for executing the ACR procedure is an EEC may be understood as determining that the ACR method is an ACR method #1.

For example, the ACR method in this embodiment of this application may include at least one of the following:
initiation by EEC using regular EAS discovery (Initiation by EEC using regular EAS Discovery) (the manner shown in FIG. 2), EEC executed ACR via S-EES (EEC executed ACR via S-EES) (the manner shown in FIG. 5), S-EAS decided ACR scenario (S-EAS decided ACR scenario), S-EES executed ACR (S-EES executed ACR) (the manner shown in FIG. 7), EEC executed ACR via T-EES (EEC executed ACR via T-EES) (the manner shown in FIG. 6), automated ACR (which may also be referred to as full ACR/EES management, or ACR/EEL layer management ACR/automated ACR) (the manner shown in FIG. 9), or the like.

The ACR mode information may specifically be a rule for determining the ACR method, or may be referred to as an ACR method selection rule, an ACR method determining rule, ACR rule information, or the like. In this application, the ACR rule information is used as an example for description. The following describes the ACR rule information in detail. The ACR rule information includes condition information for triggering an ACR procedure of at least one application.

In a possible implementation, the ACR rule information includes a correspondence between an application type and an apparatus for executing an ACR procedure of an application belonging to the application type.

In another possible implementation, the ACR rule information includes a correspondence between information about an event that triggers an ACR procedure and an apparatus for executing the preset ACR procedure.

For example, the ACR rule information may be represented by a correspondence, and the correspondence includes a correspondence between an ACR trigger event and a preset ACR execution manner (for example, including six manners shown in FIG. 2 and FIG. 5 to FIG. 9), and/or a correspondence between the application type and the preset ACR execution manner.

Alternatively, the correspondence includes a correspondence between an ACR trigger event and a functional entity (at least including the functional entities such as the AC, the EAS, the EES, and the EEC mentioned above) that executes ACR, and/or a correspondence between the application type and the functional entity that executes ACR. ACR execution may be understood as sending an application context relocation (application context relocation) request, triggering context transfer, or requesting user plane path update after determining that ACR needs to be executed. In this embodiment of this application, the ACR rule information indicates an ACR trigger event and/or an application type for an ACR procedure executed by at least one of the AC, an EAS, an EES, and the EEC.

For example, if the ACR trigger event is that UE moves, the functional entity that executes the ACR procedure is the EES or the EAS.

For another example, if the ACR trigger event is that a server is overloaded, the functional entity that executes the ACR procedure is the EAS.

For another example, if the ACR trigger event is that a DNAI changes, the functional entity that executes the ACR procedure is the EES.

For another example, if the application type is an A application, the functional entity that executes the ACR procedure is the EES.

For another example, if QoE quality degrades, the functional entity that executes the ACR procedure is the AC.

The condition information may be understood as ACR trigger condition information indicating an ACR trigger condition. For example, the ACR trigger condition includes the ACR trigger event (for example, the UE moves, and the EAS is overloaded). For another example, the ACR trigger condition includes an application type (for example, an information application and a call application).

The condition information indicates at least one of the following conditions:
a first condition, a second condition, a third condition, and a fourth condition.

When the first condition is met, the EEC is indicated to execute an ACR procedure for a first application in the at least one application; when the second condition is met, the AC is indicated to execute an ACR procedure for a second application in the at least one application; when the third condition is met, the EAS is indicated to execute an ACR procedure for a third application in the at least one application; or when the fourth condition is met, the EES is indicated to execute an ACR procedure for a fourth application in the at least one application.

It should be noted that there may be one or more "first applications" in this embodiment of this application. It may be understood that when the first condition is met, an application corresponding to an ACR procedure that can be executed by the EEC is referred to as the first application. For example, the EEC executes an ACR procedure for an application whose application type is a type #1, where there may be one or more applications whose application type is the type #1. Similarly, there may also be one or more "second applications", there may also be one or more "third applications", and there may also be one or more "fourth applications". Reasons are the same as those described above, and details are not described herein again.

In addition, it should be noted that the "first application", the "second application", the "third application", and the "fourth application" may be a same application, namely, an application corresponding to the AC. For example, when different conditions are met, the functional entity executes an ACR procedure for an application.

Specifically, the ACR mode information may alternatively be an identifier indicating the application client and an ACR method determined by a server for the identifier of the application client.

The server is one of an edge enabler client EEC, an edge configuration server ECS, an edge enabler server EES, or an edge application server EAS.

Specifically, the ACR mode information may be a correspondence between the identifier (identity, ID) of the AC and the ACR method determined for the AC.

The correspondence between the identifier of the application client and the ACR method of the application corresponding to the identifier of the application client specifically includes:
preconfiguring an ACR method for an application corresponding to an identifier of each client, or selecting an ACR method for an application corresponding to an identifier of each client.

For example, when the identifier of the application client is an AC ID #1, an ACR method of an application App #1 corresponding to the AC ID #1 is initiation by EEC using regular EAS discovery.

Specifically, in this embodiment of this application, that the AC obtains the ACR mode information includes the following two cases:
Case 1: The AC obtains the ACR mode information from an AC profile (AC profile) in the AC. In other words, the AC determines the ACR mode information from the AC profile.

For example, the ACR mode information is preconfigured in the AC profile.

In the case 1, step 1010 is understood as step S 1011 shown in FIG. 10. The AC obtains the ACR mode information from the AC profile in the AC.

It may be understood that the ACR mode information is predefined in the AC profile. In the case 1, information elements that may be included in the AC profile are shown in Table 8.

**Table 8**

| Information element | Status | Description |
|---|---|---|
| AC ID | Mandatory | Identifier of an application client |
| Application client type | Optional | Category or type (for example, V2X) of the application client |
| Preferred ECSP list | Optional | When used in a service provisioning request, the information element indicates an ECS and an ECSP preferred by the AC, where the ECS may use the information when selecting an EES |
| Schedule of the application client | Optional | Expected operation schedule of the application client (for example, a time window) |
| Expected application client geographic service area | Optional | Expected location at which UE is deployed in the operation schedule of the application client, where the geographic information may indicate a geographic point, a polygon, a route, a signal map, or a vertex set |
| Service continuity support | Optional | Indicates whether an application requires service continuity support |
| EAS list | Optional | List of EASs that provide services for the application client and a service KPI required by the application client |
| EAS ID | Mandatory | EAS identifier |
| Application client service KPI | Optional | KPI required by the AC to receive a service from the EAS |
| ACR mode information | Optional | Correspondence between condition information for triggering an ACR procedure and a functional entity (an AC, an EAS, an EES, or an EEC) that executes the ACR procedure, or correspondence between the identifier of the application client and an ACR method of an application corresponding to the identifier of the application client |

In the case 1, the AC may send the ACR mode information to the EEC. The method procedure shown in FIG. 10 may further include the following steps:
Step 1012: The AC sends the ACR mode information to the EEC.

For example, the ACR mode information sent by the AC to the EEC may be the ACR rule information or the ACR method corresponding to the AC ID.

For example, the AC sends the AC profile including the ACR mode information to the EEC through an EDGE-5 interface.

It should be noted that that the AC sends the ACR mode information to the EEC may be that the AC actively sends a message carrying the ACR mode information (for example, an EDGE-5 interface message) to the EEC, or the EEC implicitly or explicitly subscribes to the ACR mode information, and after obtaining the ACR mode information, the AC may send a notification message to the EEC.

In another possible implementation, when the EEC does not implicitly or explicitly subscribe to the notification message, after obtaining the ACR mode information, the AC may notify the EEC to implicitly or explicitly subscribe to the ACR mode information. After the EEC subscribes to the ACR mode information, an ACR mode information notification is sent to the EEC.

For example, in an implementation in which the EEC displays the subscribed ACR mode information, the EEC subscribes to the ACR mode information, and requests the AC to send the ACR mode information to the EEC after the AC obtains the ACR mode information.

For example, in an implementation in which the EEC implicitly subscribes to the ACR mode information, when the EEC subscribes to ACR-related notification information such as an ACR information notification from the AC, the EEC requests the AC to send, to the EEC, the ACR mode information carried in the ACR-related notification information such as an ACR information notification after the AC obtains the ACR mode information.

Case 2: The AC receives the ACR mode information from the EEC.

For example, the AC receives the ACR mode information from the EEC through an EDGE-5 interface.

For example, the ACR mode information received by the AC from the EEC through the EDGE-5 interface may be the ACR rule information or the ACR method corresponding to the AC ID. In the case 2, step 1010 is understood as step 1021 shown in FIG. 10. The AC receives the ACR mode information from the EEC.

It should be noted that that the EEC sends the ACR mode information to the AC may be that the EEC actively sends a message carrying the ACR mode information (for example, an EDGE-5 interface message) to the AC, or the AC implicitly or explicitly subscribes to the ACR mode information in a procedure in which the AC reports information, and after obtaining the ACR mode information, the EEC may send a notification message to the AC.

In another possible implementation, when the AC does not implicitly or explicitly subscribe to the notification message, after obtaining the ACR mode information, the EEC may notify the AC to implicitly or explicitly subscribe to the ACR mode information. After the AC subscribes to the ACR mode information, an ACR mode information notification is sent to the AC.

For example, in an implementation in which the AC displays the subscribed ACR mode information, the AC subscribes to the ACR mode information, and requests the EEC to send the ACR mode information to the AC after the EEC obtains the ACR mode information.

For example, in an implementation in which the AC implicitly subscribes to the ACR mode information, when the AC subscribes to ACR-related notification information such as an ACR information notification from the EES, the AC requests the EEC to send, to the AC, the ACR mode information carried in the ACR-related notification information such as an ACR information notification after the EEC obtains the ACR mode information.

In the case 2, the EEC obtains the ACR mode information. The case 2 is different from step 1012 shown in the case 1. In the case 2, the EEC does not obtain the ACR mode information from the AC (it can be understood that if the ACR mode information is obtained from the AC, the ACR mode information does not need to be sent to the AC). A possible manner in which the EEC obtains the ACR mode information is described in detail below with reference to FIG. 11(a). Details are not described herein.

Further, when the second condition is met, the AC executes the ACR procedure for the second application of the at least one application. The method procedure shown in FIG. 10 may further include the following steps:
Step 1020: The AC executes the ACR procedure for the second application in the at least one application.

For example, when the AC determines that the second condition is met (for example, when the ACR rule information indicates that the application type is the type #1, the functional entity that executes ACR is the AC; or for another example, when the ACR mode information indicates that the identifier of the application is the AC ID #1, the method for executing ACR is initiation by EEC using regular EAS discovery), the AC executes the ACR procedure for the second application in the at least one application (for example, the second application is an application of the type #1).

For example, the AC executes the ACR procedure according to the selected ACR method.

Specifically, that the AC determines whether the second condition is met may be that the AC monitors an application type of an application whose context needs to be relocated, a type of an event that triggers context relocation, or an identifier of an application whose context needs to be relocated. For example, when the second condition is that the AC triggers to execute ACR when a quality of experience (quality of experience, QoE) degradation event occurs, after the AC detects the QoE degradation event, the AC executes ACR. Specifically, the AC may invoke an application programming interface (application programming interface, API) provided by the EES to complete ACR, for example, a procedure corresponding to FIG. 2.

For example, the AC executes the ACR procedure according to the ACR method corresponding to the AC ID, and/or executes the ACR method corresponding to the AC ID, and further executes related steps in the ACR method.

It should be noted that, in this embodiment of this application, a manner in which the functional entity (the AC, the EAS, the EES, or the EEC) executes the ACR procedure is not limited. For details, refer to descriptions in the conventional technology (as shown in procedures in FIG. 2 and FIG. 5 to FIG. 9). This embodiment of this application mainly relates to a manner of determining, based on the ACR mode information, an ACR procedure that needs to be executed by the functional entity or an ACR method corresponding to ACR executed by the functional entity. For processing after the ACR procedure or the ACR method is determined, refer to a current execution manner.

In addition, it should be noted that executing an ACR procedure in this embodiment of this application may be understood as initiating an ACR procedure.

For ease of understanding, the following describes, with reference to FIG. 11(a), a manner in which an EEC obtains ACR mode information. FIG. 11(a) is a schematic flowchart of another context relocation method according to this application.

Specifically, it can be learned from FIG. 11(a) that that the EEC obtains the ACR mode information includes the following cases:
Case 1: The EEC receives the ACR mode information from an AC. The case 1 includes the following step:
Step 1110: The EEC receives the ACR mode information from the AC.

For details, refer to step 1012 shown in FIG. 10. Details are not described again.

Case 2: The EEC receives the ACR mode information from an EES. The case 2 includes the following steps:
Step 1120: The EES obtains the ACR mode information.

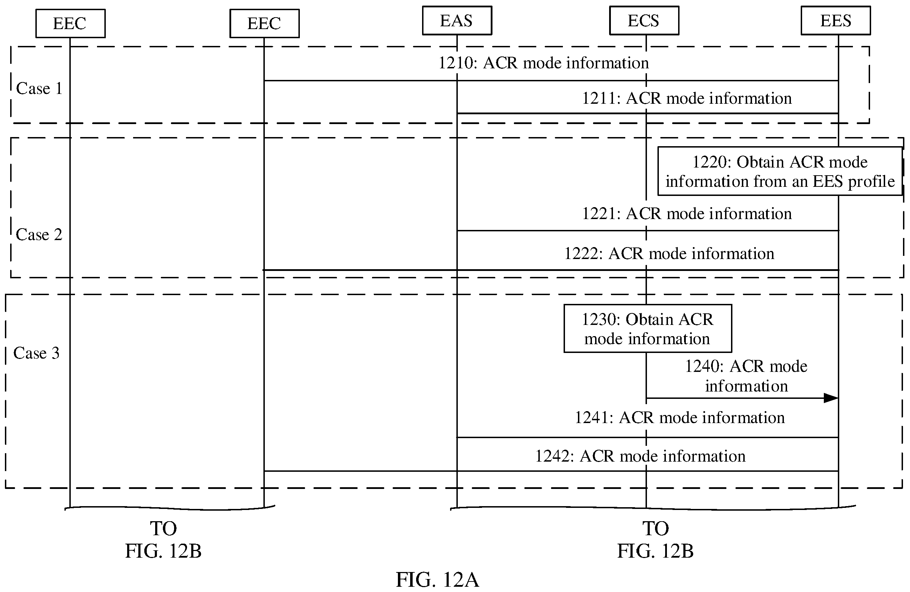

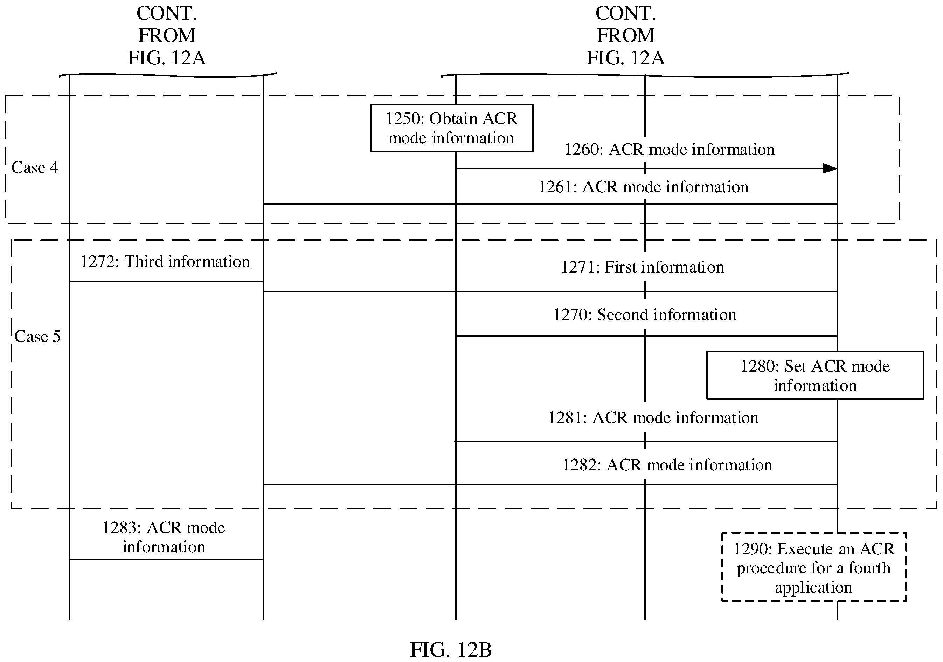

A possible manner in which the EES obtains the ACR mode information is described in detail below with reference to FIG. 12A and FIG. 12B. Details are not described herein.

Step 1130: The EES sends the ACR mode information to the EEC.

For example, the ACR mode information sent by the EES to the EEC may be ACR rule information or an ACR method corresponding to an AC ID.

It should be noted that that the EES sends the ACR mode information to the EEC may be that the EES actively sends a message carrying the ACR mode information (for example, an EAS discovery response message or an EAS discovery update response message, an EEC registration response message, an EEC registration update response message, or an EAS discovery notification message, or a message related to an EDGE-1) to the EEC, or the EES implicitly or explicitly subscribes to the ACR mode information in a procedure in which the EEC reports information, and after obtaining the ACR mode information, the EES may send a notification message to the EEC.

In another possible implementation, when the EEC does not implicitly or explicitly subscribe to the notification message, after obtaining the ACR mode information, the EES may notify the EEC to implicitly or explicitly subscribe to the ACR mode information. After the EEC subscribes to the ACR mode information, an ACR mode information notification is sent to the EEC.

For example, in an implementation in which the EEC displays the subscribed ACR mode information, the EEC subscribes to the ACR mode information, and requests the EES to send the ACR mode information to the EEC after the EES obtains the ACR mode information.

For example, in an implementation in which the EEC implicitly subscribes to the ACR mode information, when the EEC subscribes to ACR-related notification information such as an ACR information notification from the EES, the EEC requests the EES to send, to the EEC, the ACR mode information carried in the ACR-related notification information such as an ACR information notification after the EES obtains the ACR mode information.

In a possible implementation, in the EEC registration procedure shown in (b) in FIG. 3, the ACR mode information may be sent to the EEC in the EEC registration procedure.

For example, the EES sends the EEC registration response message or the EEC registration update response message to the EEC, where the EEC registration response message or the EEC registration update response message carries the ACR mode information. Information elements carried in the EEC registration response message or the EEC registration update response message are shown in Table 9.

**Table 9**

| Information element | Status | Description |
|---|---|---|
| Successful response (Successful response) | Optional | Indicates that a registration request succeeds |
| Registration ID (Registration ID) | Mandatory | Identifier of EEC registration |
| Expiration time (Expiration time) | Mandatory | Expiration time of registration, where registration needs to be updated before the expiration time, to stay in an active registration status |
| EEC context ID (EEC context ID) | Optional | Identifier of available EEC context information of an EES performing registration |
| ACR mode information | Optional | Correspondence between condition information for triggering an ACR procedure and a functional entity (an AC, an EAS, an EES, or an EEC) that executes the ACR procedure, or correspondence between the identifier of the application client and an ACR method of an application corresponding to the identifier of the application client |
| Failure response (Failure response) | Optional | Indicates that a registration request fails |
| Cause (Cause) | Mandatory | Provides a cause why the registration request fails |

Optionally, before the EES sends the EEC registration response message to the EEC, the EEC sends an EEC registration request message to the EES.

Alternatively, before the EES sends the EEC registration update response message to the EEC, the EEC sends an EEC registration update request message to the EES.

In another possible implementation, in the regular EAS discovery procedure shown in (a) in FIG. 4, the ACR mode information may be sent to the EEC in the regular EAS discovery procedure.

For example, the EES sends the EAS discovery response message or the EAS discovery update response message to the EEC, where the EAS discovery response message or the EAS discovery update response message carries the ACR mode information. Information elements carried in the EAS discovery response message are shown in Table 10.

**Table 10**

| Information element | Status | Description |
|---|---|---|
| Successful response | Optional | Indicates that an EAS discovery request succeeds |
| Discovered EAS list | Optional | Discovered EAS list |
| EAS profile | Mandatory | EAS profile |
| Lifecycle | Optional | Interval or duration in which an information element of the EAS profile is valid and cached in an EEC (for example, a time to live value for an EAS endpoint) |
| ACR mode information | Optional | Correspondence between condition information for triggering an ACR procedure and a functional entity (an AC, an EAS, an EES, or an EEC) that executes the ACR procedure, or correspondence between an identifier of an application client and an ACR method of an application corresponding to the identifier of the application client |
| Failure response | Optional | Indicates that an EAS discovery request fails |
| Cause | Optional | Cause why the EAS discovery request fails |

Optionally, before the EES sends the EAS discovery response message to the EEC, the EEC sends an EAS discovery subscription update request message to the EES.

Optional, before the EES sends the EAS discovery update response message to the EEC, the EEC sends an EAS discovery subscription update request message to the EES.

Case 3: The EEC receives the ACR mode information from an ECS. The case 3 includes the following steps:
Step 1140: The ECS obtains the ACR mode information.

A possible manner in which the ECS obtains the ACR mode information is described in detail below with reference to FIG. 11(b). Details are not described herein.

Step 1150: The ECS sends the ACR mode information to the EEC.

It should be noted that that the ECS sends the ACR mode information to the EEC may be that the ECS actively sends a message carrying the ACR mode information (for example, a service provisioning (update) response message) to the EEC, or the ECS implicitly or explicitly subscribes to the ACR mode information in a procedure in which the EEC reports information, and after obtaining the ACR mode information, the ECS may send a notification message to the EEC.

In another possible implementation, when the EEC does not implicitly or explicitly subscribe to the notification message, after obtaining the ACR mode information, the ECS may notify the EEC to implicitly or explicitly subscribe to the ACR mode information. After the EEC subscribes to the ACR mode information, an ACR mode information notification is sent to the EEC.

For example, in an implementation in which the EEC displays the subscribed ACR mode information, the EEC subscribes to the ACR mode information, and requests the ECS to send the ACR mode information to the EEC after the ECS obtains the ACR mode information.

For example, in an implementation in which the EEC implicitly subscribes to the ACR mode information, when the EEC subscribes to ACR-related notification information such as an ACR information notification from the ECS, the EEC requests the ECS to send, to the EEC, the ACR mode information carried in the ACR-related notification information such as an ACR information notification after the ECS obtains the ACR mode information.

In a possible implementation, in the service provisioning procedure shown in (a) in FIG. 3, the ACR mode information may be sent to the EEC in the service provisioning procedure.

For example, the ECS sends the service provisioning response message to the EEC, and the service provisioning response message carries the ACR mode information. Information elements carried in the service provisioning response message are shown in Table 11.

**Table 11**

| Information element | Status | Description |
|---|---|---|
| Successful response (successful response) | Optional | Indicates that a service provisioning request succeeds |
| List of EDN configuration information (list of EDN configuration information) | Mandatory | EDN list |
| EDN connection information (EDN connection information) | Mandatory | Information required for establishing a connection between UE and an EDN |
| DNN/APN | Mandatory | Name of a data network/access point |
| S-NSSAI | Optional | Information about a network slice |
| EDN topological service area (EDN topological service area) | Optional | Cell ID (Cell ID) list or tracking area identity (tracking area identity, TAI) list, where the EDN serves UEs accessing a core network from these cells |
| EES list (list of edge enabler servers) | Mandatory | EES list of the EDN |
| EES ID | Mandatory | EES identifier |
| EES endpoint (EES endpoint) | Mandatory | Endpoint address of an EES (for example, a uniform resource identifier (uniform resource identifier, URI) and an Internet protocol (Internet protocol, IP) address) |
| EAS ID (edge application server ID) | Optional | EAS ID registered with the EES |
| ECSP information (ECSP info) | Optional | Information about an edge computing service provider |
| EES topological service area (EES topological service area) | Optional | List of IDs or TAIs of a cell served by the EES, where an EEC of UE connected to a core network from a cell that does not belong to this list should not be served by the EES |
| EES geographical service area (EES geographical service area) | Optional | Area served by the EES geographically |
| EES DNAI list (list of EES DNAI(s)) | Optional | DNAI related to the EES/EAS, where the IE is used as a potential location of an application |
| Lifetime | Optional | Duration in which the EDN configuration information is valid and cached in the EEC |
| ACR mode information | Optional | Correspondence between condition information for triggering an ACR procedure and a functional entity (an AC, an EAS, an EES, or an EEC) that executes the ACR procedure, or correspondence between an identifier of an application client and an ACR method of an application corresponding to the identifier of the application client |
| Failure response (failure response) | Optional | Indicates that a service provisioning request fails |
| Cause (cause) | Optional | Indicates that a cause why the service provisioning request fails |

Case 4: The EEC sets the ACR mode information.

For example, in this embodiment of this application, that the ECS sets the ACR mode information may alternatively be setting the ACR mode information based on information reported by the AC, the EEC, the EAS, and the EES. Specifically, the case 4 includes the following steps:
Step 1161: The EEC receives second information from the EAS.

The second information includes ACR capability information supported by the EAS and/or second ACR method request information.

The ACR capability information supported by the EAS indicates an ACR trigger event or an application type corresponding to an ACR procedure that can be executed (or detected) by the EAS, an ACR event that can be detected by the EAS, an application, that can be detected by the EAS, on which ACR is executed, a preferred ACR method or an ACR method supported by the EAS, or a priority of an ACR method corresponding to each AC ID.

The second ACR method request information (which is referred to as a request ACR method or a request ACR scenario) is used to request allocation of the ACR method, and may be used to request to allocate an ACR method or a proposed ACR method to the EAS for each AC, or the EAS carries AC-related information (for example, an AC ID) in the ACR method request information, to request to allocate an ACR method or a proposed ACR method to the EAS based on a required AC.

A specific procedure of sending the second information in this embodiment includes:
The EAS sends the second information to the EES (for example, by using an EAS registration request, an EAS registration update request, a UE location request message, a UE location subscription request message, an ACR management request message, an ACR management subscription request message, an AC information subscription request message, an AC information subscription request message, a UE identification API request message, a UE identification API subscription request message, a QoS session creation request message, a QoS session creation subscription request message, an ACR management event request message, a request message, for example, a subscription request message, corresponding to a subscription related to an EDGE-3, and an ACR management event subscription request message); and the EES sends the second information to the EEC (for example, by using a procedure, for example, EAS discovery EEC registration and EAS discovery subscription, related to an EDGE-1).

In a possible implementation, the EAS may implicitly report the second information.

The EAS subscribes to an ACR management event, including user plane path change (user plane path change), ACR monitoring (ACR monitoring), and ACR facilitation (ACR facilitation), from the EES.

When the EAS subscribes to the user plane path change event and/or the ACR monitoring event, it implicitly indicates that the EAS selects an ACR method of an S-EAS decided ACR scenario (S-EAS decided ACR scenario).

When the EAS subscribes to the ACR facilitation event, it implicitly indicates that the EAS selects an ACR method of S-EES executed ACR (S-EES executed ACR).

For example, when the EAS subscribes to an ACR management event, for example, user plane path change and/or ACR monitoring, used to subscribe to an ACR event or an ACR requirement from the EES, the EAS is notified, and the EAS determines, based on the event, whether to execute the ACR procedure. This case belongs to an implementation of the foregoing implicit indication.

For example, when the EAS subscribes to an ACR event management event, for example, ACR facilitation, used to subscribe to a related notification in the ACR procedure from the EES, the EAS is notified, and the EAS may receive a related event in the ACR procedure. This case belongs to an implementation of the foregoing implicit indication.

Further, when the EAS subscribes to the ACR management event from the EES, the AC ID is optionally carried, and implicitly indicates whether the ACR method selected by the EES for each AC is the ACR method of S-EES executed ACR (S-EES executed ACR) or the ACR method of an S-EAS decided ACR scenario (S-EAS decided ACR scenario).

Step 1162: The EEC receives third information from the AC.

The third information includes ACR capability information supported by the AC and/or third ACR method request information.

The ACR capability information supported by the AC indicates an ACR trigger event or an application type corresponding to an ACR procedure that can be executed (or detected) by the AC, an ACR event that can be detected by the AC, an application, that can be detected by the AC, on which ACR is executed, a preferred ACR method or an ACR method supported by the AC, or a priority of an ACR method corresponding to each AC ID.

The third ACR method request information (which is referred to as a request ACR method or a request ACR scenario) is used to request allocation of the ACR method, and may be used to request to allocate an ACR method or a proposed ACR method to the AC for each AC, or the AC carries AC-related information (for example, an AC ID) in the ACR method request information, to request to allocate an ACR method or a proposed ACR method based on a required AC.

A specific procedure of sending the third information in this embodiment includes:
The AC sends the third information to the EEC (for example, through an EDGE-5 interface).

Step 1163: The EEC receives fourth information from the EES.

The fourth information includes ACR capability information supported by the EES and/or fourth ACR method request information.

The ACR capability information supported by the EES indicates an ACR trigger event or an application type corresponding to an ACR procedure that can be executed (or detected) by the EES, an ACR event that can be detected by the EES, an application, that can be detected by the EES, on which ACR is executed, a preferred ACR method or an ACR method supported by the EES, or a priority of an ACR method corresponding to each AC ID.

The fourth ACR method request information (which is referred to as a request ACR method or a request ACR scenario) is used to request allocation of the ACR method, and may be used to request to allocate an ACR method or a proposed ACR method to the EES for each AC, or the AC carries AC-related information (for example, an AC ID) in the ACR method request information, to request to allocate an ACR method or a proposed ACR method to the EES based on a required AC.

A specific procedure of sending the fourth information in this embodiment includes:
The EES sends the fourth information to the EEC (for example, by using a procedure, for example, EAS discovery EEC registration and EAS discovery subscription, related to an EDGE-1).

Step 1164: The EEC sets the ACR mode information.

The EEC sets an ACR trigger rule based on information reported by the AC, the EES, and the EAS, that is, an event or an application type for allocating required detection to each functional entity (the AC, the EAS, the EES, or the EEC) and executing ACR for an ACR event (UE mobility and an overloaded EAS) or an application type; and/or
sets, based on an ACR method supported by the AC(optionally, a supported ACR method for each AC), an ACR method supported by the EEC(optionally, a supported ACR method for each AC), an ACR method supported by the EES(optionally, a supported ACR method for each AC), and an ACR method supported by the EAS(optionally, a supported ACR method for each AC), an ACR method corresponding to each AC.

For example, for an ACR event type reported by each entity, for example, for an AC #1, the AC supports detection of the UE mobility event, the EEC supports detection of the UE mobility event, the EES supports detection of the UE mobility event and the EAS overload event, and the EAS supports detection of a UE overload event. The EEC may set the ACR method of the application corresponding to the AC to EES executed ACR, S-EES executed ACR. After each entity receives the ACR method of the application corresponding to the AC, the EES performs ACR detection and determining, and another entity executes a required step (a subsequent step is invoked and executed by a related entity) related to the ACR procedure, for example, the EES notifies the EAS to execute application context transmission.

For information, reported by each entity, about the application type or application-related information (for example, the AC ID), for example, for an AC ID #1, the AC supports an ACR method #1 and an ACR method #2, the EEC #1 supports the ACR method #2 and an ACR method #3, the EES supports the ACR method #1 and the ACR method #2, and the EAS supports the ACR method #2 and the ACR method #3. The EEC may set the ACR method of the application corresponding to the AC ID #1 to the ACR method #2, and another entity executes a required step (a subsequent step is invoked and executed by a related entity) related to the ACR procedure.

If the ACR methods supported by the entities violate and conflict with each other, failure indication information may be returned when the ACR mode information is delivered, and a failure cause carried in the failure indication information is that the ACR methods supported by the entities violate and conflict with each other, or the failure indication information further includes information (for example, updated second information and updated third information) re-reported by each entity.

In the case 2, the case 3, and the case 4 shown in FIG. 11(a), after obtaining the ACR mode information, the EEC may send the ACR mode information to the AC. The method procedure shown in FIG. 11(a) further includes the following steps:
Step 1160: The EEC sends the ACR mode information to the AC.

For details, refer to step 1021 shown in FIG. 10. Details are not described again.

Step 1171: The EEC sends the ACR mode information to the EES.

It should be noted that that the EEC sends the ACR mode information to the EES may be that the EEC actively sends a message carrying the ACR mode information (for example, a service provisioning (update) response message) to the EES, or the EEC implicitly or explicitly subscribes to the ACR mode information in a procedure in which the EES reports information, and after obtaining the ACR mode information, the EEC may send a notification message to the EES.

In another possible implementation, when the EES does not implicitly or explicitly subscribe to the notification message, after obtaining the ACR mode information, the EEC may notify the EES to implicitly or explicitly subscribe to the ACR mode information. After the EES subscribes to the ACR mode information, an ACR mode information notification is sent to the EES.

For example, in an implementation in which the EES displays the subscribed ACR mode information, the EES subscribes to the ACR mode information, and requests the EEC to send the ACR mode information to the EES after the EEC obtains the ACR mode information.

For example, in an implementation in which the EES implicitly subscribes to the ACR mode information, when the EES subscribes to ACR-related notification information such as an ACR information notification from the EEC, the EES requests the EEC to send, to the EES, the ACR mode information carried in the ACR-related notification information such as an ACR information notification after the EEC obtains the ACR mode information.

For example, the ACR mode information sent by the EEC to the EES may be the ACR rule information or the ACR method corresponding to the AC ID.

Optionally, the EEC sends the ACR mode information to the EES by using at least one of the EEC registration update request message, an EAS discovery request message, or an EDGE-1 subscription request message.

In a possible implementation, in the EEC registration procedure shown in (b) in FIG. 3, the ACR mode information may be sent to the EES in the EEC registration procedure.

For example, the EEC sends the EEC registration request message to the EES. The EEC registration request message carries AC-related information (for example, the AC ID) (information elements carried in the EEC registration request message are described in Table 1b), and the AC profile includes the ACR mode information (information elements carried in the AC profile are described in Table 8).

In another possible implementation, in the regular EAS discovery procedure shown in (a) in FIG. 4, the ACR mode information may be sent to the EES in the regular EAS discovery procedure.

For example, the EEC sends the EAS discovery request message to the EES. The EAS discovery request message carries an EAS discovery filter (information elements carried in the EAS discovery request message are described in Table 4a), the EAS discovery filter carries the AC profile (information elements carried in the EAS discovery filter are described in Table 5a), and the AC profile includes the ACR mode information (information elements carried in the AC profile are described in Table 8).

It should be understood that after determining the ACR mode information, the EEC may actively initiate sending of the ACR mode information to the EES by using at least one of the EEC registration update request message, the EAS discovery request message, or the EDGE-1 subscription request message. Alternatively, a single request or subscription message carries the foregoing message. A specific bearer message is not limited.

It can be learned from the foregoing that the condition information included in the ACR mode information may indicate the first condition. When the first condition is met, the EEC executes the ACR procedure for the first application in the at least one application. The method procedure shown in FIG. 11(a) may further include the following step:
Step 1170: The EEC executes the ACR procedure for the first application in the at least one application.

For example, when the EEC determines that the first condition is met (for example, when the ACR mode information indicates that the ACR trigger event is the UE mobility, the functional entity that executes ACR is the EEC; or for another example, when the ACR mode information indicates that the identifier of the application is the AC ID #2, the method for executing ACR is EEC executed ACR via T-EES), the EEC executes the ACR procedure for the first application in the at least one application (for example, the ACR procedure of the first application is an ACR procedure when the ACR trigger event is the UE mobility).

Specifically, that the EEC determines whether the first condition is met may be that the EEC monitors an application type of an application whose context needs to be relocated, a type of an event that triggers context relocation, or an identifier of an application whose context needs to be relocated.

For example, the EEC executes the ACR procedure according to the ACR method corresponding to the AC ID, and/or executes the ACR method corresponding to the AC ID, and further executes related steps in the ACR method.

For ease of understanding, the following describes, with reference to FIG. 11(b), a manner in which an ECS obtains ACR mode information. FIG. 11(b) is a schematic flowchart of still another context relocation method according to this application.

Specifically, it can be learned from FIG. 11(b) that that the ECS obtains the ACR mode information includes the following cases:
Case 1: The ECS sets the ACR mode information.

For example, in this embodiment of this application, that the ECS sets the ACR mode information may alternatively be setting the ACR mode information based on capabilities of an AC, an EEC, an EAS, and an EES. Specifically, the case 1 includes the following steps:
Step 1141: The ECS receives second information from the EAS.

The second information includes ACR capability information supported by the EAS and/or ACR method request information.

The ACR capability information supported by the EAS indicates an ACR trigger event or an application type corresponding to an ACR procedure that can be executed (or detected) by the EAS, an ACR event that can be detected by the EAS, an application, that can be detected by the EAS, on which ACR is executed, a preferred ACR method or an ACR method supported by the EAS, or a priority of an ACR method corresponding to each AC ID.

The ACR method request information (which is referred to as a request ACR method or a request ACR scenario) is used to request allocation of an ACR method, and may be used to request to allocate an ACR method or a proposed ACR method to the EES for each AC, or the EAS carries an AC profile in the ACR method request information, to request to allocate an ACR method or a proposed ACR method to the EES based on a required AC.

A specific procedure of sending the second information in this embodiment includes:
The EAS sends the second information to the EES (for example, by using an EAS registration request, an EAS registration update request, a UE location request message, a UE location subscription request message, an ACR management request message, an ACR management subscription request message, an AC information subscription request message, an AC information subscription request message, a UE identification API request message, a UE identification API subscription request message, a QoS session creation request message, a QoS session creation subscription request message, an ACR management event request message, a request message, for example, a subscription request message, corresponding to a subscription related to an EDGE-3, and an ACR management event subscription request message); and the EES sends the second information to the ECS (for example, a service provisioning procedure).

Step 1142: The ECS receives first information from the EEC.

The first information includes at least one of ACR capability information supported by the AC, ACR capability information supported by the EEC, first ACR method request information, or third ACR method request information.

The ACR capability information supported by the AC indicates an ACR trigger event or an application type corresponding to an ACR procedure that can be executed (or detected) by the AC, an ACR event that can be detected by the AC, an application, that can be detected by the AC, on which ACR is executed, a preferred ACR method or an ACR method supported by the AC, or a priority of an ACR method corresponding to each AC ID.

The third ACR method request information (which is referred to as a request ACR method or a request ACR scenario) is used to request allocation of the ACR method, and may be used to request to allocate an ACR method or a proposed ACR method to the AC for each AC, or the AC carries AC-related information (for example, an AC ID) in the ACR method request information, to request to allocate an ACR method or a proposed ACR method based on a required AC.

The ACR capability information supported by the EEC indicates an ACR trigger event or an application type corresponding to an ACR procedure that can be executed (or detected) by the EEC, an ACR event that can be detected by the EEC, an application, that can be detected by the EEC, on which ACR is executed, a preferred ACR method or an ACR method supported by the EEC, or a priority of an ACR method corresponding to each AC ID.

The first ACR method request information (which is referred to as a request ACR method or a request ACR scenario) is used to request allocation of the ACR method, and may be used to request to allocate an ACR method or a proposed ACR method to the EEC for each AC, or the AC carries AC-related information (for example, an AC ID) in the ACR method request information, to request to allocate an ACR method or a proposed ACR method to the EEC based on a required AC.

When the first information includes the ACR capability information supported by the AC and/or the third ACR method request information, the AC sends the AC profile to the EEC through an EDGE-5 interface. The AC profile includes the ACR capability information supported by the AC and/or the third ACR method request information.

A specific procedure of sending the first information in this embodiment includes:
The EEC sends the first information to the ECS (for example, a service provisioning (service provisioning) request message carries the first information).

In a possible implementation, the EEC may implicitly report the first information.

For example, that the first ACR method request information to which the EEC subscribes from the EES includes two types of events may be understood as that the EEC subscribes to two types of ACR events (for example, a target information notification (target information notification) and an ACR complete notification (ACR complete notification)) from the EES.

Subscription of the target information notification is applicable to the ACR method (including an S-EAS decided ACR scenario, S-EES executed ACR, and automated ACR) initiated by the EAS or the EES, that is, an ACR method initiated at a network side.

When the EES or the EAS performs a T-EAS discovery procedure, that is, a target EAS discovery procedure initiated by the EAS or the EES, the EES or the EAS needs to send a discovered target information notification to the EEC. The target information notification includes related information of a selected target EES and related information of a selected target EAS.

The ACR complete notification is applicable to all ACR methods. The EEC subscribes to ACR complete information from the EES (or when the EEC does not subscribe to a notification, for example, the target information notification, related to the ACR procedure, it is implicitly indicated that the EEC does not actively initiate the ACR procedure), and the ACR complete information is used by the network side to notify that ACR is completed (application context relocation is completed, which may further include that application context transmission is completed and/or EEC context transmission is completed). The EES may determine, based on different ACR information to which the EEC subscribes, whether the EEC selects one of three ACR procedures (for example, initiation by EEC using regular EAS discovery, EEC executed ACR via S-EES, and EEC executed ACR via T-EES) executed by the EEC.

Further, the EEC adds the AC ID, and an ACR event target information notification (target information notification) and/or an ACR complete notification (ACR complete notification) corresponding to the AC ID to an ACR information request message, to implicitly indicate whether the ACR method selected by the EES for each AC is the ACR method (an S-EAS decided ACR scenario, S-EES executed ACR, and automated ACR) initiated at the network side or the ACR method (initiation by EEC using regular EAS discovery, EEC executed ACR via S-EES, and EEC executed ACR via T-EES) initiated at the EEC side.

Step 1143: The ECS receives fifth information from the EES.

The fifth information includes at least one of ACR capability information supported by the EES, the ACR capability information supported by the EAS, fourth ACR method request information, or second ACR method request information.

The ACR capability information supported by the EAS indicates the ACR trigger event or the application type corresponding to the ACR procedure that can be executed (or detected) by the EAS, the ACR event that can be detected by the EAS, the application, that can be detected by the EAS, on which ACR is executed, the preferred ACR method or the ACR method supported by the EAS, or the priority of the ACR method corresponding to each AC ID.

The second ACR method request information (which is referred to as a request ACR method or a request ACR scenario) is used to request allocation of the ACR method. The EES may be requested to allocate an ACR method or a proposed ACR method to the EAS for each AC, or the EAS carries AC-related information (for example, an AC ID) in the ACR method request information, to request the EES to allocate an ACR method or a proposed ACR method to the EAS based on a required AC.

The ACR capability information supported by the EES indicates an ACR trigger event or an application type corresponding to an ACR procedure that can be executed (or detected) by the EES, an ACR event that can be detected by the EES, an application, that can be detected by the EES, on which ACR is executed, a preferred ACR method or an ACR method supported by the EES, or a priority of an ACR method corresponding to each AC ID.

The fourth ACR method request information (which is referred to as a request ACR method or a request ACR scenario) is used to request allocation of the ACR method, and may be used to request to allocate an ACR method or a proposed ACR method to the EES for each AC, or the AC carries AC-related information (for example, an AC ID) in the ACR method request information, to request to allocate an ACR method or a proposed ACR method to the EES based on a required AC.

When the fifth information includes the ACR capability information supported by the EAS and/or the second ACR method request information, the EAS sends a message (for example, by using an EAS registration response message, an EAS registration update response message, a UE location response message, a UE location notification message, an ACR management response message, an ACR management notification message, an AC information subscription response message, an AC information notification message, a UE identification API response message, a UE identification API notification message, a QoS session creation response message, a QoS session creation notification message, an ACR management event response message, a response message, for example, a notification message, corresponding to a subscription related to an EDGE-3, and an ACR management event notification message) to the EES. The message includes the ACR capability information supported by the EAS and/or the second ACR method request information.

A specific procedure of sending the fifth information in this embodiment includes:
The EES sends the fifth information to the ECS (for example, a service provisioning procedure).

Step 1144: The ECS sets the ACR mode information.

The ECS sets an ACR trigger rule based on information reported by the AC, the EAS, the EEC, and the EES, that is, an event or an application type for allocating required detection to each functional entity (the AC, the EAS, the EES, or the EEC) and executing ACR for an ACR event (UE mobility and an overloaded EAS) or an application type; and/or
sets, based on supported ACR methods or preferred ACR methods reported by the AC, the EAS, the EEC, and the EES, an ACR method corresponding to each AC.

For example, for an ACR event type reported by each entity, for example, for an AC #1, the AC supports detection of the UE mobility event, the EEC supports detection of the UE mobility event, the EES supports detection of the UE mobility event and the EAS overload event, and the EAS supports detection of a UE overload event. The ECS may set the ACR method of the application corresponding to the AC to EES executed ACR, S-EES executed ACR. After each entity receives the ACR method of the application corresponding to the AC, the EES performs ACR detection and determining, and another entity executes a required step (a subsequent step is invoked and executed by a related entity) related to the ACR procedure, for example, the EES notifies the EAS to execute application context transmission.

For information, reported by each entity, about the application type or application-related information (for example, the AC ID), for example, for an AC ID #1, the AC supports an ACR method #1 and an ACR method #2, the EEC #1 supports the ACR method #2 and an ACR method #3, the EES supports the ACR method #1 and the ACR method #2, and the EAS supports the ACR method #2 and the ACR method #3. The ECS may set the ACR method of the application corresponding to the AC ID #1 to the ACR method #2, and another entity executes a required step (a subsequent step is invoked and executed by a related entity) related to the ACR procedure.

If the ACR methods supported by the entities violate and conflict with each other, failure indication information may be returned when the ACR mode information is delivered, and a failure cause carried in the failure indication information is that the ACR methods supported by the entities violate and conflict with each other, or the failure indication information further includes information (for example, updated first information and updated fifth information) re-reported by each entity.

Case 2: The ECS sets the ACR trigger rule.

Step 1145: The ECS allocates required detection to each functional entity (the AC, the EAS, the EES, or the EEC) and executes ACR for an ACR event (for example, UE mobility and an overloaded EAS) or an application type.

For example, the ECS sets an ACR method corresponding to each AC (for example, an AC ID).

In this embodiment of this application, a manner in which the ECS sets the ACR mode information is not limited. The ACR mode information may be set based on a historical ACR procedure or a capability of each functional entity.

Specifically, after obtaining the ACR mode information, the ECS needs to send the ACR mode information to another functional entity. FIG. 11(b) further includes the following steps:
Step 1146: The ECS sends the ACR mode information to the EEC.

For details, refer to step 1150. Details are not described again.

Step 1147: The ECS sends the ACR mode information to the EES.

It should be noted that that the ECS sends the ACR mode information to the EES may be that the ECS actively sends a message carrying the ACR mode information (for example, an EES registration (update) response message) to the EES, or the ECS implicitly or explicitly subscribes to the ACR mode information in a procedure in which the EES reports information, and after obtaining the ACR mode information, the ECS may send a notification message to the EES.

In another possible implementation, when the EES does not implicitly or explicitly subscribe to the notification message, after obtaining the ACR mode information, the ECS may notify the EES to implicitly or explicitly subscribe to the ACR mode information. After the EES subscribes to the ACR mode information, an ACR mode information notification is sent to the EES.

For example, in an implementation in which the EES displays the subscribed ACR mode information, the EES subscribes to the ACR mode information, and requests the ECS to send the ACR mode information to the EES after the ECS obtains the ACR mode information.

For example, in an implementation in which the EES implicitly subscribes to the ACR mode information, when the EES subscribes to ACR-related notification information such as an ACR information notification from the ECS, the EES requests the ECS to send, to the EES, the ACR mode information carried in the ACR-related notification information such as an ACR information notification after the ECS obtains the ACR mode information.

For example, the ECS sends the EES registration response information to the EES, where the EES registration response information includes the ACR mode information.

Step 1148: The EES sends the ACR mode information to the EAS.

It should be noted that that the EES sends the ACR mode information to the EAS may be that the EES actively sends a message carrying the ACR mode information (for example, an EAS registration (update) response message, an EAS registration response message, an EAS registration update response message, a UE location response message, a UE location notification message, an ACR management response message, an ACR management notification message, an AC information subscription response message, an AC information notification message, a UE identification API response message, a UE identification API notification message, a QoS session creation response message, a QoS session creation notification message, an ACR management event response message, a response message, for example, a notification message, corresponding to a subscription related to an EDGE-3, and an ACR management event notification message) to the EAS, or the EAS implicitly or explicitly subscribes to the ACR mode information in a procedure in which the EAS reports information, and after obtaining the ACR mode information, the EES may send a notification message to the EAS.

In another possible implementation, when the EAS does not implicitly or explicitly subscribe to the notification message, after obtaining the ACR mode information, the EES may notify the EAS to subscribe to the ACR mode information. After the EAS subscribes to the mode information, an ACR mode information notification is sent to the EAS.

For example, in an implementation in which the EAS displays the subscribed ACR mode information, the EAS subscribes to the ACR mode information, and requests the EES to send the ACR mode information to the EAS after the EES obtains the ACR mode information.

For example, in an implementation in which the EAS implicitly subscribes to the ACR mode information, when the EAS subscribes to ACR-related notification information such as an ACR information notification from the EES, the EAS requests the EES to send, to the EAS, the ACR mode information carried in the ACR-related notification information such as an ACR information notification after the EES obtains the ACR mode information.

FIG. 12A and FIG. 12B are a schematic flowchart of still another context relocation method according to this application.

Specifically, it can be learned from FIG. 12A and FIG. 12B that that an EES obtains ACR mode information includes the following cases:
Case 1: The EES receives the ACR mode information from an EEC. The case 1 includes the following steps:
Step 1210: The EES receives the ACR mode information from the EEC.

For details, refer to step 1171. Details are not described again.

In the case 1 shown in FIG. 12A and FIG. 12B, after obtaining the ACR mode information, the EES may send the ACR mode information to an EAS. The method procedure shown in FIG. 12A and FIG. 12B further includes the following step:
Step 1211: The EES sends the ACR mode information to the EAS.

For example, the ACR mode information sent by the EES to the EAS may be ACR rule information or an ACR method corresponding to an AC ID.

It should be noted that that the EES sends the ACR mode information to the EAS may be that the EES actively sends a message carrying the ACR mode information (for example, an EAS registration response message, an EAS registration update response message, a UE location response message, a UE location notification message, an ACR management response message, an ACR management notification message, an AC information subscription response message, an AC information notification message, a UE identification API response message, a UE identification API notification message, a QoS session creation response message, a QoS session creation notification message, an ACR management event response message, a response message, for example, a notification message, corresponding to a subscription related to an EDGE-3, an ACR management event notification message, and a service provisioning (update) response message) to the EAS, or the EAS implicitly or explicitly subscribes to the ACR mode information in a procedure in which the EAS reports information, and after obtaining the ACR mode information, the EES may send a notification message to the EAS.

In another possible implementation, when the EAS does not implicitly or explicitly subscribe to the notification message, after obtaining the ACR mode information, the EES may notify the EEC to implicitly or explicitly subscribe to the ACR mode information. After the EAS subscribes to the ACR mode information, an ACR mode information notification is sent to the EAS.

For example, in an implementation in which the EAS displays the subscribed ACR mode information, the EAS subscribes to the ACR mode information, and requests the EES to send the ACR mode information to the EAS after the EES obtains the ACR mode information.

For example, in an implementation in which the EAS implicitly subscribes to the ACR mode information, when the EAS subscribes to ACR-related notification information such as an ACR information notification from the EES, the EAS requests the EES to send, to the EAS, the ACR mode information carried in the ACR-related notification information such as an ACR information notification after the EES obtains the ACR mode information.

In a possible implementation, in the EAS registration procedure shown in (c) in FIG. 3, the ACR mode information may be sent to the EAS in the EAS registration procedure.

For example, the EES sends the EAS registration response message or the EAS registration update response message to the EAS, where the EAS registration response message or the EAS registration update response message carries the ACR mode information. Information elements carried in the EAS registration response message or the EAS registration update response message are shown in Table 12.

**Table 12**

| Information element | Status | Description |
|---|---|---|
| Successful response (Successful response) | Optional | Indicates that a registration request succeeds |
| Registration ID (Registration ID) | Mandatory | Identifier of registration |
| Expiration time (Expiration time) | Mandatory | Expiration time of registration, where registration needs to be updated before the expiration time, to stay in an active registration status |
| Failure response (Failure response) | Optional | Indicates that a registration request fails |
| Cause (Cause) | Mandatory | Provides a cause why the registration request fails |
| ACR mode information | Optional | Correspondence between condition information for triggering an ACR procedure and a functional entity (an AC, an EAS, an EES, or an EEC) that executes the ACR procedure, or correspondence between the identifier of the application client and an ACR method of an application corresponding to the identifier of the application client |

Optionally, before the EES sends the EAS registration response message to the EAS, the EAS sends an EAS registration request message to the EES.

Alternatively, before the EES sends the EAS registration update response message to the EAS, the EAS sends an EAS registration update request message to the EES.

In another possible implementation, in the AC information subscription procedure shown in (b) in FIG. 4, the ACR mode information may be sent to the EAS in the AC information subscription procedure.

For example, the EES sends an AC information subscription response message to the EAS, and the AC information subscription response message carries the ACR mode information.

In still another possible implementation, in the AC information notification procedure shown in (c) in FIG. 4, the ACR mode information may be sent to the EAS in the AC information notification procedure.

For example, the EES sends an AC information notification message to the EAS. The AC information notification message carries AC-related information (for example, the AC ID) (information elements carried in the AC information notification message are described in Table 4c), and an AC profile includes the ACR mode information (information elements carried in the AC profile are described in Table 8).

For another example, the EES sends an AC information notification message to the EAS. Information elements carried in the AC information notification message are shown in the following table:

| Information element | Status | Description |
|---|---|---|
| Subscription identifier (Subscription Identifier) | Mandatory | Subscription identifier used to generate a notification |
| List of clients (List of clients) | Optional | List of clients obtained through matching based on a given filter condition |
| AC profile (AC Profile(s)) | Mandatory | Profile of an AC |
| UE identifier (UE ID(s)) | Optional | UE identifier of UE of a home AC |
| UE location (UE location(s)) | Optional | Location of the UE of the home AC |
| ACR mode information | Optional | Correspondence between condition information for triggering an ACR procedure and a functional entity (an AC, an EAS, an EES, or an EEC) that executes the ACR procedure, or correspondence between the identifier of the application client and an ACR method of an application corresponding to the identifier of the application client |

Case 2: The EES obtains the ACR mode information from an EES profile (EES profile) in the EES. In other words, the EES determines the ACR mode information from the EES profile.

For example, the ACR mode information is preconfigured in the EES profile.

In the case 2, that the EES obtains the ACR mode information includes step S1220 shown in FIG. 12A and FIG. 12B. The EES obtains the ACR mode information from the EES profile in the EES.

It may be understood that the ACR mode information is predefined in the EES profile. In the case 2, information elements that may be included in the EES profile are shown in Table 13.

**Table 13**

| Information element | Status | Description |
|---|---|---|
| EES ID | Mandatory | EES identifier |
| EES endpoint (EES Endpoint) information | Mandatory | Information (for example, a URI, an FQDN, and an IP address) about an endpoint used to communicate with an EES, where the information is provided to an EEC to connect to the EES |
| EASIDs | Mandatory | List of EAS IDs registered with the EES |
| EES provider identifier (EES Provider Identifier) | Optional | Identifier of an EES provider (for example, an ECSP) |
| EES topological service area (EES Topological Service Area) | Optional | List of IDs (or TAIs) of a cell served by the EES, where an EEC of UE connected to a core network from a cell that does not belong to this list should not be served by the EES |
| EES geographical service area (EES Geographical Service Area) | Optional | Area served by the EES geographically |
| List of EES/EAS DNAIs (List of EES/EAS DNAI(s)) | Optional | DNAI related to the EES/EAS |
| ACR mode information | Optional | Correspondence between condition information for triggering an ACR procedure and a functional entity (an AC, an EAS, an EES, or an EEC) that executes the ACR procedure, or correspondence between the identifier of the application client and an ACR method of an application corresponding to the identifier of the application client |

In the case 2 shown in FIG. 12A and FIG. 12B, after obtaining the ACR mode information, the EES may send the ACR mode information to the EAS and/or the EEC. Specifically, a determined ACR method may be sent to the EAS and/or the EEC. The method procedure shown in FIG. 12A and FIG. 12B further includes the following steps:
Step 1221: The EES sends the ACR mode information to the EAS.

For details, refer to step 1211. Details are not described again.

Step 1222: The EES sends the ACR mode information to the EEC.

For details, refer to step 1130 shown in FIG. 11(a) and FIG. 11(b). Details are not described again.

Case 3: The EES receives the ACR mode information from the ECS. The case 3 includes the following steps:
Step 1230: The ECS obtains the ACR mode information.

For details, refer to step 1140 shown in FIG. 11(a). Details are not described again.

Step 1240: The ECS sends the ACR mode information to the EES.

For details, refer to step 1147 shown in FIG. 11(b). Details are not described again.

In the case 3 shown in FIG. 12A and FIG. 12B, after obtaining the ACR mode information, the EES may send the ACR mode information to the EAS and/or the EEC. The method procedure shown in FIG. 12A and FIG. 12B further includes the following steps:
Step 1241: The EES sends the ACR mode information to the EAS.

For details, refer to step 1211. Details are not described again.

Step 1242: The EES sends the ACR mode information to the EEC.

For details, refer to step 1130 shown in FIG. 11(a) and FIG. 11(b). Details are not described again.

Case 4: The EES receives the ACR mode information from the EAS. The case 4 includes the following steps:
Step 1250: The EAS obtains the ACR mode information.

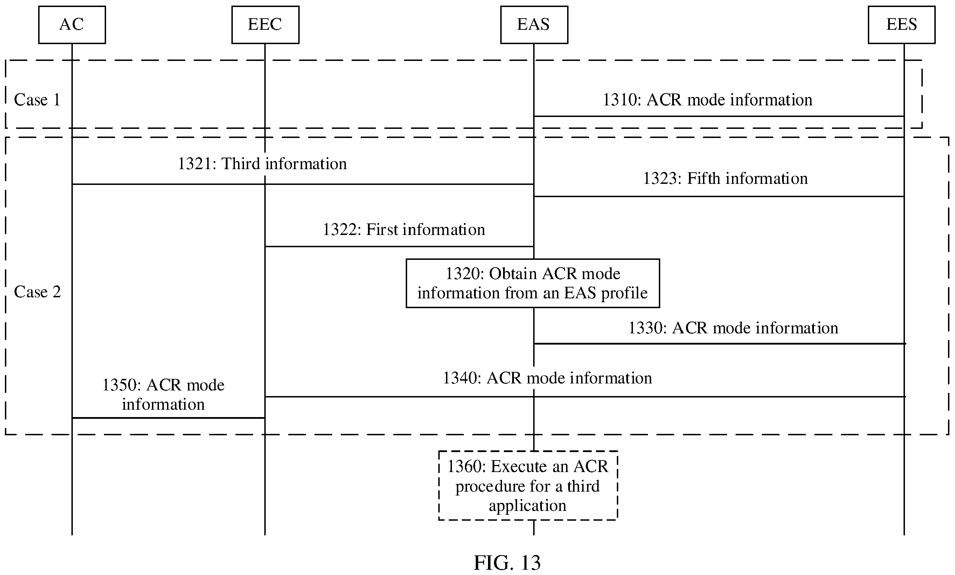

A possible manner in which the EAS obtains the ACR mode information is described in detail below with reference to FIG. 13. Details are not described herein.

Step 1260: The EAS sends the ACR mode information to the EES.

It should be noted that that the EAS sends the ACR mode information to the EES may be that the EAS actively sends a message carrying the ACR mode information (for example, an EAS registration request, an EAS registration update request, a UE location request message, a UE location subscription request message, an ACR management request message, an ACR management subscription request message, an AC information subscription request message, an AC information subscription request message, a UE identification API request message, a UE identification API subscription request message, a QoS session creation request message, a QoS session creation subscription request message, an ACR management event request message, a request message, for example, a subscription request message, corresponding to a subscription related to an EDGE-3, and a request message or a subscription request, for example, a subscription request message, corresponding to a subscription related to an EDGE-3) to the EES, or the EES implicitly or explicitly subscribes to the ACR mode information in a procedure in which the EES reports information, and after obtaining the ACR mode information, the EAS may send a notification message to the EES.

In another possible implementation, when the EES does not implicitly or explicitly subscribe to the notification message, after obtaining the ACR mode information, the EAS may notify the EES to implicitly or explicitly subscribe to the ACR mode information. After the EES subscribes to the ACR mode information, an ACR mode information notification is sent to the EES.

For example, in an implementation in which the EES displays the subscribed ACR mode information, the EES subscribes to the ACR mode information, and requests the EAS to send the ACR mode information to the EES after the EAS obtains the ACR mode information.

For example, in an implementation in which the EES implicitly subscribes to the ACR mode information, when the EES subscribes to ACR-related notification information such as an ACR information notification from the EAS, the EES requests the EAS to send, to the EES, the ACR mode information carried in the ACR-related notification information such as an ACR information notification after the EAS obtains the ACR mode information.

In a possible implementation, in the EAS registration procedure shown in (c) in FIG. 3, the ACR mode information may be sent to the EES in the EAS registration procedure.

For example, the EAS sends an EAS registration request message to the EES, and the EAS registration request message carries the ACR mode information.

In another possible implementation, in the AC information subscription procedure shown in (b) in FIG. 4, the ACR mode information may be sent to the EES in the AC information subscription procedure.

For example, the EAS sends an AC information subscription request message to the EES, and the AC information subscription request message carries the ACR mode information.

In the case 4 shown in FIG. 12A and FIG. 12B, after obtaining the ACR mode information, the EES may send the ACR mode information to the EEC. The method procedure shown in FIG. 12A and FIG. 12B further includes the following step:
Step 1261: The EES sends the ACR mode information to the EEC.

For details, refer to step 1130 shown in FIG. 11(a) and FIG. 11(b). Details are not described again.

Case 5: The EES sets the ACR mode information.

For example, in this embodiment of this application, that the EES sets the ACR mode information may alternatively be setting the ACR mode information based on information reported by the AC, the EEC, and the EAS. Specifically, the step includes:
Step 1270: The EES receives second information from the EAS.

The second information includes ACR capability information supported by the EAS and/or second ACR method request information.

The ACR capability information supported by the EAS indicates an ACR trigger event or an application type corresponding to an ACR procedure that can be executed (or detected) by the EAS, an ACR event that can be detected by the EAS, an application, that can be detected by the EAS, on which ACR is executed, a preferred ACR method or an ACR method supported by the EAS, or a priority of an ACR method corresponding to each AC ID.

The second ACR method request information (which is referred to as a request ACR method or a request ACR scenario) is used to request allocation of the ACR method, and may be used to request to allocate an ACR method or a proposed ACR method to the EAS for each AC, or the EAS carries AC-related information (for example, an AC ID) in the ACR method request information, to request to allocate an ACR method or a proposed ACR method to the EAS based on a required AC.

A specific procedure of sending the second information in this embodiment includes:
The EAS sends the second information to the EES (for example, by using an EAS registration request, an EAS registration update request, a UE location request message, a UE location subscription request message, an ACR management request message, an ACR management subscription request message, an AC information subscription request message, an AC information subscription request message, a UE identification API request message, a UE identification API subscription request message, a QoS session creation request message, a QoS session creation subscription request message, an ACR management event request message, a request message, for example, a subscription request message, corresponding to a subscription related to an EDGE-3, and an ACR management event subscription request message).

In a possible implementation, in the EAS registration procedure shown in (c) in FIG. 3, the ACR capability information supported by the EAS may be sent to the EES in the EAS registration procedure.

For example, the EAS sends the EAS registration request message or the EAS registration update request message to the EES, where the EAS registration request message or the EAS registration update request message carries the ACR capability information supported by the EAS.

In another possible implementation, in the AC information subscription procedure shown in (b) in FIG. 4, the ACR capability information supported by the EAS may be sent to the EES in the AC information subscription procedure.

For example, the EAS sends the AC information subscription request message to the EES, and the AC information subscription request message carries the ACR capability information supported by the EAS.

Step 1271: The EES receives first information from the EEC.

The first information includes at least one of ACR capability information supported by the AC, ACR capability information supported by the EEC, first ACR method request information, or third ACR method request information.

The ACR capability information supported by the AC indicates an ACR trigger event or an application type corresponding to an ACR procedure that can be executed (or detected) by the AC, an ACR event that can be detected by the AC, an application, that can be detected by the AC, on which ACR is executed, a preferred ACR method or an ACR method supported by the AC, or a priority of an ACR method corresponding to each AC ID.

The third ACR method request information (which is referred to as a request ACR method or a request ACR scenario) is used to request allocation of the ACR method, and may be used to request to allocate an ACR method or a proposed ACR method to the AC for each AC, or the AC carries AC-related information (for example, an AC ID) in the ACR method request information, to request to allocate an ACR method or a proposed ACR method based on a required AC.

The ACR capability information supported by the EEC indicates an ACR trigger event or an application type corresponding to an ACR procedure that can be executed (or detected) by the EEC, an ACR event that can be detected by the EEC, an application, that can be detected by the EEC, on which ACR is executed, a preferred ACR method or an ACR method supported by the EEC, or a priority of an ACR method corresponding to each AC ID.

The first ACR method request information (which is referred to as a request ACR method or a request ACR scenario) is used to request allocation of the ACR method, and may be used to request to allocate an ACR method or a proposed ACR method to the EEC for each AC, or the AC carries AC-related information (for example, an AC ID) in the ACR method request information, to request to allocate an ACR method or a proposed ACR method to the EEC based on a required AC.

When the first information includes the ACR capability information supported by the AC and/or the third ACR method request information, the AC sends the AC profile to the EEC through an EDGE-5 interface. The AC profile includes the ACR capability information supported by the AC and/or the third ACR method request information.

A specific procedure of sending the first information in this embodiment includes:
The EES sends the first information to the EEC (for example, by using a procedure, for example, EAS discovery EEC registration and EAS discovery subscription, related to an EDGE-1).

In a possible implementation, in the EEC registration procedure shown in (b) in FIG. 3, the first information may be sent to the EES in the EEC registration procedure.

For example, the EEC sends an EEC registration request message to the EES, and the EEC registration request message carries the first information.

In another possible implementation, in the regular EAS discovery procedure shown in (a) in FIG. 4, the first information may be sent to the EES in the regular EAS discovery procedure.

In another possible implementation, in the EAS discovery subscription procedure shown in (a) in FIG. 4, the first information may be sent to the EES in an EAS discovery subscription request.

For example, the EEC sends an EAS discovery request message to the EES, and the EAS discovery request message carries the first information.

The ACR capability information supported by the AC and/or the third ACR method request information are/is obtained from the AC in step 1272.

Step 1272: The EEC receives third information from the AC.

The third information includes the ACR capability information supported by the AC and/or the third ACR method request information.

For example, the AC sends the third information to the EEC through an EDGE-5 interface.

Step 1280: The EES sets the ACR mode information.

The EES sets an ACR trigger rule based on information reported by the AC, the EEC, the EES, and the EAS, that is, an event or an application type for allocating required detection to each functional entity (the AC, the EAS, the EES, and the EEC) and executing ACR for an ACR event (UE mobility and an overloaded EAS) or an application type; and/or
sets, based on a supported ACR method reported by the AC, a supported ACR method reported by the EAS, and a supported ACR method reported by the EEC, an ACR method corresponding to each AC.

For example, for an ACR event type reported by each entity, for example, for an AC #1, the AC supports detection of the UE mobility event, the EEC supports detection of the UE mobility event, the EES supports detection of the UE mobility event and the EAS overload event, and the EAS supports detection of a UE overload event. The EES may set the ACR method of the application corresponding to the AC to EES executed ACR, S-EES executed ACR. After each entity receives the ACR method of the application corresponding to the AC, the EES performs ACR detection and determining, and another entity executes a required step (a subsequent step is invoked and executed by a related entity) related to the ACR procedure, for example, the EES notifies the EAS to execute application context transmission.

For information, reported by each entity, about the application type or application-related information (for example, the AC ID), for example, for an AC ID #1, the AC supports an ACR method #1 and an ACR method #2, the EEC #1 supports the ACR method #2 and an ACR method #3, the EES supports the ACR method #1 and the ACR method #2, and the EAS supports the ACR method #2 and the ACR method #3. The EES may set the ACR method of the application corresponding to the AC ID #1 to the ACR method #2, and another entity executes a required step (a subsequent step is invoked and executed by a related entity) related to the ACR procedure.

If the ACR methods supported by the entities violate and conflict with each other, failure indication information may be returned when the ACR mode information is delivered, and a failure cause carried in the failure indication information is that the ACR methods supported by the entities violate and conflict with each other, or the failure indication information further includes information (for example, updated second information and updated fifth information) re-reported by each entity.

In the case 5 shown in FIG. 12A and FIG. 12B, after obtaining the ACR mode information, the EES may send the ACR mode information to the EAS and/or the EEC. The method procedure shown in FIG. 12A and FIG. 12B further includes the following steps:
Step 1281: The EES sends the ACR mode information to the EAS.

For details, refer to step 1211. Details are not described again.

Step 1282: The EES sends the ACR mode information to the EEC.

For details, refer to step 1130 shown in FIG. 11(a) and FIG. 11(b). Details are not described again.

In the case 1 to the case 5 shown in FIG. 12A and FIG. 12B, after obtaining the ACR mode information, the EEC may send the ACR mode information to an AC. The method procedure shown in FIG. 12A and FIG. 12B further includes the following step:
Step 1283: The EEC sends the ACR mode information to the AC.

For details, refer to step 1021 shown in FIG. 10. Details are not described again.

It can be learned from the foregoing that the condition information included in the ACR mode information may indicate a fourth condition. When the fourth condition is met, the EES executes an ACR procedure for a fourth application in at least one application. The method procedure shown in FIG. 12A and FIG. 12B may further include the following step:
Step 1290: The EES executes the ACR procedure for the fourth application in the at least one application.

For example, when the EES determines that the fourth condition is met (for example, when the ACR mode information indicates that the ACR trigger event is the UE mobility, the functional entity that executes ACR is the EES; or for another example, when the ACR mode information indicates that the identifier of the application is the AC ID #4, the method for executing ACR is EEC executed ACR via S-EES), the EES executes the ACR procedure for the fourth application in the at least one application (for example, the ACR procedure of the fourth application is an ACR procedure when the ACR trigger event is the UE mobility).

Specifically, that the EES determines whether the fourth condition is met may be that the EES monitors an application type of an application whose context needs to be relocated, a type of an event that triggers context relocation, or an identifier of an application whose context needs to be relocated.

For example, the EES executes the ACR procedure according to the selected ACR method.

For example, the EES executes the ACR procedure according to the ACR method corresponding to the AC ID, and/or executes the ACR method corresponding to the AC ID, and further executes related steps in the ACR method.

FIG. 13 is a schematic flowchart of another context relocation method according to this application.

Specifically, it can be learned from FIG. 13 that that an EAS obtains ACR mode information includes the following cases:
Case 1: The EAS receives the ACR mode information from an EES. The case 1 includes the following step:
Step 1310: The EAS receives the ACR mode information from the EES.

For details, refer to step 1211. Details are not described again.

Case 2: The EAS obtains the ACR mode information from an EAS profile (EAS profile) in the EAS. In other words, the EAS determines the ACR mode information from the EAS profile.

For example, the ACR mode information is preconfigured in the EAS profile.

In a possible implementation, the ACR mode information preconfigured in the EAS profile is set by the EAS based on information reported by each entity. Specifically, the case 2 includes the following steps:
Step S1321: The EAS receives third information from an AC.

The third information includes ACR capability information supported by the AC and/or third ACR method request information.

The ACR capability information supported by the AC indicates an ACR trigger event or an application type corresponding to an ACR procedure that can be executed (or detected) by the AC, an ACR event that can be detected by the AC, an application, that can be detected by the AC, on which ACR is executed, a preferred ACR method or an ACR method supported by the AC, or a priority of an ACR method corresponding to each AC ID.

The third ACR method request information (which is referred to as a request ACR method or a request ACR scenario) is used to request allocation of the ACR method, and may be used to request to allocate an ACR method or a proposed ACR method to the AC for each AC, or the AC carries AC-related information (for example, an AC ID) in the ACR method request information, to request to allocate an ACR method or a proposed ACR method based on a required AC.

A specific procedure of sending the third information in this embodiment includes:
The AC sends the third information to the EEC (for example, through an EDGE-5 interface); the EEC sends the third information to the EES (for example, by using a procedure, for example, EAS discovery EEC registration and EAS discovery subscription, related to an EDGE-1); and the EES sends the third information to the EAS (for example, an EAS registration (update) response message, an EAS registration response message, an EAS registration update response message, a UE location response message, a UE location notification message, an ACR management response message, an ACR management notification message, an AC information subscription response message, an AC information notification message, a UE identification API response message, a UE identification API notification message, a QoS session creation response message, a QoS session creation notification message, an ACR management event response message, and a response message, for example, a notification message, corresponding to a subscription related to an EDGE-3).

Step S 1322: The EAS receives first information from the EEC.

The first information includes at least one of the ACR capability information supported by the AC, ACR capability information supported by the EEC, first ACR method request information, or the third ACR method request information.

The ACR capability information supported by the EEC indicates an ACR trigger event or an application type corresponding to an ACR procedure that can be executed (or detected) by the EEC, an ACR event that can be detected by the EEC, an application, that can be detected by the EEC, on which ACR is executed, a preferred ACR method or an ACR method supported by the EEC, or a priority of an ACR method corresponding to each AC ID.

The first ACR method request information (which is referred to as a request ACR method or a request ACR scenario) is used to request allocation of the ACR method, and may be used to request to allocate an ACR method or a proposed ACR method to the EEC for each AC, or the AC carries AC-related information (for example, an AC ID) in the ACR method request information, to request to allocate an ACR method or a proposed ACR method to the EEC based on a required AC.

When the first information includes the ACR capability information supported by the AC and/or the third ACR method request information, the AC sends an AC profile to the EEC through the EDGE-5 interface. The AC profile includes the ACR capability information supported by the AC and/or the third ACR method request information.

A specific procedure of sending the first information in this embodiment includes:
The EEC sends the first information to the EES (for example, by using a procedure, for example, EAS discovery EEC registration and EAS discovery subscription, related to an EDGE-1); and the EES sends the first information to the EAS (for example, by using an EAS registration (update) response message, an EAS registration response message, an EAS registration update response message, a UE location response message, a UE location notification message, an ACR management response message, an ACR management notification message, an AC information subscription response message, an AC information notification message, a UE identification API response message, a UE identification API notification message, a QoS session creation response message, a QoS session creation notification message, an ACR management event response message, and a response message, for example, a notification message, corresponding to a subscription related to an EDGE-3).

Step S1323: The EAS receives fifth information from the EES.

The fifth information includes at least one of ACR capability information supported by the EES, ACR capability information supported by the EAS, fourth ACR method request information, or second ACR method request information.

The ACR capability information supported by the EAS indicates an ACR trigger event or an application type corresponding to an ACR procedure that can be executed (or detected) by the EAS, an ACR event that can be detected by the EAS, an application, that can be detected by the EAS, on which ACR is executed, a preferred ACR method or an ACR method supported by the EAS, or a priority of an ACR method corresponding to each AC ID.

The second ACR method request information (which is referred to as a request ACR method or a request ACR scenario) is used to request allocation of the ACR method. The EES may be requested to allocate an ACR method or a proposed ACR method to the EAS for each AC, or the EAS carries AC-related information (for example, an AC ID) in the ACR method request information, to request the EES to allocate an ACR method or a proposed ACR method to the EAS based on a required AC.

When the fifth information includes the ACR capability information supported by the EAS and/or the second ACR method request information, the EAS sends a message (for example, by using an EAS registration response message, an EAS registration update response message, a UE location response message, a UE location notification message, an ACR management response message, an ACR management notification message, an AC information subscription response message, an AC information notification message, a UE identification API response message, a UE identification API notification message, a QoS session creation response message, a QoS session creation notification message, an ACR management event response message, a response message, for example, a notification message, corresponding to a subscription related to an EDGE-3, and an ACR management event notification message) to the EES. The message includes the ACR capability information supported by the EAS and/or the second ACR method request information.

A specific procedure of sending the fifth information in this embodiment includes:
The EES sends the fifth information to the EAS (for example, by using an EAS registration (update) response message, an EAS registration response message, an EAS registration update response message, a UE location response message, a UE location notification message, an ACR management response message, an ACR management notification message, an AC information subscription response message, an AC information notification message, a UE identification API response message, a UE identification API notification message, a QoS session creation response message, a QoS session creation notification message, an ACR management event response message, and a response message, for example, a notification message, corresponding to a subscription related to an EDGE-3).

In the case 2, that the EAS obtains the ACR mode information includes step S1320 shown in FIG. 13. The EAS obtains the ACR mode information from the EAS profile in the EAS.

It may be understood that the ACR mode information is predefined in the EAS profile. In the case 2, information elements that may be included in the EAS profile are shown in Table 14.

**Table 14**

| Information element | Status | Description |
|---|---|---|
| EAS ID | Mandatory | Identifier of an EAS |
| EAS endpoint (EAS Endpoint) information | Mandatory | Information (for example, a URI, an FQDN, and an IP address) about an endpoint used to communicate with an EAS, where the information may be discovered by an EEC and exposed to an AC, so that the AC can establish a connection to the EAS |
| ACID(s) | Optional | Identifies an AC that can be served by the EAS |
| EAS provider identifier (EAS Provider Identifier) | Optional | Identifier of an EAS provider |
| EAS type (EAS Type) | Optional | Category or type (for example, V2X) of the EAS |
| EAS description (EAS description) | Optional | Human-readable description of the EAS |
| EAS schedule (EAS Schedule) | Optional | Availability schedule of the EAS (for example, a time window) |
| EAS geographical service area (EAS Geographical Service Area) | Optional | Geographical service area served by the EAS, where an AC in UE located outside the area should not be served |
| EAS topological service area (EAS Topological Service Area) | Optional | Topological service area served by the EAS, where an AC in UE located outside the area should not be served |
| EAS service KPI (EAS Service KPI) | Optional | Feature of a service provided by the EAS |
| EAS service permission level (EAS service permission level) | Optional | Service permission level |
| EAS function (EAS Feature(s)) | Optional | Service function, for example, single-player and multi-player game services supported by the EAS |
| Service continuity support (Service continuity support) | Optional | Indicates whether the EAS supports service continuity, where the IE may also indicate whether the EAS supports application context transmission |
| EAS DNAI list (List of EAS DNAI(s)) | Optional | DNAI(s) related to the EAS, where the EAS DNAI list is a subset of DNAIs associated with an EDN in which the EAS is located |
| List of N6 traffic routing requirements (List of N6 Traffic Routing requirements) | Optional | N6 traffic routing information and/or routing profile ID corresponding to each EAS DNAI |
| EAS availability reporting period (EAS Availability Reporting Period) | Optional | Availability reporting period (namely, a heartbeat period) indicating to the EES that a frequency of EAS availability needs to be checked after registration succeeds |
| EAS required service API (EAS Required Service API) | Optional | List of service APIs required by the EAS |
| EAS status (EAS Status) | Optional | Status (for example, enabled and disabled) of the EAS |
| ACR mode information | Optional | Correspondence between condition information for triggering an ACR procedure and a functional entity (an AC, an EAS, an EES, or an EEC) that executes the ACR procedure, or correspondence between the identifier of the application client and an ACR method of an application corresponding to the identifier of the application client |

In the case 2 shown in FIG. 13, after obtaining the ACR mode information, the EAS may send the ACR mode information to the EES. The method procedure shown in FIG. 13 further includes the following step:
Step 1330: The EAS sends the ACR mode information to the EES.

For details, refer to step 1260 shown in FIG. 12A and FIG. 12B. Details are not described again.

After obtaining the ACR mode information, the EES may send ACR rule information to the EEC. The method procedure shown in FIG. 13 further includes the following steps:
Step 1340: The EES sends the ACR mode information to the EEC.

For details, refer to step 1130 shown in FIG. 11(a) and FIG. 11(b). Details are not described again.

Step 1350: The EEC sends the ACR mode information to the AC.

For details, refer to step 1021 shown in FIG. 10. Details are not described again.

It can be learned from the foregoing that the condition information included in the ACR mode information may indicate a third condition. When the third condition is met, the EAS executes an ACR procedure for a third application in at least one application. The method procedure shown in FIG. 13 may further include the following step:
Step 1360: The EAS executes the ACR procedure for the third application in the at least one application.

Specifically, that the EAS determines whether the fourth condition is met may be that the EAS monitors an application type of an application whose context needs to be relocated, a type of an event that triggers context relocation, or an identifier of an application whose context needs to be relocated.

For example, the EAS executes the ACR procedure of the third application according to an ACR method corresponding to an identifier (AC ID) of the third application, and/or executes the ACR method corresponding to the third application, and further executes related steps in the ACR method.

This application further considers a case in which an ACR method of an AC does not match. For example, negotiation of the ACR method in the embodiments shown in FIG. 11(a) and FIG. 11(b) to FIG. 13 is not performed, or negotiation of the ACR method is performed, but an error occurs in the negotiation. A context relocation method is further provided in this application, and specifically includes the following steps:
Step 1: An EEC initiates an ACR procedure. That an EEC initiates an ACR procedure specifically corresponds to initiation by EEC using regular EAS discovery (Initiation by EEC using regular EAS Discovery) (the manner shown in FIG. 2), EEC executed ACR via S-EES (EEC executed ACR via S-EES) (the manner shown in FIG. 5), and EEC executed ACR via T-EES (EEC executed ACR via T-EES) (the manner shown in FIG. 6).
Step 2: The EEC sends a first message to the EES. The first message includes an AC ID and/or an EEC ID.

Optionally, the first message is an ACR request message.

For example, in three ACR scenarios initiated by the EEC, after a T-EAS discovery procedure and before application context transmission, the EEC sends the ACR request message to the EES, where the ACR request message carries the AC ID and/or the EEC ID.

It should be understood that, in step 1, the EEC initiates ACR, namely, ACR of the AC, corresponding to the AC ID and/or the EEC ID.

After the EEC receives the first message, steps that need to be performed include the following two cases:
Case 1: Perform step 3 and step 4.

Step 3: The EES receives the first message, and determines whether the ACR procedure is initiated at the EES side.

Specifically, in response to receiving the first message, the EES determines whether the ACR procedure corresponding to the AC ID and/or the EEC ID is initiated at the EES side.

Step 4: The EES sends a second message to the EEC.

The second message includes indication information, and the indication information indicates success or failure.

Optionally, the second message is an ACR response message.

In a possible implementation, if the EES determines that the EES does not initiate application context relocation for the AC, the EES returns the ACR response message to the EEC, where the ACR response message carries success indication information.

In another possible implementation, if the EES determines that the EES has initiated application context relocation for the AC, the EES returns the ACR response message to the EEC. The ACR response message indicates that ACR fails. For example, the ACR response message carries indication information indicating that ACR fails and/or a failure cause.

The failure cause specifically indicates that an ACR method does not match (which is also referred to as inconsistency, conflict, and the like), an ACR method at the EEC side does not match an ACR method at the EES side, or an ACR method is S-EES executed ACR (S-EES executed ACR). The ACR response message may further carry an AC ID. In this case, the ACR response message may further specifically indicate that the ACR method of the AC does not match (which is also referred to as inconsistency, conflict, and the like), the ACR method, at the EEC side, of the AC does not match the ACR method at the EES side, the ACR method determined at the EES side for the AC is S-EES executed ACR (S-EES executed ACR), or the like.

Case 2: Perform step 5 and step 6.

Step 5: The EES receives the first message, and determines whether the ACR procedure is initiated at the EAS side.

Specifically, in response to receiving the first message, the EES determines whether the ACR procedure corresponding to the AC ID and/or the EEC ID is initiated at the EAS side.

Step 6: The EES sends a second message to the EEC.

The second message includes indication information, and the indication information indicates success or failure.

Optionally, the second message is an ACR response message.

In a possible implementation, if the EES determines that the EAS does not initiate application context relocation for the AC, the EES returns the ACR response message to the EEC, where the ACR response message carries success indication information.

In another possible implementation, if the EES determines that the EAS has initiated application context relocation for the AC, the EES returns the ACR response message to the EEC. The ACR response message indicates that ACR fails. For example, the ACR response message carries indication information indicating that ACR fails and/or a failure cause.

The failure cause specifically indicates that an ACR method does not match (which is also referred to as inconsistency, conflict, and the like), an ACR method at the EEC side does not match an ACR method at the EES side, or an ACR method is an ACR method of an S-EAS decided ACR scenario (S-EAS decided ACR scenario).

The ACR response message may further carry the AC ID. In this case, the ACR response message may further specifically indicate that the ACR method of the AC does not match (which is also referred to as inconsistency, conflict, and the like), the ACR method, at the EEC side, of the AC does not match the ACR method at the EAS side, the ACR method determined at the EES side for the AC is the ACR method of an S-EAS decided ACR scenario (S-EAS decided ACR scenario), or the like.

In still another possible implementation, the EES may indicate that ACR fails in an ACR information subscription response or an ACR information notification message. For example, the ACR information subscription response or the ACR information notification message carries the indication information indicating that ACR fails and/or the failure cause.

The failure cause specifically indicates that an ACR method does not match (which is also referred to as inconsistency, conflict, and the like), an ACR method at the EEC side does not match an ACR method at the EES side, or an ACR method is an ACR method of an S-EAS decided ACR scenario (S-EAS decided ACR scenario).

The ACR information subscription response or the ACR information notification message may further carry the AC ID. In this case, the ACR information subscription response or the ACR information notification message may further specifically indicate that the ACR method of the AC does not match (which is also referred to as inconsistency, conflict, and the like), the ACR method, at the EEC side, of the AC does not match the ACR method at the EAS side, the ACR method determined at the EES side for the AC is the ACR method of an S-EAS decided ACR scenario (S-EAS decided ACR scenario), or the like.

In the method embodiments, the sequence numbers of the foregoing processes do not mean execution sequences. The execution sequences of the processes should be determined based on functions and internal logic of the processes, and should not be construed as any limitation on the implementation processes of embodiments of this application. In addition, not all operations in the method embodiments need to be performed.

It should be understood that each functional entity in the method embodiments may perform a part or all of the steps in the embodiments. These steps or operations are merely examples. Embodiments of this application may further include performing other operations or variations of various operations.

It may be understood that in the method embodiments, the method implemented by the AC, the EEC, the EAS, the EES, or the ECS may also be implemented by a component (for example, a chip or a circuit) that can be used for the AC, the EEC, the EAS, the EES, or the ECS.

It should further be understood that, in embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

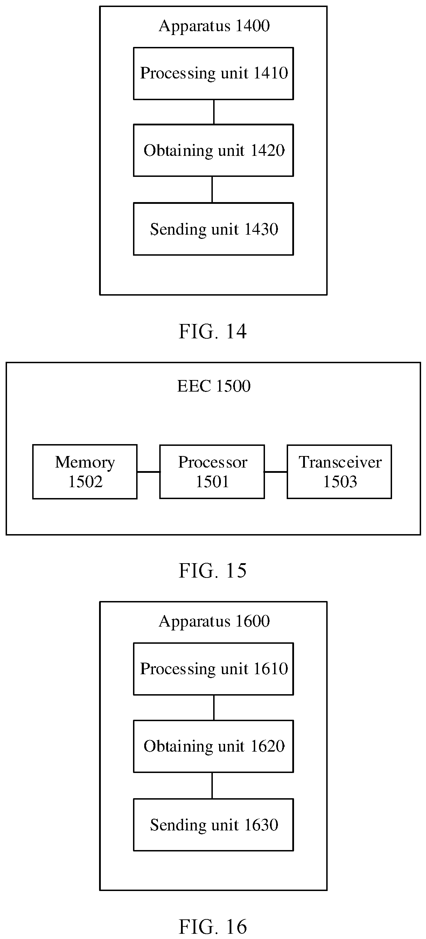

The foregoing describes in detail the context relocation method provided in embodiments of this application with reference to FIG. 10 to FIG. 13. The following describes in detail a context relocation apparatus provided in embodiments of this application with reference to FIG. 14 to FIG. 23.

FIG. 14 is a schematic diagram of a context relocation apparatus 1400 according to this application. As shown in FIG. 14, the apparatus 1400 includes a processing unit 1410, an obtaining unit 1420, and a sending unit 1430.

The obtaining unit 1420 is configured to obtain application context relocation ACR mode information.

The processing unit 1410 is configured to determine, based on the ACR mode information, an ACR method selected by at least one application.

For example, that the obtaining unit 1420 obtains the ACR mode information includes:

The obtaining unit 1420 receives the ACR mode information from an application client AC; or
receives the ACR mode information from an edge enabler server EES and/or an edge configuration server ECS.

For example, when the obtaining unit 1420 receives the ACR mode information from the AC, the apparatus 1400 further includes:
a sending unit 1430, configured to send the ACR mode information to the edge enabler server EES.

When the obtaining unit 1420 receives the ACR mode information from the EES and/or the ECS, the apparatus 1400 further includes:
a sending unit 1430, configured to send the ACR mode information to the AC.

The apparatus 1400 corresponds to the EEC in the method embodiments. The apparatus 1400 may be the EEC in the method embodiments, or a chip or a functional module inside the EEC in the method embodiments. Corresponding units of the apparatus 1400 are configured to perform corresponding steps performed by the EEC in the method embodiment shown in FIG. 10 to FIG. 13.

The processing unit 1410 in the apparatus 1400 is configured to perform processing-related steps corresponding to the EEC in the method embodiments. The obtaining unit 1420 in the apparatus 1400 performs steps of obtaining performed by the EEC in the method embodiments. The sending unit 1430 in the apparatus 1400 is configured to perform steps of sending performed by the EEC.

The obtaining unit 1420 and the sending unit may form a transceiver unit that has both obtaining and sending functions. The processing unit 1410 may be at least one processor. The sending unit 1430 may be a transmitter or an interface circuit, and the obtaining unit 1420 may be a receiver or an interface circuit. The receiver and the transmitter may be integrated together to form a transceiver or an interface circuit.

Optionally, the apparatus 1400 may further include a storage unit. The storage unit is configured to store data and/or signaling. The processing unit 1410, the obtaining unit 1420, and the sending unit 1430 may interact with or may be coupled to the storage unit, for example, reading or invoking the data and/or the signaling in the storage unit, to perform the method in the foregoing embodiments.

The foregoing units may exist independently, or may be all or partially integrated.

FIG. 15 is a schematic diagram of a structure of an EEC 1500 applicable to an embodiment of this application. The EEC 1500 may be configured to implement functions of the foregoing EEC.

The EEC 1500 includes a processor 1501, a memory 1502, and a transceiver 1503. The memory 1502 stores instructions or a program, and the processor 1502 and the transceiver 1503 are configured to execute or invoke the instructions or the program stored in the memory 1502, to enable the EEC 1500 to implement the functions of the EEC in the context relocation method. When the instructions or the program stored in the memory 1502 are/is executed, the transceiver 1503 is configured to perform operations performed by the sending unit 1430 and the obtaining unit 1420 in the embodiment shown in FIG. 14, and the processor 1502 is configured to perform an operation performed by the processing unit 1410 in the embodiment shown in FIG. 14.

A person skilled in the art may understand that, for ease of description, FIG. 15 shows only one memory and one processor. There may be a plurality of processors and a plurality of memories in actual user equipment. The memory may also be referred to as a storage medium, a storage device, or the like. This is not limited in embodiments of this application.

FIG. 16 is a schematic diagram of a context relocation apparatus 1600 according to this application. As shown in FIG. 16, the apparatus 1600 includes a processing unit 1610, an obtaining unit 1620, and a sending unit 1630.

The obtaining unit 1620 is configured to obtain application context relocation ACR mode information, where the ACR mode information is used to determine an ACR method selected by at least one application.

The sending unit 1630 is configured to send the ACR mode information to an edge application server EAS.

The ACR mode information includes ACR rule information, and the ACR rule information includes condition information for triggering an ACR procedure of at least one application.

The processing unit 1610 is configured to: when a fourth condition indicated by the condition information is met, execute an ACR procedure for a fourth application in the at least one application.

For example, that the obtaining unit 1620 obtains the ACR mode information includes:

The obtaining unit 1620 obtains the ACR mode information based on at least one of the following information:
ACR capability information supported by the edge application server EAS, ACR capability information supported by an EEC, ACR capability information supported by an application client AC, and ACR capability information supported by the apparatus;
the obtaining unit 1620 obtains the ACR mode information from a profile of the apparatus 1600, where the profile of the apparatus 1600 includes the ACR mode information;
the obtaining unit 1620 receives the ACR mode information from an ECS; or
the obtaining unit 1620 receives the ACR mode information from the edge application server EAS and/or an EEC.

For example, the apparatus further includes:
a sending unit 1630, configured to send the ACR mode information to the EAS and/or the EEC.

The apparatus 1600 corresponds to the EES in the method embodiments. The apparatus 1600 may be the EES in the method embodiments, or a chip or a functional module inside the EES in the method embodiments. Corresponding units of the apparatus 1600 are configured to perform corresponding steps performed by the EES in the method embodiment shown in FIG. 10 to FIG. 13.

The processing unit 1610 in the apparatus 1600 is configured to perform processing-related steps corresponding to the EES in the method embodiments. The obtaining unit 1620 in the apparatus 1600 performs steps of obtaining performed by the EES in the method embodiments. The sending unit 1630 in the apparatus 1600 is configured to perform steps of sending performed by the EES.

The obtaining unit 1620 and the sending unit may form a transceiver unit that has both obtaining and sending functions. The processing unit 1610 may be at least one processor. The sending unit 1630 may be a transmitter or an interface circuit, and the obtaining unit 1620 may be a receiver or an interface circuit. The receiver and the transmitter may be integrated together to form a transceiver or an interface circuit.

Optionally, the apparatus 1600 may further include a storage unit. The storage unit is configured to store data and/or signaling. The processing unit 1610, the obtaining unit 1620, and the sending unit 1630 may interact with or may be coupled to the storage unit, for example, reading or invoking the data and/or the signaling in the storage unit, to perform the method in the foregoing embodiments.

The foregoing units may exist independently, or may be all or partially integrated.

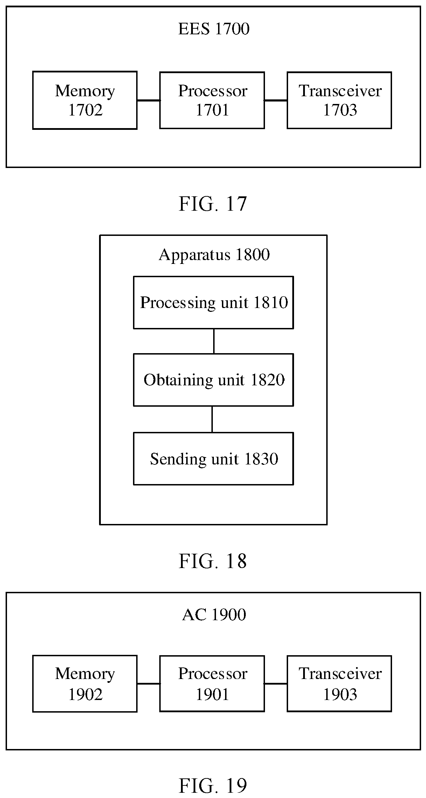

FIG. 17 is a schematic diagram of a structure of an EES 1700 applicable to an embodiment of this application. The EES 1700 may be configured to implement functions of the foregoing EES.

The EES 1700 includes a processor 1701, a memory 1702, and a transceiver 1703. The memory 1702 stores instructions or a program, and the processor 1702 and the transceiver 1703 are configured to execute or invoke the instructions or the program stored in the memory 1702, to enable the EES 1700 to implement the functions of the EES in the context relocation method. When the instructions or the program stored in the memory 1702 are/is executed, the transceiver 1703 is configured to perform operations performed by the sending unit 1630 and the obtaining unit 1620 in the embodiment shown in FIG. 16, and the processor 1702 is configured to perform an operation performed by the processing unit 1610 in the embodiment shown in FIG. 16.

A person skilled in the art may understand that, for ease of description, FIG. 17 shows only one memory and one processor. There may be a plurality of processors and a plurality of memories in actual user equipment. The memory may also be referred to as a storage medium, a storage device, or the like. This is not limited in embodiments of this application.

FIG. 18 is a schematic diagram of a context relocation apparatus 1800 according to this application. As shown in FIG. 18, the apparatus 1800 includes a processing unit 1810, an obtaining unit 1820, and a sending unit 1830.

The obtaining unit 1820 is configured to obtain application context relocation ACR mode information, where the ACR mode information includes condition information for triggering an ACR procedure of at least one application.

The processing unit 1810 is configured to: when a second condition indicated by the condition information is met, execute an ACR procedure for a second application in the at least one application.

For example, that the obtaining unit 1820 obtains the ACR mode information includes:
The obtaining unit 1820 obtains the ACR mode information from a profile of the apparatus 1800, where the profile of the apparatus 1800 includes the ACR mode information; or
the obtaining unit 1820 receives the ACR mode information from an edge enabler client EEC.

For example, when the obtaining unit obtains the ACR mode information from the profile of the apparatus 1800, the apparatus further includes:
a sending unit 1830, configured to send the ACR mode information to the EEC.

The apparatus 1800 corresponds to the AC in the method embodiments. The apparatus 1800 may be the AC in the method embodiments, or a chip or a functional module inside the AC in the method embodiments. Corresponding units of the apparatus 1800 are configured to perform corresponding steps performed by the AC in the method embodiment shown in FIG. 10 to FIG. 13.

The processing unit 1810 in the apparatus 1800 is configured to perform processing-related steps corresponding to the AC in the method embodiments. The obtaining unit 1820 in the apparatus 1800 performs steps of obtaining performed by the AC in the method embodiments. The sending unit 1830 in the apparatus 1800 is configured to perform steps of sending performed by the AC.

The obtaining unit 1820 and the sending unit may form a transceiver unit that has both obtaining and sending functions. The processing unit 1810 may be at least one processor. The sending unit 1830 may be a transmitter or an interface circuit, and the obtaining unit 1820 may be a receiver or an interface circuit. The receiver and the transmitter may be integrated together to form a transceiver or an interface circuit.

Optionally, the apparatus 1800 may further include a storage unit. The storage unit is configured to store data and/or signaling. The processing unit 1810, the obtaining unit 1820, and the sending unit 1830 may interact with or may be coupled to the storage unit, for example, reading or invoking the data and/or the signaling in the storage unit, to perform the method in the foregoing embodiments.

The foregoing units may exist independently, or may be all or partially integrated.

FIG. 19 is a schematic diagram of a structure of an AC 1900 applicable to an embodiment of this application. The AC 1900 may be configured to implement functions of the foregoing AC.

The AC 1900 includes a processor 1901, a memory 1902, and a transceiver 1903. The memory 1902 stores instructions or a program, and the processor 1902 and the transceiver 1903 are configured to execute or invoke the instructions or the program stored in the memory 1902, to enable the AC 1900 to implement the functions of the AC in the context relocation method. When the instructions or the program stored in the memory 1902 are/is executed, the transceiver 1903 is configured to perform operations performed by the sending unit 1830 and the obtaining unit 1820 in the embodiment shown in FIG. 18, and the processor 1902 is configured to perform an operation performed by the processing unit 1810 in the embodiment shown in FIG. 18.

A person skilled in the art may understand that, for ease of description, FIG. 19 shows only one memory and one processor. There may be a plurality of processors and a plurality of memories in actual user equipment. The memory may also be referred to as a storage medium, a storage device, or the like. This is not limited in embodiments of this application.

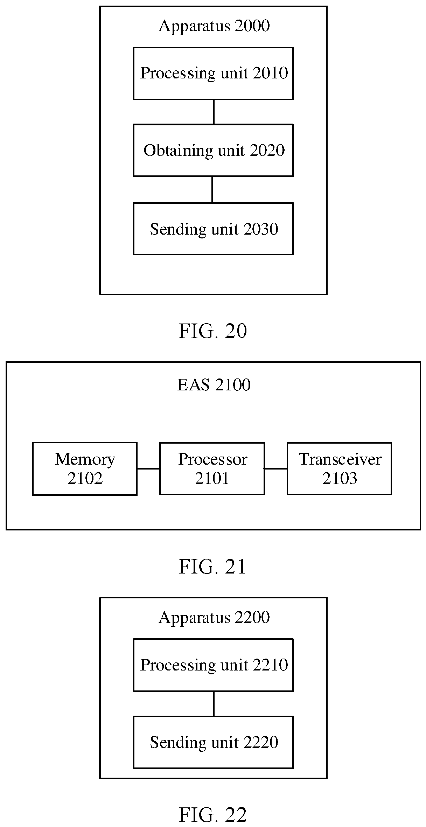

FIG. 20 is a schematic diagram of a context relocation apparatus 2000 according to this application. As shown in FIG. 20, the apparatus 2000 includes a processing unit 2010, an obtaining unit 2020, and a sending unit 2030.

The obtaining unit 2020 obtains application context relocation ACR mode information, where the ACR mode information includes condition information for triggering an ACR procedure of at least one application.

The processing unit 2010 is configured to: when a third condition indicated by the condition information is met, execute an ACR procedure for a third application in the at least one application.

For example, that the obtaining unit 2020 obtains the ACR rule information includes:
The obtaining unit 2020 obtains the ACR mode information from a profile of the apparatus 2000, where the profile of the apparatus 2000 includes the ACR mode information; or
the obtaining unit 2020 receives the ACR mode information from an edge enabler server EES.

For example, when the obtaining unit 2020 obtains the ACR mode information from the profile of the apparatus 2000, the apparatus further includes:
a sending unit 2030, configured to send the ACR mode information to the EES.

The apparatus 2000 corresponds to the EAS in the method embodiments. The apparatus 2000 may be the EAS in the method embodiments, or a chip or a functional module inside the EAS in the method embodiments. Corresponding units of the apparatus 2000 are configured to perform corresponding steps performed by the EAS in the method embodiment shown in FIG. 10 to FIG. 13.

The processing unit 2010 in the apparatus 2000 is configured to perform processing-related steps corresponding to the EAS in the method embodiments. The obtaining unit 2020 in the apparatus 2000 performs steps of obtaining performed by the EAS in the method embodiments. The sending unit 2030 in the apparatus 2000 is configured to perform steps of sending performed by the EAS.

The obtaining unit 2020 and the sending unit may form a transceiver unit that has both obtaining and sending functions. The processing unit 2010 may be at least one processor. The sending unit 2030 may be a transmitter or an interface circuit, and the obtaining unit 2020 may be a receiver or an interface circuit. The receiver and the transmitter may be integrated together to form a transceiver or an interface circuit.

Optionally, the apparatus 2000 may further include a storage unit. The storage unit is configured to store data and/or signaling. The processing unit 2010, the obtaining unit 2020, and the sending unit 2030 may interact with or may be coupled to the storage unit, for example, reading or invoking the data and/or the signaling in the storage unit, to perform the method in the foregoing embodiments.

The foregoing units may exist independently, or may be all or partially integrated.

FIG. 21 is a schematic diagram of a structure of an EAS 2100 applicable to an embodiment of this application. The EAS 2100 may be configured to implement functions of the foregoing EAS.

The EAS 2100 includes a processor 2101, a memory 2102, and a transceiver 2103. The memory 2102 stores instructions or a program, and the processor 2102 and the transceiver 2103 are configured to execute or invoke the instructions or the program stored in the memory 2102, to enable the EAS 2100 to implement the functions of the EAS in the context relocation method. When the instructions or the program stored in the memory 2102 are/is executed, the transceiver 2103 is configured to perform operations performed by the sending unit 2030 and the obtaining unit 2020 in the embodiment shown in FIG. 20, and the processor 2102 is configured to perform an operation performed by the processing unit 2010 in the embodiment shown in FIG. 20.

A person skilled in the art may understand that, for ease of description, FIG. 21 shows only one memory and one processor. There may be a plurality of processors and a plurality of memories in actual user equipment. The memory may also be referred to as a storage medium, a storage device, or the like. This is not limited in embodiments of this application.

FIG. 22 is a schematic diagram of a context relocation apparatus 2200 according to this application. As shown in FIG. 22, the apparatus 2200 includes a processing unit 2210 and a sending unit 2220.

The processing unit 2210 is configured to fo application context relocation ACR mode information, where the ACR mode information includes condition information for triggering an ACR procedure of at least one application.

The sending unit 2220 is configured to separately send the ACR mode information to an EEC and an EES.

The apparatus 2200 corresponds to the ECS in the method embodiments. The apparatus 2200 may be the ECS in the method embodiments, or a chip or a functional module inside the ECS in the method embodiments. Corresponding units of the apparatus 2200 are configured to perform corresponding steps performed by the ECS in the method embodiment shown in FIG. 10 to FIG. 13.

The processing unit 2210 in the apparatus 2200 is configured to perform processing-related steps corresponding to the ECS in the method embodiments. The sending unit 2220 in the apparatus 2200 is configured to perform steps of sending performed by the ECS.

Optionally, the apparatus 2200 may further include a storage unit. The storage unit is configured to store data and/or signaling. The processing unit 2210 and the sending unit 2220 may interact with or may be coupled to the storage unit, for example, reading or invoking the data and/or the signaling in the storage unit, to perform the method in the foregoing embodiments.

The foregoing units may exist independently, or may be all or partially integrated.

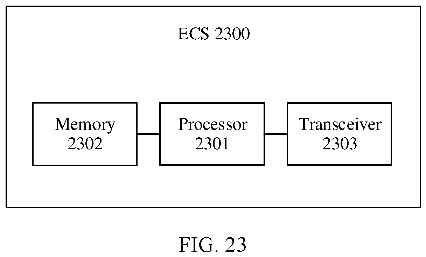

FIG. 23 is a schematic diagram of a structure of an ECS 2300 applicable to an embodiment of this application. The ECS 2300 may be configured to implement functions of the foregoing ECS.

The ECS 2300 includes a processor 2301, a memory 2302, and a transceiver 2303. The memory 2302 stores instructions or a program, and the processor 2302 and the transceiver 2303 are configured to execute or invoke the instructions or the program stored in the memory 2302, to enable the ECS 2300 to implement the functions of the ECS in the context relocation method. When the instructions or the program stored in the memory 2302 are/is executed, the transceiver 2303 is configured to perform an operation performed by the sending unit 2220 in the embodiment shown in FIG. 22, and the processor 2302 is configured to perform an operation performed by the processing unit 2210 in the embodiment shown in FIG. 22.

A person skilled in the art may understand that, for ease of description, FIG. 23 shows only one memory and one processor. There may be a plurality of processors and a plurality of memories in actual user equipment. The memory may also be referred to as a storage medium, a storage device, or the like. This is not limited in embodiments of this application.

An embodiment of this application further provides a communication system. The communication system includes the EEC, the EES, the AC, the EAS, and the ECS.

An embodiment of this application further provides user equipment. The user equipment includes the EEC and the AC.

This application further provides a computer-readable storage medium. The computer-readable storage medium stores instructions. When the instructions are run on a computer, the computer is enabled to perform steps performed by the EEC, the EES, the AC, the EAS, or the ECS in the methods shown in FIG. 10 to FIG. 13.

This application further provides a computer program product including instructions. When the computer program product runs on a computer, the computer is enabled to perform steps performed by the EEC, the EES, the AC, the EAS, or the ECS in the methods shown in FIG. 10 to FIG. 13.

This application further provides a chip including a processor. The processor is configured to read and run a computer program stored in a memory, to perform corresponding operations and/or procedures performed by the EEC, the EES, the AC, the EAS, or the ECS in the methods shown in FIG. 10 to FIG. 13 in the context relocation method provided in this application. In a possible implementation, the chip further includes the memory. The memory is connected to the processor by using a circuit or a wire. The processor is configured to read and execute the computer program stored in the memory. Further, in a possible implementation, the chip system further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be a processing circuit or a logic circuit.

The foregoing chip may alternatively be replaced with a chip system, and details are not described herein again.

In this application, the terms "include", "contain", and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in another manner. For example, the apparatus embodiment described above is merely an example. For example, division into units is merely logical function division and may be another division manner during actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A context relocation method, comprising:
obtaining application context relocation ACR mode information; and
determining, based on the ACR mode information, an ACR method selected by at least one application.

2. The method according to claim 1, wherein the ACR mode information comprises ACR rule information, and the ACR rule information comprises condition information for triggering an ACR procedure of at least one application;
when a first condition indicated by the condition information is met, an ACR procedure is executed for a first application in the at least one application; and
the condition information further indicates at least one of the following conditions:
a second condition, a third condition, and a fourth condition, wherein
when the second condition is met, an application client AC is indicated to execute an ACR procedure for a second application in the at least one application; when the third condition is met, an edge application server EAS is indicated to execute an ACR procedure for a third application in the at least one application; or when the fourth condition is met, an edge enabler server EES is indicated to execute an ACR procedure for a fourth application in the at least one application.

3. The method according to claim 2, wherein the ACR rule information comprises:
a correspondence between an application type and an apparatus for executing an ACR procedure of an application belonging to the application type, and/or a correspondence between information about an event that triggers an ACR procedure and an apparatus for executing the preset ACR procedure.

4. The method according to claim 1, wherein the ACR mode information indicates an identifier of an application client and an ACR method determined by a server for the application client; and
the server is one of an edge enabler client EEC, an edge configuration server ECS, an edge enabler server EES, or an edge application server EAS.

5. The method according to any one of claims 1 to 4, wherein the obtaining ACR mode information comprises:
receiving the ACR mode information from the application client AC; or
receiving the ACR mode information from the edge enabler server EES and/or the edge configuration server ECS.

6. The method according to claim 5, wherein after the receiving the ACR mode information from the AC, the method further comprises:
sending the ACR mode information to the edge enabler server EES.

7. The method according to claim 5, wherein after the receiving the ACR mode information from the EES and/or the ECS, the method further comprises:
sending the ACR mode information to the AC.

8. The method according to any one of claims 1 to 7, wherein before the obtaining ACR mode information, the method further comprises:
sending first information to the edge enabler server EES or the edge configuration server ECS, wherein the first information indicates at least one of the following:
ACR capability information supported by the application client AC, ACR capability information supported by the edge enabler client EEC, requesting to allocate an ACR method to the AC, and requesting to allocate an ACR method to the EEC.

9. A context relocation method, comprising:
obtaining, by an edge enabler server EES, application context relocation ACR mode information, wherein the ACR mode information is used to determine an ACR method selected by at least one application; and
sending, by the EES, the ACR mode information to an edge application server EAS.

10. The method according to claim 9, wherein the method further comprises:
sending, by the EES, the ACR mode information to an edge enabler client EEC.

11. The method according to claim 9 or 10, wherein the ACR mode information comprises ACR rule information, and the ACR rule information comprises condition information for triggering an ACR procedure of at least one application; and
when a fourth condition indicated by the condition information is met, the EES executes an ACR procedure for a fourth application in the at least one application.

12. The method according to claim 11, wherein the ACR rule information comprises:
a correspondence between an application type and an apparatus for executing an ACR procedure of an application belonging to the application type, and/or a correspondence between information about an event that triggers an ACR procedure and an apparatus for executing the preset ACR procedure.

13. The method according to claim 9 or 10, wherein the ACR mode information indicates an identifier of an application client and an ACR method determined by a server for the application client; and
the server is one of an edge enabler client EEC, an edge configuration server ECS, an edge enabler server EES, or an edge application server EAS.

14. The method according to any one of claims 9 to 13, wherein the obtaining, by an EES, ACR mode information comprises:
obtaining, by the EES, the ACR mode information based on at least one of the following information:
ACR capability information supported by the edge application server EAS, ACR capability information supported by the edge enabler client EEC, ACR capability information supported by the application client AC, or ACR capability information supported by the EES;
obtaining, by the EES, the ACR mode information from a profile of the EES, wherein the profile of the EES comprises the ACR mode information; or
receiving, by the EES, the ACR mode information from the ECS.

15. The method according to claim 14, wherein the method further comprises:
sending, by the EES, the ACR mode information to the EAS and/or the EEC.

16. The method according to claim 14, wherein the obtaining, by an EES, ACR mode information comprises:
receiving, by the EES, the ACR mode information from the edge application server EAS and/or the EEC.

17. A context relocation apparatus, comprising:
an obtaining unit, configured to obtain application context relocation ACR mode information; and
a processing unit, configured to determine, based on the ACR mode information, an ACR method selected by at least one application.

18. The apparatus according to claim 17, wherein the ACR mode information comprises ACR rule information, and the ACR rule information comprises condition information for triggering an ACR procedure of at least one application;
the processing unit is further configured to: when a first condition indicated by the condition information is met, execute an ACR procedure for a first application in the at least one application; and
the condition information further indicates at least one of the following conditions:
a second condition, a third condition, and a fourth condition, wherein
when the second condition is met, an AC is indicated to execute an ACR procedure for a second application in the at least one application; when the third condition is met, an edge application server EAS is indicated to execute an ACR procedure for a third application in the at least one application; or when the fourth condition is met, an edge enabler server EES is indicated to execute an ACR procedure for a fourth application in the at least one application.

19. The apparatus according to claim 18, wherein the ACR rule information comprises:
a correspondence between an application type and an apparatus for executing an ACR procedure of an application belonging to the application type, and/or a correspondence between information about an event that triggers an ACR procedure and an apparatus for executing the preset ACR procedure.

20. The apparatus according to claim 17, wherein the ACR mode information indicates an identifier of an application client and an ACR method determined by a server for the application client; and
the server is one of an edge enabler client EEC, an edge configuration server ECS, an edge enabler server EES, or an edge application server EAS.

21. The apparatus according to any one of claims 17 to 20, wherein that an obtaining unit obtains ACR mode information comprises:
receiving, by the obtaining unit, the ACR mode information from the application client AC; or
receiving, by the obtaining unit, the ACR mode information from the edge enabler server EES and/or the edge configuration server ECS.

22. The apparatus according to claim 21, wherein the obtaining unit receives the ACR mode information from the AC, and the apparatus further comprises:
a sending unit, configured to send the ACR mode information to the edge enabler server EES.

23. The apparatus according to claim 21, wherein the obtaining unit receives the ACR mode information from the EES and/or the ECS, and the apparatus further comprises:
a sending unit, configured to send the ACR mode information to the AC.

24. The apparatus according to any one of claims 17 to 23, wherein before the obtaining unit obtains the ACR mode information, the apparatus further comprises:
the sending unit, configured to send first information to the edge enabler server EES or the edge configuration server ECS, wherein the first information indicates at least one of the following:
ACR capability information supported by the application client AC, ACR capability information supported by the edge enabler client EEC, requesting to allocate an ACR method to the AC, and requesting to allocate an ACR method to the EEC.

25. A context relocation apparatus, comprising:
an obtaining unit, configured to obtain application context relocation ACR mode information, wherein the ACR mode information is used to determine an ACR method selected by at least one application; and
a sending unit, configured to send the ACR mode information to an edge application server EAS.

26. The apparatus according to claim 25, wherein the sending unit is further configured to send the ACR mode information to an edge enabler client EEC.

27. The apparatus according to claim 25 or 26, wherein the ACR mode information comprises ACR rule information, and the ACR rule information comprises condition information for triggering an ACR procedure of at least one application;
a processing unit is configured to: when a fourth condition indicated by the condition information is met, execute an ACR procedure for a fourth application in the at least one application; and
the condition information further indicates at least one of the following conditions:
a second condition, a third condition, and a first condition, wherein
when the second condition is met, an AC is indicated to execute an ACR procedure for a second application in the at least one application; when the third condition is met, the EAS is indicated to execute an ACR procedure for a third application in the at least one application; or when the first condition is met, the EEC is indicated to execute an ACR procedure for a first application in the at least one application.

28. The apparatus according to claim 27, wherein the ACR rule information comprises:
a correspondence between an application type and an apparatus for executing an ACR procedure of an application belonging to the application type, and/or a correspondence between information about an event that triggers an ACR procedure and an apparatus for executing the preset ACR procedure.

29. The apparatus according to claim 25 or 26, wherein the ACR rule information indicates an identifier of an application client and an ACR method determined by a server for the application client; and
the server is one of an edge enabler client EEC, an edge configuration server ECS, an edge enabler server EES, or an edge application server EAS.

30. The apparatus according to any one of claims 25 to 29, wherein that an obtaining unit obtains ACR mode information comprises:
obtaining, by the obtaining unit, the ACR mode information based on at least one of the following information:
ACR capability information supported by the edge application server EAS, ACR capability information supported by the edge enabler client EEC, ACR capability information supported by the application client AC, and ACR capability information supported by the apparatus;
obtaining, by the obtaining unit, the ACR mode information from a profile of the apparatus, wherein the profile of the apparatus comprises the ACR mode information; or
receiving, by the obtaining unit, the ACR mode information from the ECS.

31. The apparatus according to claim 30, wherein the apparatus further comprises:
the sending unit, configured to send the ACR mode information to the EAS and/or the EEC.

32. The apparatus according to claim 30, wherein that an obtaining unit obtains ACR mode information comprises:
receiving, by the obtaining unit, the ACR mode information from the edge application server EAS and/or the EEC.

33. A computer-readable storage medium, wherein the computer-readable storage medium stores a computer program, and when the computer program is run, an apparatus is enabled to perform the method according to any one of claims 1 to 8 or the method according to any one of claims 9 to 16.

34. A chip system, comprising a processor, configured to invoke a computer program from a memory and run the computer program, to enable a communication apparatus on which the chip system is installed to perform the method according to any one of claims 1 to 8 or the method according to any one of claims 9 to 16.

35. A communication apparatus, comprising:
a memory, configured to store a computer program; and
a processor, configured to execute a computer program stored in the memory, to enable the communication apparatus to perform the method according to any one of claims 1 to 8 or the method according to any one of claims 9 to 16.

36. A communication system, wherein the communication system comprises at least one context relocation apparatus according to any one of claims 17 to 24 and at least one context relocation apparatus according to any one of claims 25 to 32.
